(19)

**Europäisches Patentamt**
**European Patent Office**
**Office européen des brevets**

(11) **EP 4 548 993 A1**

(12) **EUROPEAN PATENT APPLICATION**

(43) Date of publication:
**07.05.2025 Bulletin 2025/19**

(21) Application number: **24210586.4**

(22) Date of filing: **04.11.2024**

(51) International Patent Classification (IPC):
**B01D 24/10** (2006.01)     **B01D 24/40** (2006.01)
**B01D 36/02** (2006.01)     **B01D 63/02** (2006.01)
**C02F 1/00** (2023.01)     **C02F 1/44** (2023.01)
**C02F 103/42** (2006.01)

(52) Cooperative Patent Classification (CPC):
**B01D 24/105; B01D 24/40; B01D 36/02;**
**B01D 61/149; B01D 61/58; B01D 65/02;**
**B01D 65/08; C02F 1/001; C02F 1/004; C02F 1/444;**
B01D 63/02; B01D 2313/18; B01D 2313/50;
B01D 2313/54; B01D 2321/04;     (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **02.11.2023   US 202363595700 P**

(71) Applicant: **Pentair Water Pool and Spa, Inc.**
**Cary, NC 27518 (US)**

(72) Inventors:
• **DZINDO, Azur**
  **Raleigh (US)**
• **SAFON, Thomas Johnson**
  **Holly Springs (US)**
• **RAY, Caleb**
  **Apex (US)**

• **ALHAJEH, Anas**
  **Clayton (US)**
• **SMITH, Alexander**
  **Fuquay-Varina (US)**
• **FORE, Donnie**
  **Sanford (US)**
• **PINNELL, Eric**
  **Holly Springs (US)**
• **KOCH, Kenneth**
  **Apex (US)**
• **ADAMS, Stephanie**
  **Holly Springs (US)**
• **MCEWAN, Sean**
  **Chapel Hill (US)**

(74) Representative: **Viering, Jentschura & Partner**
**mbB**
**Patent- und Rechtsanwälte**
**Am Brauhaus 8**
**01099 Dresden (DE)**

(54) **HYBRID FILTER AND CHEMICAL CLEANING ASSEMBLY**

(57)     A system for an aquatic application is provided in the form of a pump, a filtration system, a container, and a controller. The container is arranged to be in fluid communication with the filtration system and retains a chemical cleaning agent. The valve is positioned to be in fluid communication with the container and the filtration system. The controller is in communication with the valve. The controller is designed to determine a first permeability value associated with the filtration system at a first time period and initiates a cleaning procedure by providing the chemical cleaning agent to the filtration system when the first permeability value is below a permeability threshold value.

FIG. 3A

**(Cont. next page)**

EP 4 548 993 A1

(52) Cooperative Patent Classification (CPC): (Cont.)
B01D 2321/168; B01D 2321/40; B01D 2321/42;
C02F 2103/42; C02F 2209/005; C02F 2209/008;
C02F 2303/16

**Description**

CROSS-REFERENCE TO RELATED APPLICATIONS

This Application claims priority to U.S. Provisional Patent Application Serial No. 63/595,700, filed on November 2, 2023, entitled "HYBRID FILTER AND CHEMICAL CLEANING ASSEMBLY AND METHOD," currently pending, the entire disclosure of which is incorporated herein by reference.

TECHNICAL FIELD

This disclosure generally relates to filters. More particularly, the disclosure relates to a hybrid two-stage filter for an aquatic application.

BACKGROUND

Filtration systems are an important aspect of maintaining water clarity and quality in aquatic systems. Contaminants containing bacteria or pathogens may be introduced into bodies of water by environmental sources. Other contaminants or debris may be introduced by swimmers and bathers, such as sweat, bodily oils or secretions, suntan lotion, urine, and other substances. In addition to contributing to high turbidity, contaminants can also react with disinfectant chemicals to produce chloramines and other disinfection by-products, which can contribute to adverse health effects. Thus, in pool and spa systems, to clean the water, the water is typically passed through a filtration system. Filtration systems are used to remove pollutants and contaminants to reduce turbidity and to promote the visual clarity of the water. Filtration systems are one mechanism used to help ensure healthy conditions in swimming pools, hot tubs, spas, plunge pools, and other recreational water venues or aquatic applications.

Traditional pool and spa filtration technologies include diatomaceous earth filters, pressure-fed sand filters, gravity sand filters, and cartridge filters. However, these filtration technologies have inherent shortcomings, including the inability to capture small, suspended solids, bacteria, and viruses without the use of filter aids or secondary sanitization devices. Conversely, high efficiency filter media technology capable of capturing submicron particles and microorganisms may not be able to process larger suspended solids without becoming clogged. Thus, high-efficiency filter media such as Reverse Osmosis (RO), hollow fiber membrane, or SiC (Silicon Carbide) ceramic technology is traditionally employed through the use of one or more prefilter(s) to capture larger particles.

Traditional filter systems can be cleaned through backwash operations, where the flow of water is reversed through the system to loosen and remove trapped particulates. However, when traditional and high-efficiency filters are used together in the same system, it is difficult to clean the filters to maintain their performance over time. For example, the backwash operations used for traditional filter systems may not effectively clean both the traditional and high-efficiency filter. Furthermore, backwashing may not remove all the contaminants collected by the filter, especially contaminants like organics, viruses, and bacteria.

Therefore, there is a need in the art for a filtration system that can effectively filter out both large and small contaminants without the filtration system becoming clogged. Additionally, there is a need for a filtration system that includes systems and methods for effectively cleaning the hybrid filter components to remove particulates, contaminants, and debris of various sizes.

SUMMARY

In some aspects, a hybrid filter system for an aquatic application is provided in the form of a pump, a filtration system, a container, a valve, and a controller. The container retains a chemical cleaning agent and is in fluid communication with the filtration system. The valve is in fluid communication with the container and the filtration system, and the controller is in communication with the valve. The controller determines a first permeability value associated with the filtration system at a first time period and initiates a cleaning mode by providing the chemical cleaning agent to the filtration system when the first permeability value is below a permeability threshold value.

In some instances, the hybrid filter system is defined by a first filtration stage and a second filtration stage. The first filtration stage is designed to capture particles of a first size, and the second filtration stage is designed to capture particles of a second size, where the first size is larger than the second size. The second filtration stage includes a first filtration module. The first filtration stage prefilters a fluid before the fluid is provided to the second filtration stage when the controller directs the filtration system to operate in a filtration mode. In such instances, the second filtration stage further includes a second filtration module arranged in parallel with the first filtration module provided in the form of a hollow fiber membrane. The chemical cleaning agent is provided from the container to the first filtration module when the controller initiates the cleaning mode.

In other instances, the cleaning mode of the hybrid filter system includes at least a backwash mode and a chemical cleaning mode. The controller directs fluid to flow through the filtration system in a first direction when a filtration mode of the filtration system is initiated and in a second direction when the backwash mode is initiated. The controller directs actuation of the valve to provide a chemical cleaning agent to the filtration system when the chemical cleaning mode is initiated.

In some instances, a chemical cleaning agent is provided from the container to the filtration system when the controller initiates the cleaning mode.

In other instances, the hybrid filter system further includes an inlet conduit and a first control valve. The inlet conduit is in fluid communication with a source of a fluid from the aquatic application. The first control valve is in fluid communication with the source of the fluid and the filtration system and is in electronic communication with the controller. The controller actuates the first control valve to initiate the cleaning mode when the first permeability value is below the permeability threshold value.

In some instances, the filtration system processes water from a pool or a spa.

In other instances, the controller is designed to receive a pool temperature value and determine whether to decrease the permeability threshold value based on the received pool temperature value.

In some instances, the permeability threshold value is at least about 150 and no more than about 350.

In other respects, a hybrid filter system for a pool or spa is provided in the form of a hybrid filter assembly, a chemical cleaning system, and a controller. The hybrid filter assembly includes a first filtration module, and the chemical cleaning system is provided in the form of a chemical tank, a feed line, and a valve. The valve is associated with the feed line, and the feed line is designed to place the chemical cleaning system in fluid communication with the hybrid filter assembly. The controller is in communication with the hybrid filter assembly and the chemical cleaning system and is designed to determine whether to operate the hybrid filter assembly in a filtration mode or a chemical cleaning mode based on a determined operational efficiency of the hybrid filter assembly.

In some instances, the first filtration module is defined by a cylindrical body, a top endcap, and a bottom endcap, and the feed line is in fluid communication with the top endcap.

In other instances, the first filtration module is defined by a cylindrical body, a top endcap, and a bottom endcap, and the feed line is in fluid communication with the bottom endcap.

In some instances, the controller is further designed to initiate a chemical cleaning procedure when the controller determines one or more parameters are below a predetermined threshold value associated with the one or more parameters, actuate the valve positioned on the feed line to provide a chemical agent to the first filtration module, and initiate a rinse of the first filtration module after a soak time value is exceeded.

In some such instances, the soak time value is at least 30 minutes.

In other instances, the chemical tank is designed to retain a chemical agent, and the chemical agent is selected from the group consisting of a chlorine-containing compound, a chlorine-containing solution, a bromine-containing compound, a bromine-containing solution, a bleaching agent, an acidic solution, and combinations thereof.

In yet other respects, a hybrid filter assembly for a pool or spa is provided in the form of an inlet conduit, a pump, a filtration stage, a chemical cleaning system, and a controller. The inlet conduit is in fluid communication with a source of a fluid from the pool or the spa, and the pump is in fluid communication with the inlet conduit. The filtration stage includes a filtration module in fluid communication with the inlet conduit, and the chemical cleaning system is in fluid communication with the filtration stage. The chemical cleaning system includes a valve designed to selectively provide a cleaning agent to the filtration stage. The controller is in communication with the valve and is designed to initiate a cleaning procedure in which the chemical cleaning system provides the cleaning agent to the filtration stage and to determine when the filtration module is fouled.

In some instances, the cleaning agent includes a chlorine-containing solution.

In other instances, the controller initiates the cleaning procedure when a permeability value of the filtration module is below a permeability threshold value.

In some such instances, the filtration module further includes a port designed to receive the cleaning agent from the chemical cleaning system.

In some instances, the filtration module further includes a cylindrical housing, a first endcap provided on an end of the cylindrical housing and coupled to a feed line from the chemical cleaning system, and a second endcap provided on an opposite end of the cylindrical housing.

DESCRIPTION OF THE DRAWINGS

FIG. 1 is a schematic diagram depicting a swimming pool and one or more components associated with a pool pad;

FIG. 2 is a front isometric view of a hybrid filter assembly;

FIG. 3A is a cross-sectional view of the hybrid filter assembly of FIG. 2 with some portions removed for clarity;

FIG. 3B is a partial top elevational view of various internal components of the hybrid filter assembly of FIG. 2 with some portions removed for clarity;

FIG. 4A is a top elevational view of a bottom portion of the hybrid filter assembly of FIG. 2 showing a manifold;

FIG. 4B is a top isometric view of the bottom portion of the hybrid filter assembly of FIG. 2;

FIG. 5A is a top isometric view of a bottom portion of the hybrid filter assembly of FIG. 2 with a second filtration stage disposed therein;

FIG. 5B is a side isometric view of the bottom portion of the hybrid filter assembly of FIG. 5A with portions removed for clarity;

FIG. 6A is a side elevational view of a membrane filtration module of the hybrid filter assembly of FIG. 5A;

FIG. 6B is a partial cross-sectional side view of a membrane filtration module of FIG. 6A taken along the line 6B-6B of FIG. 6A, with some portions rendered transparently for clarity;

FIG.7A is a top isometric view showing a membrane filtration module of a second filtration stage of the hybrid filter assembly of FIGS. 2A-2C further including a media guard;

FIG. 7B is a partial cross-sectional side view of a membrane filtration module of FIG. 7A taken along the line 7B-7B of FIG. 7A;

FIG. 8A is a partial cross-sectional view of the hybrid filter assembly of FIG. 2 showing a fluid flow path through the assembly during a normal filtration operation with some portions removed for clarity;

FIG. 8B is a partial cross-sectional side view of the membrane filtration module of FIGS. 5A-6B showing a fluid flow path through the membrane filtration module during a normal operation of the hybrid filter assembly with some portions removed for clarity;

FIG. 9A is an isometric view of the hybrid filter assembly of FIG. 2 coupled to a bypass mechanism;

FIG. 9B is a partial cross-sectional side view of the hybrid filter assembly of FIG. 9A showing a fluid flow path through the membrane filtration module during a bypass operation of the hybrid filter assembly with some portions of the hybrid filter assembly removed for clarity;

FIG. 10 is a partial cross-sectional side view of the membrane filtration module of FIG. 9 showing a fluid flow path through the membrane filtration module during a backwash operation with some portions removed for clarity;

FIG. 11 is a partial cross-sectional side view of the hybrid filter assembly of FIG. 2 showing a fluid flow path through the assembly during a backwash mode with some portions removed for clarity;

FIG. 12 is a schematic block diagram of a chemical cleaning system including a gravity-fed chemical tank designed to be used with the various hybrid filter assemblies disclosed herein;

FIG. 13 is a schematic block diagram of a chemical cleaning system including a chemical dosing pump designed to be used with the various hybrid filter assemblies disclosed herein;

FIG. 14 is a schematic block diagram of a chemical cleaning system including a vacuum-fed chemical tank designed to be used with the various hybrid filter assemblies disclosed herein;

FIG. 15 is a schematic block diagram of a chemical cleaning system including a bypass line designed to be used with the various hybrid filter assemblies disclosed herein;

FIG. 16 is a schematic block diagram of a chemical cleaning system including an alternative configuration of a bypass line designed to be used with the various hybrid filter assemblies disclosed herein;

FIG. 17 is a schematic block diagram of a chemical cleaning system including a further alternative bypass line designed to be used with the various hybrid filter assemblies disclosed herein;

FIG. 18 is a schematic block diagram of a chemical cleaning system including a chemical injection tie in upstream of a pump designed to be used with the various hybrid filter assemblies disclosed herein;

FIG. 19 is a schematic block diagram of a chemical cleaning system including a venturi pump designed to be used with the various hybrid filter assemblies disclosed herein;

FIG. 20A illustrates a chemical cleaning system including a chemical cleaning agent injection port designed to be used with the various hybrid filter assemblies disclosed herein;

FIG. 20B illustrates a partial top isometric view of an internal portion of a hybrid filter assembly vessel including the chemical cleaning system of FIG. 20A;

FIG. 20C illustrates a partial top isometric view of a chemical cleaning agent injection manifold included in the internal portion of a hybrid filter assembly vessel including the chemical cleaning system of FIG. 20B;

FIG. 21 is a right-side isometric view of another instance of a hybrid filter assembly including a first housing and a second housing with some portions removed for clarity;

FIG. 22 is a left-side elevational view of the hybrid filter assembly of FIG. 21;

FIG. 23 is a right-side elevational view of the hybrid filter assembly of FIG. 21;

FIG. 24 is a right-side isometric view of the hybrid filter assembly of FIG. 21 with some portions rendered transparently for clarity;

FIG. 25 is a left-side isometric view of the hybrid filter assembly of FIG. 21 with some portions rendered transparently for clarity;

FIG. 26A is a right-side view of the hybrid filter assembly of FIG. 21 and an associated chemical cleaning system;

FIG. 26B is a right-side view of the hybrid filter assembly of FIG. 21 and another associated chemical cleaning system;

FIG. 26C is a right-side view of the hybrid filter assembly of FIG. 21 and a further associated chemical cleaning system;

FIG. 27 is an isometric view of an automated control valve of the hybrid filter assembly of FIG. 21;

FIG. 28 is a front elevational view of the automated control valve of FIG. 27;

FIG. 29 is a rear elevational view of the automated control valve of FIG. 27;

FIG. 30 is a left-side elevational view of the automated control valve of FIG. 27;

FIG. 31 is a right-side elevational view of the automated control valve of FIG. 27;

FIG. 32 is a bottom plan view of the automated control valve of FIG. 27;

FIG. 33A illustrates a schematic block diagram of a swimming pool and the hybrid filter assembly of FIGS. 21-25 operating in a filtration mode;

FIG. 33B illustrates a schematic block diagram of a swimming pool and the hybrid filter assembly of FIGS. 21-25 operating in a first backwash mode;

FIG. 33C illustrates a schematic block diagram of a swimming pool and the hybrid filter assembly of FIGS. 21-25 operating in a second backwash mode;

FIG. 33D illustrates a schematic block diagram of a swimming pool, a chemical cleaning system, and the hybrid filter assembly of FIGS. 21-25 operating in a chemical cleaning mode;

FIG. 33E illustrates a schematic block diagram of a swimming pool and the hybrid filter assembly of FIGS. 21-25 operating in a bypass mode;

FIG. 34 is a front, right-side isometric view of another hybrid filter assembly with some portions rendered transparently for clarity;

FIG. 35 is a rear, right-side isometric view of the hybrid filter assembly of FIG. 34 with some portions rendered transparently for clarity;

FIG. 36 is a left-side isometric view of the hybrid filter assembly of FIG. 34 with some portions rendered transparently for clarity;

FIG. 37 is an isometric view of the hybrid filter assembly of FIG. 34 with some portions rendered transparently for clarity;

FIG. 38 is a front, right-side isometric view of yet another hybrid filter assembly;

FIG. 39 is a right-side elevational view of the hybrid filter assembly of FIG. 38;

FIG. 40 is a front, left-side isometric view of the hybrid filter assembly of FIG. 38;

FIG. 41 is an isometric view of an instance of a valve of the hybrid filter assembly of FIG. 38;

FIG. 42 illustrates a flow diagram depicting a method for operating the various hybrid filter assemblies disclosed herein in a filtration configuration or a backwash configuration;

FIG. 43 illustrates a flow diagram depicting a method for operating the various hybrid filter assemblies disclosed herein in a diagnostics configuration;

FIG. 44 illustrates a flow diagram depicting a method for operating the various hybrid filter assemblies disclosed herein in a backwash configuration;

FIG. 45 illustrates a flow diagram depicting a method for operating the various hybrid filter assemblies disclosed herein in a chemical cleaning configuration;

FIG. 46 illustrates a flow diagram depicting an alternative method for operating the various hybrid filter assemblies disclosed herein;

FIG. 47 illustrates a flow diagram depicting a method for scheduling a backwash cleaning operation and a chemical cleaning operation for the various hybrid filter assemblies disclosed herein;

FIG. 48 illustrates a flow diagram depicting another method for scheduling a backwash cleaning operation and/or a chemical cleaning operation for the various hybrid filter assemblies disclosed herein;

FIG. 49 illustrates a flow diagram depicting a method for updating one or more backwash parameter values based on pool water temperature for the various hybrid filter assemblies disclosed herein;

FIG. 50 illustrates a flow diagram depicting a method for updating one or more backwash parameter values based on one or more pool operational parameter values for the various hybrid filter assemblies disclosed herein;

FIG. 51 illustrates a flow diagram depicting a method for updating a permeability threshold value for the various hybrid filter assemblies disclosed herein;

FIG. 52 illustrates a flow diagram depicting a method for determining a permeability value for the various hybrid filter assemblies disclosed herein;

FIG. 53 illustrates a flow diagram depicting a method for performing a deaeration cycle before a backwash cycle for the various hybrid filter assemblies disclosed herein;

FIG. 54 illustrates a flow diagram depicting a method for generating backwash instructions for the various hybrid filter assemblies disclosed herein;

FIG. 55 illustrates a graph showing the effectiveness of the backwashing and chemical cleaning procedures via measurement of the hybrid filter assembly's headloss after a cleaning procedure; and

FIG. 56 illustrates a chart showing the effectiveness of a cleaning procedure including only a backwash procedure as compared to a cleaning procedure including a chemical cleaning procedure.

DETAILED DESCRIPTION

Before any embodiments are described in detail, it is to be understood that the disclosure is not limited in its application to the details of construction and the arrangement of components set forth in the following description or illustrated in the following drawings, which is limited only by the claims that follow the present disclosure. The disclosure is capable of other embodiments, and of being practiced, or of being carried out, in various ways. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The following description is presented to enable a person skilled in the art to make and use embodiments of the disclosure. Various modifications to the illustrated embodiments will be readily apparent to those skilled in the art, and the generic principles herein can be applied to other embodiments and applications without departing from embodiments of the disclosure. Thus, embodiments of the disclosure are not intended to be limited to embodiments shown but are to be accorded the widest scope consistent with the principles and features disclosed herein. The following detailed description is to be read with reference to the figures, in which like elements in different figures have like reference numerals. Skilled artisans will recognize the examples provided herein have many useful alternatives and fall within the scope of embodiments of the disclosure.

Additionally, while the following discussion may describe features associated with specific devices, it is understood that additional devices and/or features can be used with the described systems and methods, and that the discussed devices and features are used to provide examples of possible embodiments, without being limited.

The present disclosure provides a filtration system (e.g., a hybrid filter system) provided in the form of a two-stage hybrid filter assembly, the hybrid filter assembly designed for use in an aquatic application (e.g., a pool and/or a spa). The hybrid filter assembly is provided in the form of a high efficiency, single-pass device designed to process (e.g., filter) water provided from a pool and/or a spa. In some instances, the two-stage filtration assembly is entirely retained and/or enclosed within a single vessel (e.g., a housing) and can capture both larger suspended solids and submicron particles in a single pass of the fluid through the vessel. In other instances, each stage of the two-stage filtration assembly is provided in a separate vessel (e.g., a first housing and a second housing). A first filtration stage employs depth filtration designed to capture large particulates and acts as a prefilter for a second filtration stage, thereby improving the performance and the operational lifetime of the second filtration stage. The second filtration stage is provided in the form of a membrane filtration module having one or more membranes designed to capture submicron particulates, bacteria, and/or viruses. Thus, by being able to capture both large and small suspended solids in an aquatic system, the two-stage filtration device can filter out contaminants such as skin cells, pollen, algae spores, and microorganisms such as bacteria and viruses that may not be effectively filtered out in traditional pool and spa filtration systems. Therefore, the two-stage filtration system provides improved water clarity, decreased disinfection byproduct formation, and decreased demand for a primary recreational water sanitizer and balancer, along with more consistent sanitizer and balancer levels in the water. Further, in certain instances, the hybrid filtration assembly allows both filtration stages of the hybrid filter assembly to be backwashed simultaneously.

The hybrid filter assembly is designed to operate as a filtration device within a body of water or aquatic application, particularly a pool or spa system, to supplement and/or entirely replace a main filter, such as a traditional sand, cartridge, or diatomaceous earth filter. Traditional pool and spa filters are generally capable of capturing particles between about 3 to about 30 microns in size. In contrast, in some instances, the hybrid filter assembly disclosed herein is designed to capture particles larger than about 150 microns in size, particularly in the range of about 200 microns to about 300 microns in size in the first filtration stage, and is capable of capturing particles larger than about 0.005 microns in size, particularly in the range of about 0.02 to about 0.20 microns in the second filtration stage. In some forms, the first filtration stage captures particles that are about 10 microns or larger in size. In other instances, the hybrid filter assembly disclosed herein is designed to capture particles larger than 150 microns in size, particularly in the range of 200 microns to 300 microns in size in the first filtration stage, and is capable of capturing particles larger than 0.005 microns in size, particularly in the range of 0.02 to 0.20 microns in the second filtration stage. In some forms, the first filtration stage captures particles that are 10 microns or larger in size.

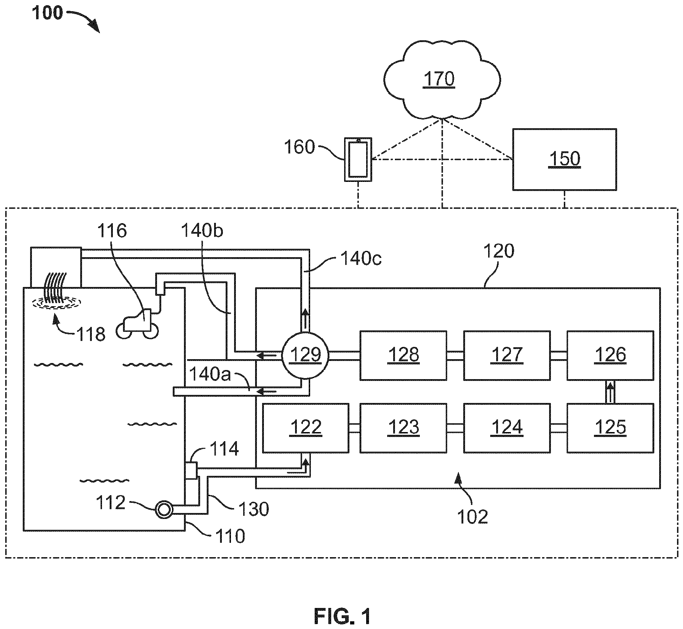

Referring to FIG. 1, a block diagram of an aquatic application 100 is depicted. The aquatic application 100 is provided in the form of one or more pool components 102 designed for use with a swimming pool 110. The pool components 102 include plumbing (e.g., conduits) and one or more pool management devices that form a closed loop fluid circuit. The pool components 102 can include one or more of an inlet conduit 130, a variable speed pump 122, a booster pump 123, a filter 124, a heater 125, a sanitizer 126, a water chemistry monitor 127, a water chemistry regulator 128, one or more valves 129, and one or more discharge conduits 140a-140c. One or more of the pool components 102 can be located on a pool pad 120.

In certain instances, the aquatic application 100 may be provided in the form of a spa and include components designed for use with a spa. In other instances, the aquatic application 100 may be provided in the form of a pool and a spa and include components that may be used with a pool and spa system. In yet other instances, the aquatic application 100 may be provided in the form of pool and/or spa components designed for use with a pool and/or a spa in a residential setting or a commercial setting. More particularly, the aquatic application 100 may be provided as a swimming pool, a hot tub, a spa, a plunge pool, and other recreational water venues not specifically discussed herein.

Portions of water can flow from the swimming pool 110 through the inlet conduit 130 from a drain 112 and/or a skimmer 114 and to a suction side of the variable speed pump 122. The variable speed pump 122 and/or the booster pump 123 can provide a driving force for the pool water to flow through the other downstream pool components 102. After the water from the swimming pool 110 exits one or more discharge conduits 140a-140c, the water can be optionally provided directly to the swimming pool 110 and/or provided to additional pool components 102 such as a pool cleaner 116 and a water feature 118.

Referring specifically to the pool pad 120, the sanitizer 126 and the water chemistry regulator 128 are designed to control one or more water treatment chemicals that can be added to the swimming pool 110. For example, in some embodiments, the sanitizer 126 is designed to add chlorine and/or bromine to the aquatic application 100. In some embodiments, the water chemistry regulator 128 is designed to add one or more pool chemicals such as hydrochloric acid, sodium bisulfate, carbon dioxide, sulfuric acid, sodium carbonate, or other water treatment chemicals to the aquatic application 100. Further, the heater 125 is optionally included and is designed to heat the water in the aquatic application 100.

It is to be understood that the pool components 102 can be provided in various configurations (i.e., the order of the pool components 102 can be altered). Further, in some embodiments, one or more pool components 102 may be omitted or removed from the aquatic application 100.

Still referring to FIG. 1, the aquatic application 100 can further include a central controller 150 and a user device 160 that can interface with the central controller 150 either directly over a local area network or via a cloud network 170. The central controller 150 can be a gateway, a hub, a switch, a router, a server, a switch, or other connection device to allow integration, monitoring, and control of multiple aspects of the aquatic application 100. The user device 160 can be provided in the form of a cell phone, tablet, or any other similar portable electronic device that may include a camera and a user interface.

Although FIG. 1 depicts the central controller 150 in communication with the user device 160 and the network 170, it should be noted that various communication methodologies and connections may be implemented to work in conjunction with, or independent from, one or more local controllers associated with one or more individual components associated with the aquatic application 100 (e.g., a pump controller, a heater controller, etc.) For example, one or more of the central controller and the local controllers may utilize a Local Area Network (LAN), a Wide Local Area Network (WLAN), Ultra Mobile Broadband (UMB), Institute of Electrical and Electronics Engineers (IEEE) 802.11 (Wi-Fi), IEEE 802.16 (WiMAX), IEEE 802.20, Flash-OFDM, a Long Term Evolution (LTE) network, an LTE-Advanced (LTE-A) network, an LTE-A Pro network, a New Radio (NR) network, or a network operating in accordance with other systems and radio technologies, including future systems and radio technologies not explicitly mentioned herein, to transmit and receive information.

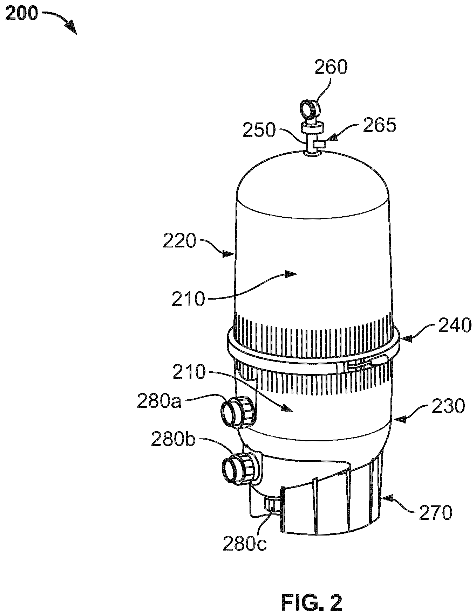

Now turning to FIG. 2, a filtration system provided in the form of a hybrid filter assembly 200 according to one embodiment of the disclosure is shown. The hybrid filter assembly 200 may be the filter 124 of FIG. 1. The hybrid filter assembly 200 is provided in the form of a filtration vessel 210 including a two-stage filtration assembly disposed entirely therein, which is discussed in detail below. As shown, the filtration vessel 210 is substantially cylindrically shaped.

However, it is to be understood that the filtration vessel 210 may be imparted with any other shape. The filtration vessel 210 may be made from polymeric materials, such as thermoplastics, which can have inherent resistance to common environmental and chemical stressors.

As shown, the filtration vessel 210 is provided in the form of an upper housing 220 and a lower housing 230 that are releasably coupled together to form a substantially enclosed interior filtration chamber. Various known methods may be used to couple the upper housing 220 and the lower housing 230. For example, as shown, a circumferential retaining device 240 produced predominantly of a suitably corrosion-resistant material, such as stainless steel for example, can engage one or more interconnecting flanges on ends of the upper housing 220 and/or the lower housing 230, respectively, to provide a fluid tight seal as well as structural support therebetween. In another embodiment, an elastomeric seal (not shown) may be provided between interconnecting flanges, which extend from one or both of the upper housing 220 and the lower housing 230. In yet another embodiment, a series of bolted fasteners (not shown) can be used to couple the upper housing 220 to the lower housing 230. In other embodiments, the filtration vessel 210 may be provided as an inseparable assembly or as a unitary housing structure.

Still referring to FIG. 2, the upper housing 220 may include one or more ports extending partially or completely through the upper housing 220 and designed to connect additional components to the hybrid filter assembly 200. As shown, the upper housing includes a first port 250 positioned at a top surface of and extending at least partially through the upper housing 220. A pressure gauge 260 can be coupled to the first port 250. An external air relief valve 265 can be positioned between the pressure gauge 260 and the first port 250 and can be configured to automatically release pressure from within the filtration vessel 210 or may be manually operated.

The lower housing 230 can include a base 270 extending from a lower end thereof that is designed to provide stability and support the hybrid filter assembly 200. The lower housing 230 can also include one or more ports (e.g., three ports 280a-280c) to facilitate fluid flow into and/or out of the hybrid filter assembly 200. The one or more ports provided on the lower housing 230 may extend partially or completely therethrough. An inlet port 280a permits water (e.g., fluid) to flow into the hybrid filter assembly 200, and an outlet port 280b and a drain port 280c can permit water and other components (e.g., waste fluid and the like) to exit the hybrid filter assembly 200. The inlet port 280a and the outlet port 280b can be in fluid communication with one or more components of the aquatic application 100 of FIG. 1. In one embodiment, the drain port 280c can be connected to a waste system. In one embodiment, the drain port 280c can drain to the environment (e.g., the ground). In some instances, the drain port 280c can be provided as a threaded plug that has an elastomeric seal to provide a substantially fluid tight connection.

Additional ports (not shown) can be included in the upper housing 220 and/or the lower housing 230. The additional ports can be employed to provide additional benefits, such as improved deaeration of the second filtration stage, and/or provide supplemental operational status indicators through externally connected devices, such as gauges or transducers. In other embodiments, the supplemental devices may be provided as internally connected devices.

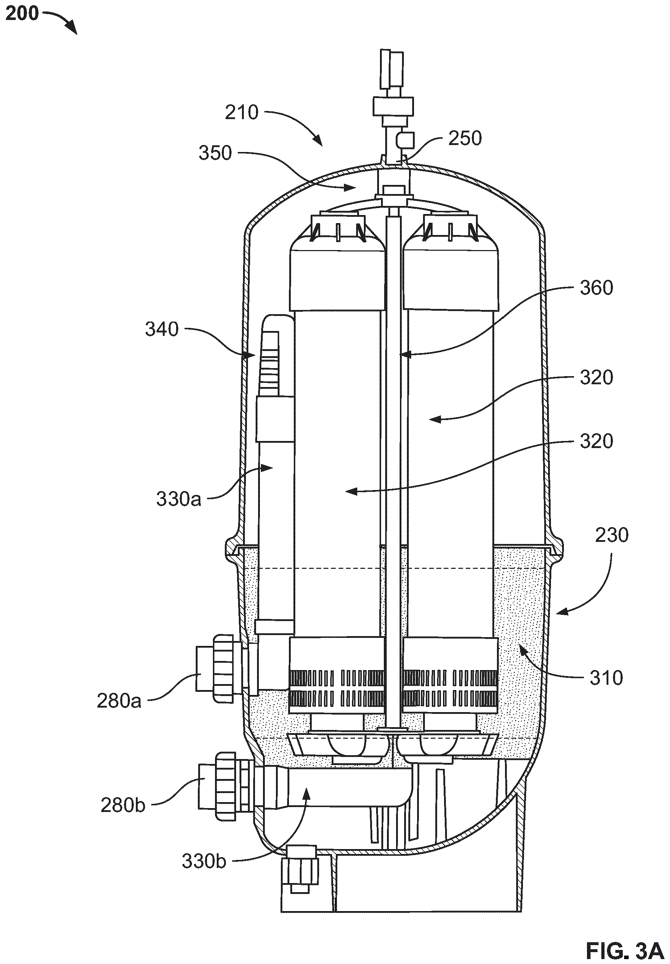

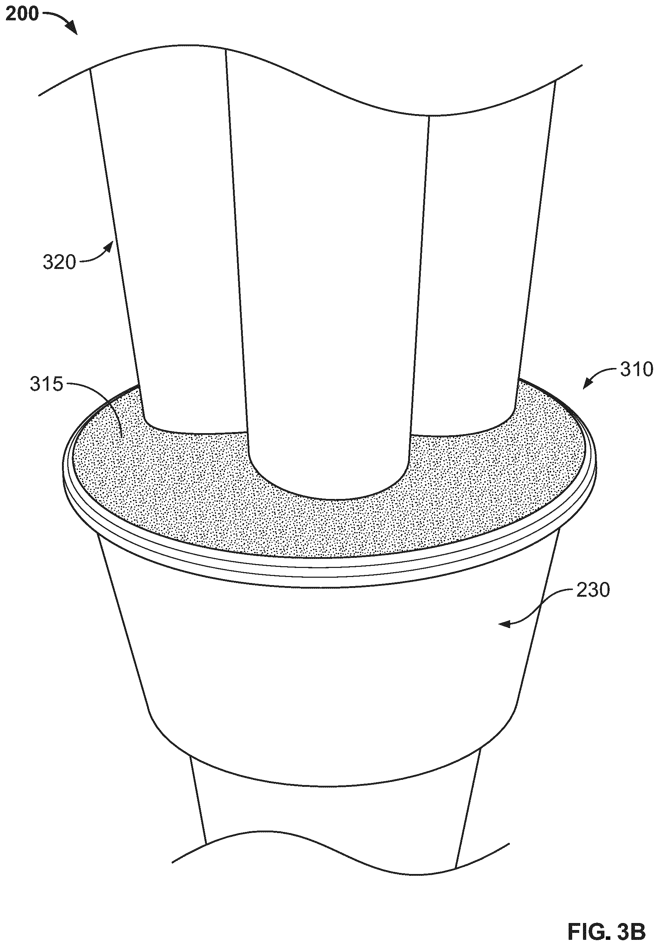

Turning to FIGS. 3A and 3B, various internal components of the hybrid filter assembly 200 of FIG. 2 are shown. The hybrid filter assembly 200 is defined by a two-stage filtration system comprising a first filtration stage 310 and a second filtration stage 320. Each of the first filtration stage 310 and the second filtration stage 320 may be operated under the principle of using pressure-driven filtration. In some instances, the pressure used to operate the hybrid filter assembly 200 may be provided by the variable speed pump 122, the booster pump 123, and/or another pump in fluid communication with the aquatic application 100 of FIG. 1.

Referring first to FIG. 3A, a first filtration stage 310 may be positioned in the lower housing 230 of the filtration vessel 210 and acts as a "prefilter" for the second filtration stage 320. The first filtration stage 310 is disposed in the lower housing 230 and substantially surrounds one or more filtration modules of the second filtration stage 320. In some forms, the first filtration stage 310 is provided in the form of porous media. The first filtration stage 310 operates using depth filtration by capturing debris within the volume of the porous media. Specifically, as fluid flows through the porous media, the depth and pore size of the media create a physical barrier in which particulates get trapped in the media itself. In some instances, the first filtration stage 310 includes a granular media 315 provided in the form of sand, crushed glass, an activated media such as carbon, pea gravel, activated glass media, and/or other suitable filtration media. For example, the first filtration stage 310 may be provided in the form of an activated filter media (e.g., an activated glass media including metal oxide catalysts) imparted with self-sterilization or antimicrobial properties. In such instances, the activated filter media may prevent bacteria-induced degradation of the efficacy of the first filtration stage via filter media mud-balling, coagulation, and channeling. In addition, in certain instances, the activated filter media (e.g., an activated glass media) may be imparted with a negative charge to facilitate the adsorption of sub-micron particulates and dissolved organic molecules. In some instances, the first filtration stage 310 is capable of capturing particles larger than the second filtration stage. By capturing large particles in the first filtration stage 310, the second filtration stage 320 can work more effectively because it may not become clogged with larger debris particles.

As discussed in more detail below, the second filtration stage 320 can include one or more filtration modules that are arranged in an upright orientation. The membrane filtration modules can be provided in the form of a membrane filter, such as a reverse osmosis filter, nanofiltration filter, ultrafiltration filter, or microfiltration filter. In one embodiment, the membrane filter is provided in the form of a hollow-fiber membrane filter. Membrane filtration captures contaminants in a physical barrier via a size-exclusion mechanism consistent with sand, diatomaceous earth, and pleated cartridge pool and spa filter media. However, membrane filtration is capable of capturing particles above about 0.005 microns in size (or 0.005 microns in size), particularly in the range of about 0.02 microns to about 0.2 microns (or 0.02 microns to 0.2 microns).

As shown best in FIG. 3A, the inlet port 280a of FIG. 2 is connected to and in fluid communication with an internal inlet pipe 330a. The outlet port 280b of FIG. 2 is connected to and in fluid communication with an internal outlet pipe 330b. During operation, a contaminated fluid (e.g., water from the aquatic application 100) enters the hybrid filter assembly 200 through the inlet port 280a and the internal inlet piping 330a, flows through the first filtration stage 310 and then the second filtration stage 320, and exits the hybrid filter assembly 200 as a filtered fluid through the outlet pipe 330b and the outlet port 280b.

In one embodiment, the hybrid filter assembly 200 may also include one or more of a diffuser 340, a passive internal air relief valve 350, and an air bleeder tube 360. In one embodiment, the diffuser 340 can be connected to an end of the inlet piping 330a and is designed to distribute water throughout the filtration vessel 210. The relief valve 350 may be connected to the first port 250 of FIG. 2. In some instances, the relief valve 350 can be opened to allow air and/or water in a top portion of the filtration vessel 210 to escape. In other instances, the relief valve 350 can be closed, enabling pressure to build up in the filtration vessel 210. When pressurized, fluid in the filtration vessel 210 may be forced to flow down to the bottom of the filtration vessel 210, and out of the outlet pipe 330b, the outlet port 280, and/or the drain port 280c of FIG. 2.

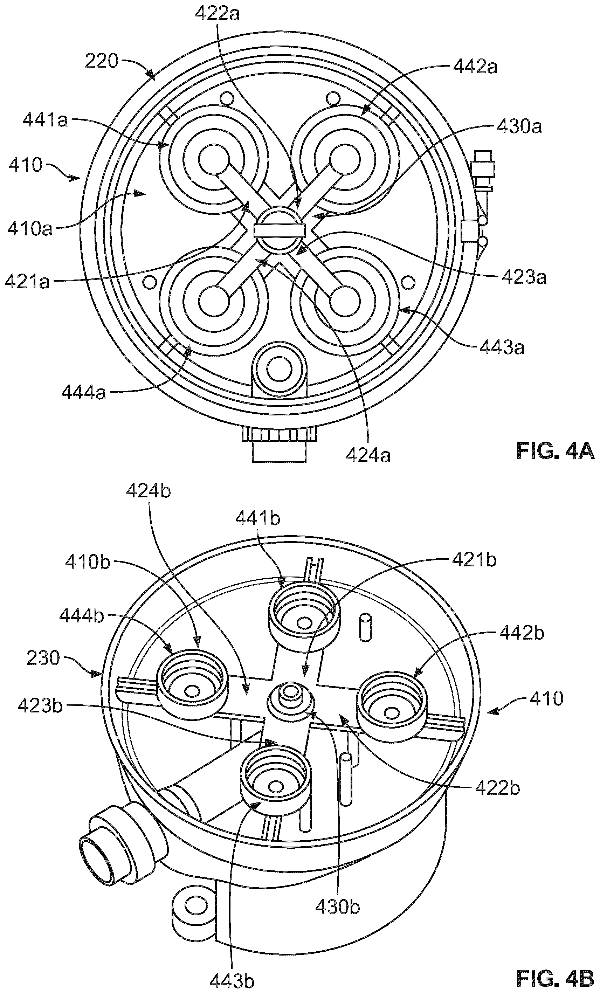

Now turning to FIGS. 4A and 4B various views of the internal components of the upper housing 220 and the lower housing 230 are shown, respectively. A manifold 410 is provided in the form of a first component 410a and a second component 410b, each of which is disposed within the filtration vessel 210. Specifically, FIG. 4A illustrates a top-down view of the internal components of the upper housing 220 comprising a first component 410a of a manifold 410. FIG. 4B illustrates a top isometric view of the lower housing 230 comprising a second component 410b of the manifold 410. Together, the first component 410a and the second component 410b of the manifold 410 may secure one or more second filtration stage filter membranes in an upright configuration within the hybrid filter assembly 200 by engaging with opposing ends of the filter membranes.

As shown, each of the first portion 410a and the second portion 410b of the manifold 410 comprises one or more arms extending from a center. Each of the ends of the one or more arms can include a module receiver. Referring specifically to FIG. 4A, the first portion 410a of the manifold 410 comprises four upper arms 421a-424a extending radially outwardly from an upper center region 430a and four upper module receivers 441a-444d.

The second portion 410b of the manifold 410 can substantially mirror the first portion 410a. Thus, as shown in FIG. 4B, the second portion 410b includes four lower arms 421b-424b extending radially outwardly from a lower center region 430b and four lower module receivers 441b-444b.

Thus, when the upper housing 220 and the lower housing 230 are coupled, a fluid circuit can be formed between the first portion 410a of the manifold 410, the second portion 410b of the manifold 410, and the one or more filtration modules disposed between the first portion 410a and the second portion 410b of the manifold 410.

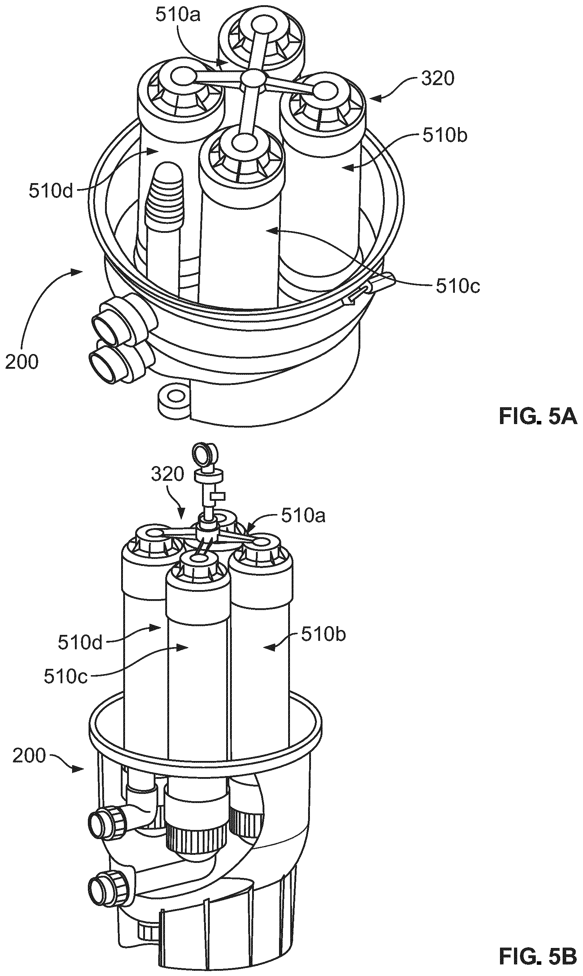

Turning to FIGS. 5A and 5B, detailed views of the second filtration stage 320 are shown. For clarity, various parts of the hybrid filter assembly 200 have been removed to show some of the internal components. Four membrane filtration modules 510a-510d of the second filtration stage 320 are positioned within the manifold 410. It is to be understood that although four membrane filtration modules 510a-510d are shown, the hybrid filter assembly 200 (and other embodiments of the hybrid filter assembly disclosed herein) may contain more or fewer membrane filtration modules depending on the embodiment. For example, some embodiments contain multiple membrane filtration modules of the same type and capacity, including nominal pore size, diameter, and practical length, which are co-located within the filtration vessel 210 in a parallel array. Whereas, other embodiments may contain a single membrane filtration module or multiple membrane filtration modules of different types, shapes, sizes, lengths, and/or diameters, employed in series and/or in parallel.

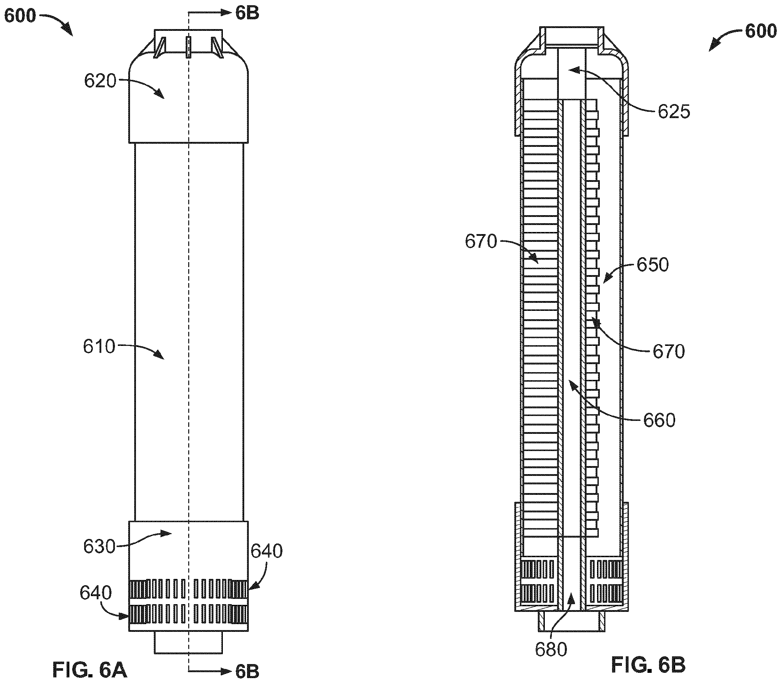

Now referring to FIGS. 6A and 6B, detailed illustrations of an instance of a single membrane filtration module 600 according to an embodiment are shown. The membrane filtration module 600 can be one or more of the membrane filtration modules 510a-510d of FIGS. 5A and 5B. As shown in FIG. 6A, the membrane filtration module 600 is provided in the form of an enclosed assembly comprising a cylindrical housing 610, a top endcap 620, and a bottom endcap 630. The top endcap 620 may be provided as a "blind" endcap that is designed to separate a module feed and a permeate flow. The top endcap 620 may further isolate the membrane filtration module 600 from unfiltered water introduced to the first filtration stage 310. In some instances, the top endcap 620 can include a plug 625 designed to form a substantially watertight seal to prevent water from entering or leaving one or more membrane filtration modules 510a-510d of the second filtration stage 320.

The bottom endcap 630 may be provided in the form of a lateral endcap. The bottom endcap 630 may further include a plurality of axial slits 640 circumscribing and extending partially or fully through the bottom endcap 630. The bottom endcap 630 is designed to help keep the media of the first filtration stage 310 separated from the media of the second filtration stage 320. Thus, in some instances, the bottom endcap 630 can include another plug (not shown) designed to form a substantially watertight seal to prevent water from entering or leaving one or more membrane filtration modules 510a-510d of the second filtration stage 320.

The axial slits 640 may be equidistantly spaced circumferentially around the bottom endcap 630 in some instances. In other aspects, the axial slits 640 may be non-uniform and/or may not extend entirely around the circumference thereof. In some forms, the axial slits 640 are imparted with a width of about 0.005 inches to about 0.02 inches (or about 0.0127 cm (centimeters) to about 0.0508 cm). In other forms, the axial slits 640 are imparted with a width of 0.005 inches to 0.02 inches (or 0.0127 cm to 0.0508 cm). In yet other forms, the axial slits 640 are imparted with a width somewhat larger or even smaller than the values recited herein. The axial slits 640 are designed to have a lateral opening that is smaller than the size of the media of the first filtration stage 310, so as to prevent the media from the first filtration stage 310 from entering the membrane filtration module 600. Additionally, the bottom endcap 630 is configured to keep the permeate and feed flow paths separate and to fluidly couple a permeate pipe of the filtration module to the filtration vessel 210 of FIG. 2.

Referring specifically to FIG. 6B, various internal components of the membrane filtration module 600 are shown. The internal components can include a membrane 650 surrounding a permeate pipe 660. Fluid can flow between the membrane 650 and the permeate pipe 660 via a plurality of axial openings 670. A module outlet 680 disposed at an end of the membrane 650 and the permeate pipe 660 can form a fluid flow path between the permeate pipe 660 and the filtration vessel 210 of FIG. 2.

In one embodiment, the membrane filtration module 600 is defined by an asymmetric hollow fiber membrane produced from selective homopolymers or copolymers (e.g., polyethersulfone (PES) and polyvinylpyrrolidone (PVP) polymers). In other instances, the hollow fiber membranes may be formed of a blend of polymers such as, by way of example, a blend PES and PVP polymers or a blend of PES, PEV, and polyethylene glycol (PEG) polymers. In some instances, the hollow fibers deposited in an interior of the membrane filtration module 600 may be imparted with a surface area of at least about 20 square meters to at least about 30 square meters, although the surface area of the hollow fibers deposited within the interior of the membrane filtration module 600 may be somewhat less or even greater than these values. In other embodiments, the membrane filtration module 600 can be provided in a symmetric type with uniform pore structure, or as a layer deposited onto a structural core. In some instances, the membrane filtration module 600 can be produced from silicon carbide ceramic having a controlled crystalline or lattice structure.

In some forms, the membrane filtration modules 600 are ultrafiltration membranes imparted with a nominal pore size of about 10 to about 50 nanometers, or more particularly, about 20 to about 40 nanometers, and imparted with a lumen diameter of about 0.25 millimeters to about 2.5 millimeters. In other forms, the membrane filtration modules 600 are ultrafiltration membranes imparted with a nominal pore size of 10 to 50 nanometers, or more particularly, 20 to 40 nanometers, and imparted with a lumen diameter of 0.25 millimeters to 2.5 millimeters. In yet other forms, the membrane filtration modules 600 are ultrafiltration membranes imparted with a nominal pore size and lumen diameter that are larger or smaller than the values recited herein. The ultrafiltration membranes may be operated in a dead-end, inside-out deposition mode, and fouling recovery is achieved through backwashing via flux reversal. In other embodiments, the membrane filtration module 600 may be provided in the form of microfiltration membranes imparted a nominal pore size of about 50 nanometers to about 1,500 nanometers (or 50 nanometers to 1,500 nanometers), although the pore size of the microfiltration membranes may be larger or smaller than these values. In yet other embodiments, the membrane filtration module 600 may include fibers imparted with a lumen diameter of about 0.3 millimeters to about 3 millimeters (or 0.3 millimeters to 3 millimeters). Depending on the instance, it may be preferable to utilize fibers with a lumen diameter imparted with a value of about 0.5 millimeters to about 2 millimeters (or 0.5 millimeters to about 2 millimeters). In some instances, the membrane filtration modules 600 are imparted with a molecular weight cut-off (MWCO) value of about 150 kilodaltons to about 200 kilodaltons (or 150 kilodaltons to 200 kilodaltons), although the MWCU value may be less than or greater than these values. In other instances, the membrane filtration modules 600 may be imparted with a MWCU value such that the membrane filtration modules 600 are designed to retain silt, bacteria, viruses, and/or other particles that reduce water clarity and water quality. In some embodiments, the membrane filtration modules 600 can be operated using an outside-in deposition mode, and/or the fibers of the membrane filtration modules 600 can be provided in a randomized arrangement or by including helically wound fibers.

In some instances, the membrane filtration module 600 may be imparted with chemical resistance properties. For example, the membrane filtration module 600 may be imparted with acid-resistant properties, base-resistant properties, and/or chlorine-resistant properties. In certain instances, the membrane filtration module 600 may not degrade under high- or low-pH conditions, e.g., the membrane filtration module 600 may be designed to operate without significant degradation when processing fluid imparted with a pH value of about 2 to about 12 (or a pH value of 2 to 12). As an additional example, the membrane filtration module 600 may be designed to operate without significant degradation when processing fluid imparted with a free chlorine value of no more than about 500 milligrams per liter (or no more than 500 milligrams per liter). In certain instances, the membrane filtration module 600 may be designed to operate without significant degradation when the water supplied to the membrane filtration module 600 is imparted with a pH value somewhat lower or higher than the values recited herein. In certain other instances, the membrane filtration module 600 may be designed to operate without significant degradation when the water supplied to the membrane filtration module 600 is imparted with a free chlorine value even greater than the values recited herein. Thus, in certain instances, the membrane filtration module 600 may resist degradation by the chemicals provided to the membrane filtration module 600 during the chemical cleaning process.

In certain instances, the membrane filtration module 600 may be provided as a Pentair X-Flow XF53 Membrane Element manufactured by X-Flow B.V. of the Netherlands.

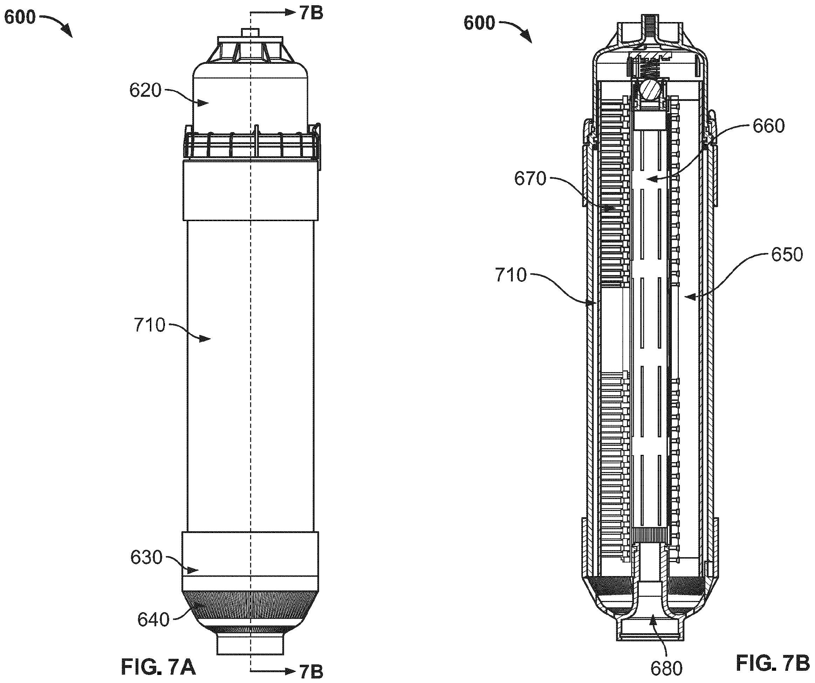

FIGS. 7A and 7B illustrate a membrane filtration module 700 according to another embodiment. The membrane filtration module 700 is similar to the membrane filtration module 600 of FIGS. 6A and 6B. However, the housing 610 is provided in the form of a solid guard 710. Similar to the cylindrical housing 610 of FIGS. 6A and 6B, the guard 710 can extend between and be coupled to the top endcap 620 and the bottom endcap 630. Thus, the guard 710 can substantially or entirely surround the internal components of the membrane filtration module.

The guard 710 is designed to provide separation between the first filtration stage (e.g., the porous media) 310 and the second filtration stage 320. Therefore, it can be easier to install and service the hybrid filter assembly 200 because an interior portion of the membrane filtration module 700 (i.e., the internal components) can be slidably removed without removing the guard 710. For example, the top endcap 620 can be detached from the membrane filtration module 700 and the internal components of the module can be removed upwardly therefrom. The membrane filtration module 700 can then be serviced or replaced without disturbing the first filtration stage 310. Once a maintenance or other operation is complete, the interior portion of the membrane filtration module 700 may be replaced and the top endcap 620 secured.

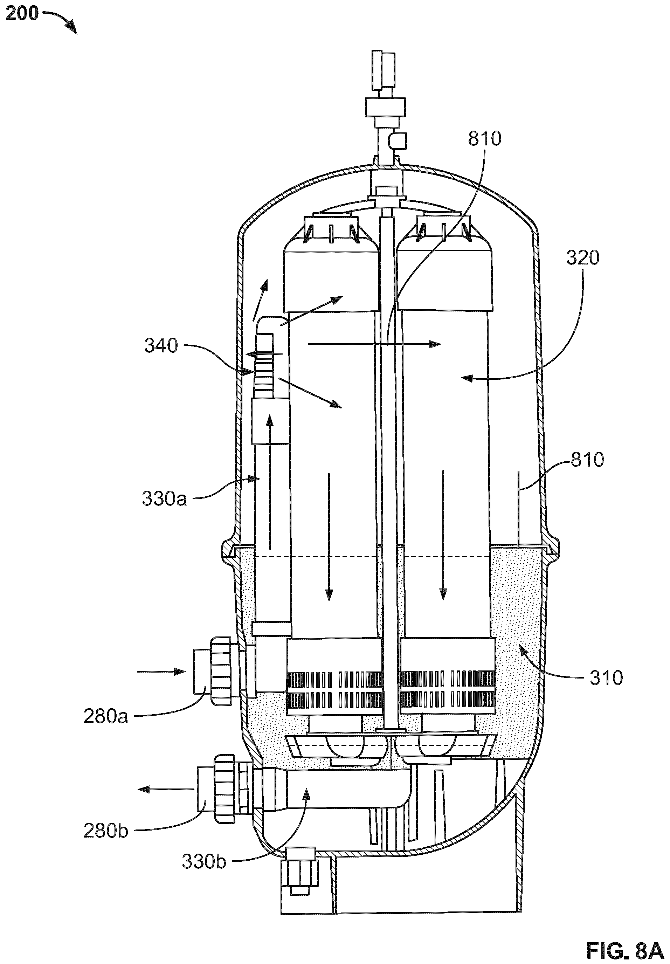

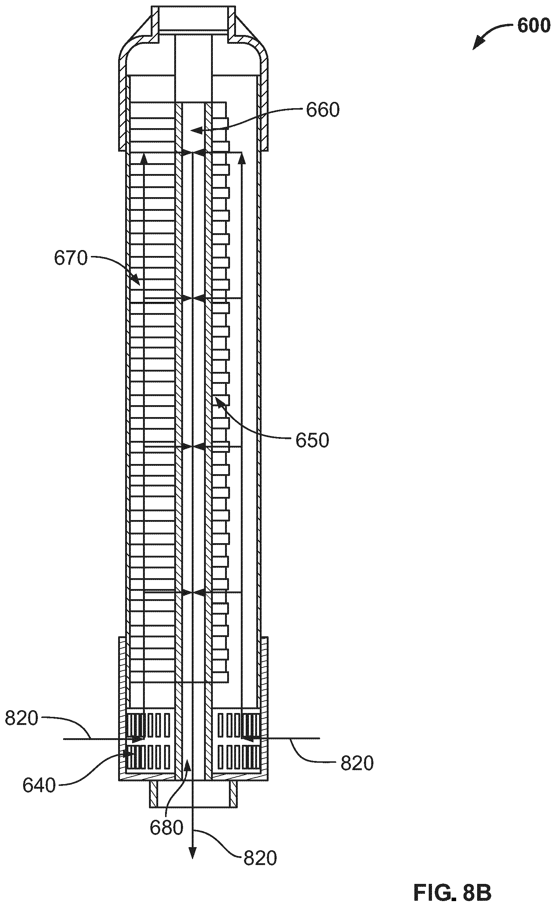

Turning to FIGS. 8-11, a fluid flow path of water through the hybrid filter assembly 200 is depicted and described. FIGS. 8A and 8B illustrate a fluid flow path through the hybrid filter assembly 200 during a filtration operation or mode. Referring first to FIG. 8A, a first flow path 810 of a fluid passing through the first filtration stage 310 is shown. During the filtration mode, fluid enters the hybrid filter assembly 200 through the inlet port 280a and the inlet pipe 330a. The directed fluid is then distributed throughout the top of the hybrid filter assembly 200 via the diffuser 340. The fluid flows downward and through the first filtration stage 310, which captures large particles.

Next, referring to FIG. 8B, the fluid flows into the second filtration stage 320 through one or more of the axial slits 640 of one or more of the membrane filtration modules 600 as shown by a second flow path 820. The fluid flows upwards through the membrane 650 and into the permeate pipe 660 through the axial openings 670. The membrane 650 captures submicron particles, bacteria, and viruses in the fluid. The clean permeate fluid is then directed downward through the permeate pipe 660, and out of the membrane filtration module 600 via the module outlet 680. The module outlet 680 is in fluid communication with the outlet pipe 330b such that the clean water exits the hybrid filter assembly 200 through the outlet pipe 330b and the outlet port 280b. One or more of the membrane filtration modules 600 may be utilized during the filtration operation. Over time, the first filtration stage 310 and the second filtration stage 320 may lose efficiency due to the fouling of the filters. Thus, one or more of the first filtration stage 310, and the second filtration stage 320 can be backwashed to remove the contaminants to at least partially restore the efficiency of the hybrid filter assembly 200.

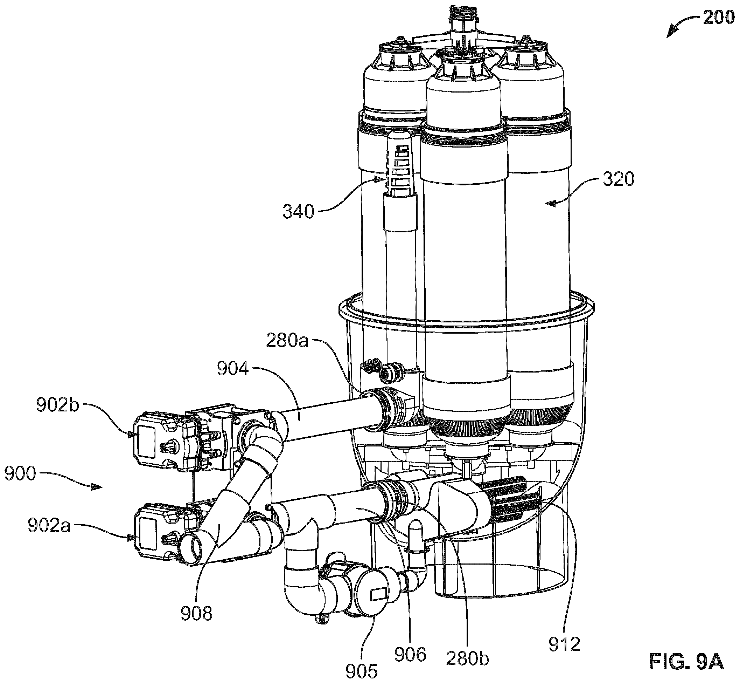

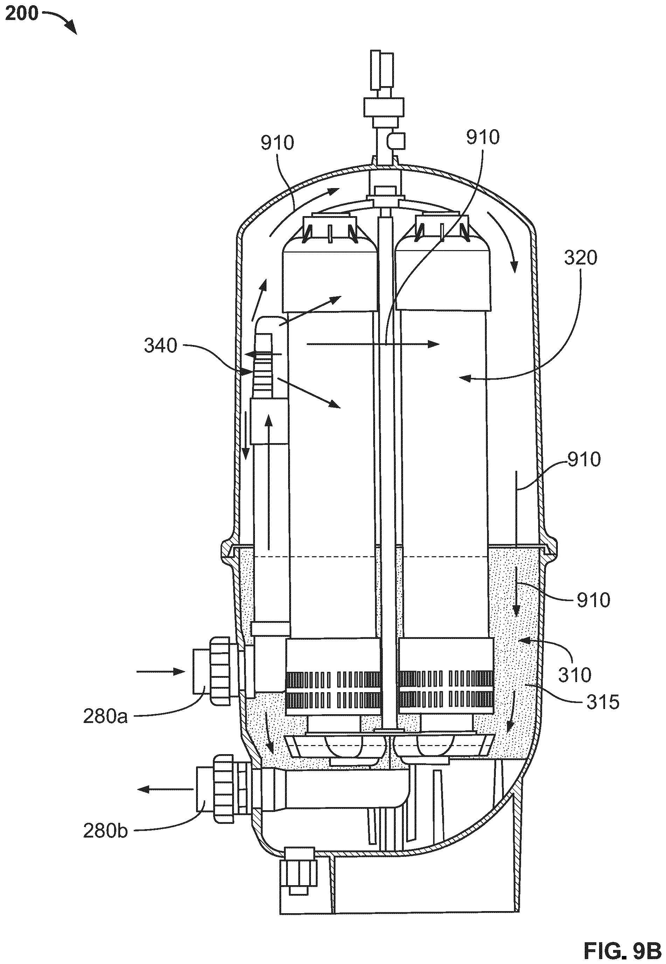

Turning to FIGS. 9A and 9B, a bypass system and a bypass flow path for the hybrid filter assembly are illustrated. The bypass system may allow fluid to flow through the first filtration stage 310 (not shown) and bypass the second filtration stage 320 when the hybrid filter assembly 200 operates in a bypass mode. Alternatively, the bypass system may prevent fluid flow to both the first and second filtration stages 310, 320. In some instances, the bypass mode may be utilized as a subroutine of the filtration mode, the backwash mode, and/or the chemical cleaning mode. For example, when the bypass mode is utilized as a subroutine of the filtration mode, the first filtration stage 310 may filter fluid normally, but the fluid may be provided back to the swimming pool 110 of FIG. 1 without being provided to the second filtration stage 320. As an additional example, when the bypass mode is utilized as a subroutine of the backwash mode, the first filtration stage 310 may filter fluid normally at the same time as the second filtration stage 320 is provided with a backwashing fluid. In such instances, the backwashing fluid provided to the second filtration stage 320 may exit the hybrid filter assembly 200 via a waste conduit or a drain (e.g., the drain port 280c) that is fluidly coupled to the second filtration stage 320. As yet another example, when the bypass mode is utilized as a subroutine of the chemical cleaning mode, the first filtration stage 310 may filter fluid normally at the same time a chemical cleaning agent is supplied to the second filtration stage 320 and/or the second filtration stage 320 is soaked with a chemical cleaning agent.

As depicted in FIG. 9A, an instance of a bypass system 900 is provided in the form of a first valve 902a, a second valve 902b, an inlet conduit 904, a bypass valve 905, an outlet conduit 906, and a valve conduit 908. The inlet conduit 904 may be coupled to or in fluid communication with the inlet port 280a of the hybrid filter assembly 200, and the outlet conduit 906 may be coupled to or in fluid communication with the outlet port 280b of the hybrid filter assembly 200. The bypass valve 905 may be positioned to be in fluid communication with the outlet conduit 906, although the bypass valve 905 may also be positioned elsewhere in the hybrid filter assembly 200. The valve conduit 908 may fluidly couple the first and second valves 902a, 902b. Each of the first and second valves 902a, 902b may be in electronic communication with the central controller 150 of FIG. 1. The central controller 150 may direct actuation of the first and second valves 902a, 902b, the bypass valve 905, and/or other components of the hybrid filter assembly 200 such that the hybrid filter assembly 200 enters the bypass mode.

The first valve 902a may be coupled to or in fluid communication with the inlet conduit 904 and the valve conduit 908. In certain instances, when the hybrid filter assembly 200 operates in a bypass mode, the central controller 150 may actuate the first valve 902a to prevent fluid from the swimming pool 110 of FIG. 1 from flowing into the inlet port 280a. Instead, the fluid may be directed through the valve conduit 908 and recirculated back to the swimming pool 110. In such instances, the central controller 150 may also actuate the second valve 902b to prevent backflow through the outlet conduit 906 and to the hybrid filter assembly 200. Such a bypass mode may be activated, for example, when at least one of the first and second filtration stages 310, 320 undergoes a chemical soaking or cleaning process.

In certain instances, when the hybrid filter assembly 200 operates in the bypass mode, fluid may still be provided to the hybrid filter assembly 200 via the inlet conduit 904. In such instances, fluid from the swimming pool 110 may only be provided to the first filtration stage 310. More particularly, the central controller 150 may actuate the bypass valve 905 such that fluid is provided to the first filtration stage 310 while the one or more membrane filtration modules (e.g., the membrane filtration modules 600) of the second filtration stage 320 are bypassed. As shown in FIG. 9B, when the bypass mode is initiated by the central controller 150, fluid from the swimming pool 110 may follow a fluid flow path 910 in which the fluid is filtered by the first filtration stage 310 but does not enter the second filtration stage 320. In such instances, the fluid may enter the hybrid filter assembly 200 via the inlet port 280a and flow through the diffuser 340, be filtered by the granular media 315, flow through a sieve 912 (see FIG. 9A), and then exit the hybrid filter assembly 200 via the outlet port 280b. After exiting the hybrid filter assembly 200, the fluid may be provided back to the swimming pool 110 via the outlet conduit 906. The second valve 902b may then direct the fluid filtered by the first filtration stage 310 back to the swimming pool 110. This bypass mode, as described herein, may be activated when the second filtration stage 320 undergoes a chemical soaking or cleaning.

In certain instances, the central controller 150 can direct actuation of the first and second valves 902a, 902b such that fluid from the swimming pool 110 of FIG. 1 is cycled more than once through the first filtration stage 310 before being provided back to the swimming pool. In such instances, filtered fluid may flow from the second valve 902b through the valve conduit 908 and to the first valve 902a, allowing the filtered fluid to be provided back to the first filtration stage 310.

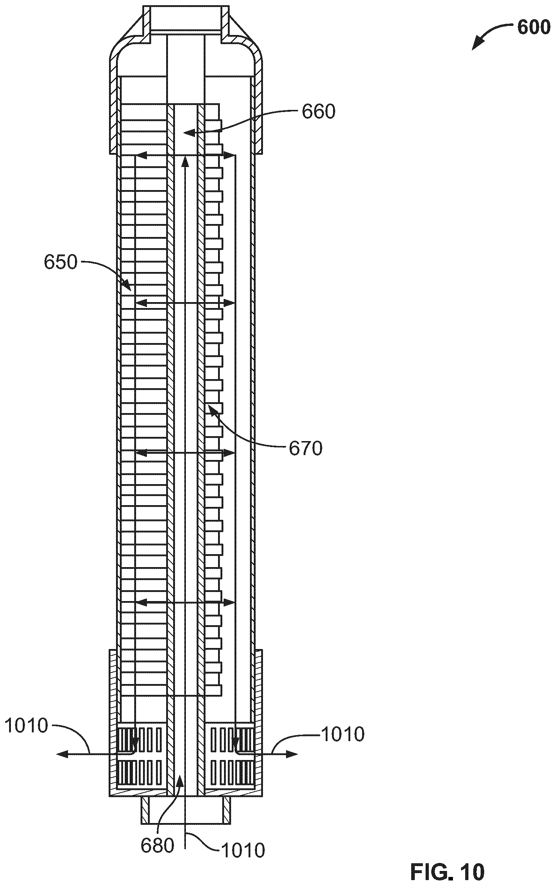

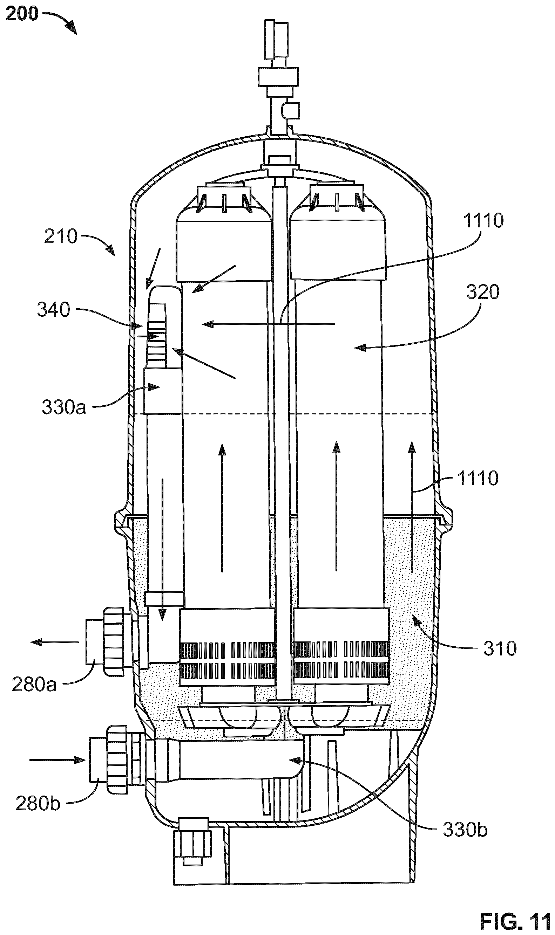

FIGS. 10 and 11 illustrate a fluid flow path through the hybrid filter assembly 200 during a backwash operation or mode. For backwashing, the fluid flow is reversed with respect to the filtration mode as described above. Thus, the particles that have previously been captured by the first filtration stage 310 and the second filtration stage 320 can be removed from the hybrid filter assembly 200 in unison. When the backwash operation is activated, water is pumped or otherwise passed into the hybrid filter assembly 200 through the outlet port 280b and outlet pipe 330b and upwardly through the membrane filtration module 600 via the module outlet 680. As shown by a third fluid flow path 1010, the water flows through the permeate pipe 660, out of the axial openings 670, through the membrane 650, and out of the module outlet 680.

Next, referring to FIG. 11, the water from the module outlet 680 of the second filtration stage 320 is directed back through the first filtration stage 310. As shown by a fourth fluid flow path 1110, the water flows up through the media of the first filtration stage 310, into the diffuser 340, down through the inlet pipe 330a, and out of the filtration vessel 210 via the inlet port 280a. When the first filtration stage 310 is backwashed with sufficient velocity, the media lifts and disperses, allowing the trapped particulates to flow out of the media volume. Thus, particles that were captured by the first and the second stages of filtration are removed during a single pass. By backwashing the hybrid filter assembly 200, the efficiency of the first filtration stage 310 and the second filtration stage 320 can be maintained, thereby extending the life of the hybrid filter assembly 200.

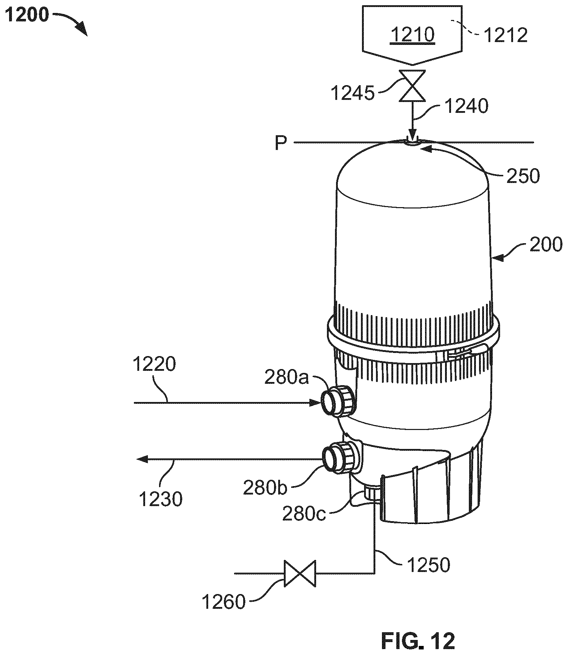

In addition to backwashing, it can be beneficial to chemically clean the hybrid filter assembly 200 because backwashing may not remove or neutralize all contaminants (e.g., organics, viruses, and bacteria) from the hybrid filter assembly 200. In some instances, it can be useful to clean the membrane filtration module 600 with one or more of a disinfectant, a chemical, a chemical agent, a cleaning agent, or chemical cleaning agent such as chlorine, bromine, calcium hypochlorite, trichloroisocyanuric acid, dichloro-s-triazinetrione, other cleaning or bleaching agents, and combinations thereof. For example, the chemical cleaning agent may be selected from the group consisting of a chlorine-containing compound, a chlorine-containing solution, a bromine-containing compound, a bromine-containing solution, a bleaching agent, an acidic solution, and combinations thereof. In some such instances, the chemical cleaning agent may be selected from the group consisting of calcium hypochlorite, trichloroisocyanuric acid, dichloro-s-triazinetrione, and combinations thereof. Accordingly, FIGS. 12-20C and 26A-26C illustrate various instances of chemical cleaning systems for recovering one or more of the membranes of the hybrid filter assemblies disclosed herein.

In use, the hybrid filter assembly 200 may be subjected to one or more backwashing operations and/or one or more chemical cleaning processes described herein. Thus, by recovering the first and second filtration stages 310, 320, the operational efficiency of the hybrid filter assembly 200 may be maintained.

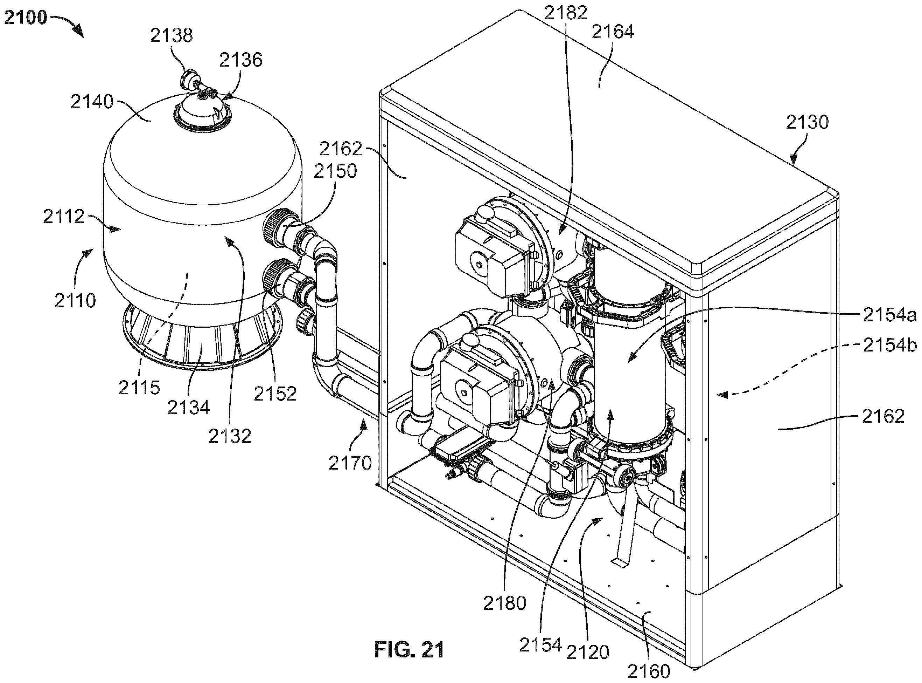

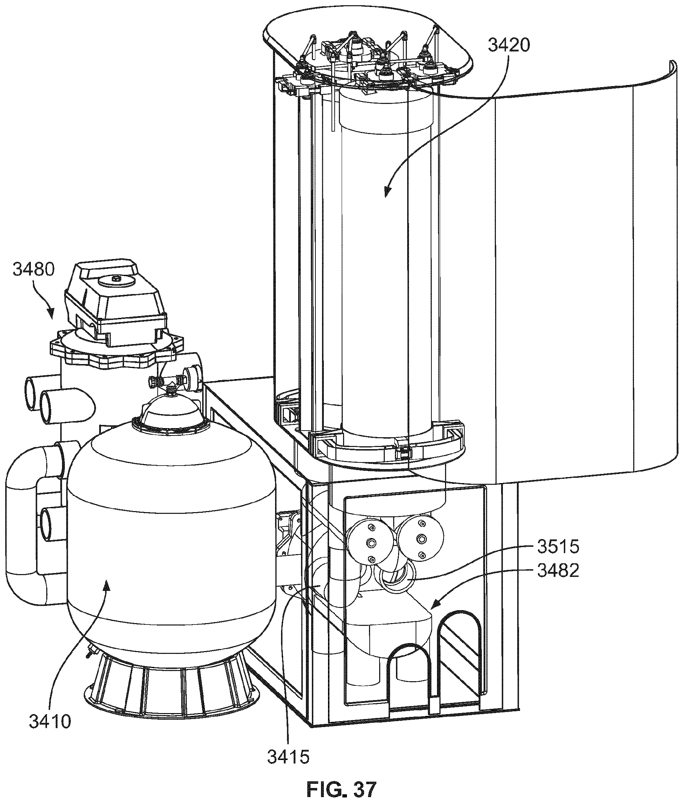

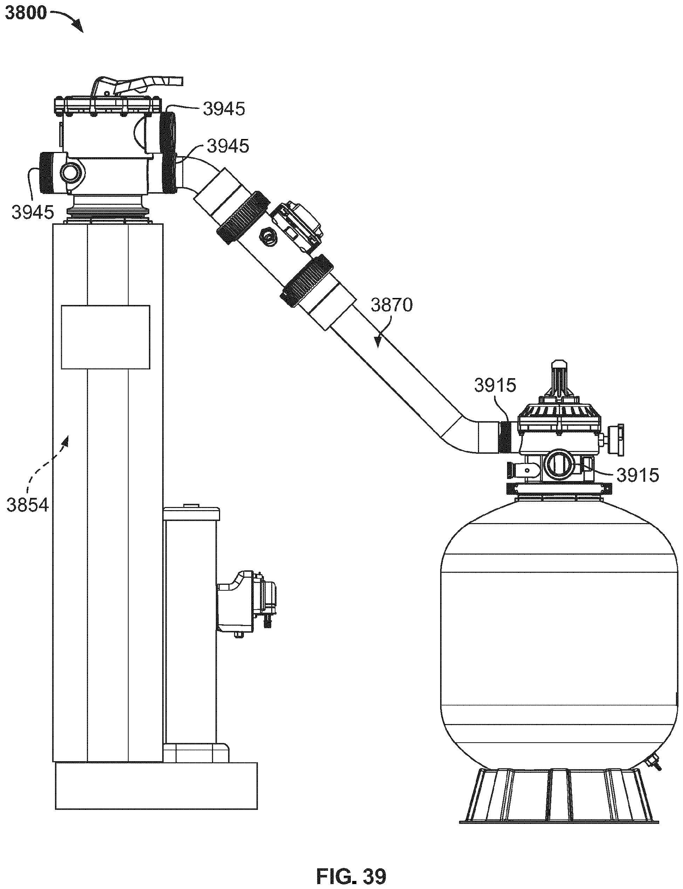

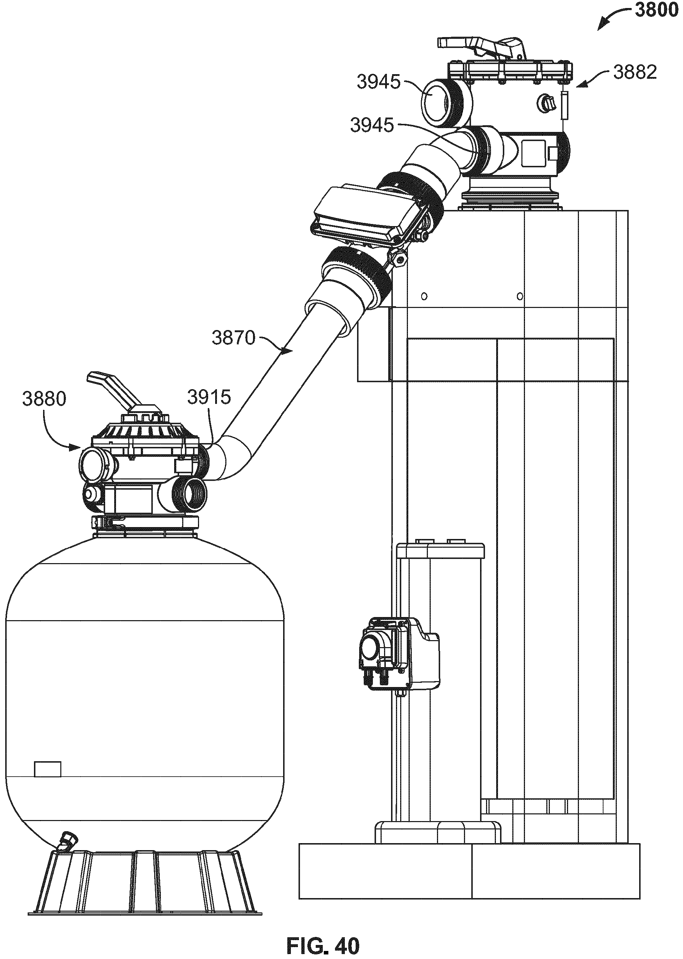

Referring first to FIG. 12, a first embodiment of a chemical cleaning system 1200 is illustrated. The chemical cleaning system 1200 can include a hybrid filter assembly 200 in communication with a chemical feed tank 1210. The chemical feed tank 1210 includes a chemical cleaning agent 1212 therein, which in some embodiments is chlorine. The chemical feed tank 1210 may be a component of the sanitizer 126 or water chemistry regulator 128 of FIG. 1, although the chemical feed tank 1210 may also be provided as a separate, a standalone component. As shown, the hybrid filter assembly is the hybrid filter assembly 200 of FIG. 2. However, it is to be understood that the hybrid filter assembly can be any of the hybrid filter assembly embodiments disclosed herein or variations discussed herein (e.g., the hybrid filter assemblies discussed with reference to FIGS. 21-25, 34-37, and 38-41).

As shown, the chemical cleaning system 1200 includes the chemical feed tank 1210 positioned above and in fluid communication with the hybrid filter assembly 200. The chemical feed tank 1210 includes the chemical cleaning agent 1212 therein and can be in fluid communication with the hybrid filter assembly 200 via a chemical feed line 1240 that ties into or is otherwise in fluid communication with the first port 250. The chemical feed line 1240 may be designed to provide fluid communication between the chemical feed tank 1210 and the hybrid filter assembly 200. For example, the chemical feed line 1240 may be designed to provide fluid communication between the chemical feed tank 1210 and the second filtration stage 320 and, optionally, the chemical feed tank 1210 and the first filtration stage 310. Thus, the contents of the chemical feed tank 1210 (e.g., chemical cleaning agent 1212) can be gravity-fed into the top of the hybrid filter assembly 200. Although the chemical feed tank 1210 is positioned above or directly above the upper housing 220 of the hybrid filter assembly 200, the chemical feed tank 1210 may be positioned in other areas that are above a plane P defined by an upper surface of the upper housing 220. Such placement allows the gravity feed of the chemical cleaning agent 1212 to happen without the use of pumping or other mechanisms.

The chemical feed line 1240 can include a first two-way valve 1245 to control the flow of the chemical cleaning agent 1212 through the chemical feed line 1240. In one embodiment, a drain line 1250 can be coupled to the drain port 280c so that the hybrid filter assembly 200 can be drained for maintenance, in preparation for winterization, prior to cleaning, and/or the waste chemical cleaning agent 1212 can be directed to a waste system. In some instances when the hybrid filter assembly 200 is drained to a waste system, the drain line 1250 can include a second two-way valve 1260 to control the flow out of the drain line 1250. Alternatively, the drain line 1250 and the second two-way valve 1260 may be omitted, and/or the drain port 280c can be opened and the contents of the hybrid filter assembly can be released to the environment (e.g., the ground), a container, or otherwise disposed of.

During the normal filtration operation of the hybrid filter assembly 200, the first two-way valve 1245 can be positioned in a closed configuration so that no chemical cleaning agent 1212 is delivered to the hybrid filter assembly 200.

In use, in a cleaning operation to clean the hybrid filter assembly 200, the first two-way valve 1245 can be opened to establish a flow of the chemical cleaning agent 1212. In some instances, the inlet port 280a and the outlet port 280b can be closed, thereby blocking off the flow of water through an inlet line 1220 and the flow of water through an outlet line 1230 from the aquatic application 100, respectively. By closing the inlet port 280a and the outlet port 280b, the hybrid filter assembly 200 can be isolated from the rest of the system and the second filtration stage 320 can be soaked with the chemical cleaning agent 1212. If needed, the drain port 280c and/or the second two-way valve 1260 can be opened such that the chemical cleaning agent can flow into the hybrid filter assembly 200. In some instances, the bypass operation disclosed herein may be effectuated to allow fluid flow to bypass one or more portions of the hybrid filter assembly 200 during cleaning. The inlet line 1220 can correspond to and/or be the inlet conduit 130 of FIG. 1 or in fluid communication with the inlet conduit 130. The outlet line 1230 can correspond to and/or be one of the discharge conduits 140a-140c of FIG. 1 or in fluid communication with one or more of the discharge conduits 140a-140c.

The amount and frequency with which the chemical cleaning agent 1212 is to be delivered to the hybrid filter assembly 200 is dependent on various factors discussed hereinbelow. In some instances, one or more of the valves 1245, 1260 may be manually opened and/or closed. In some instances, one or more of the valves 1245, 1260 may be opened and/or closed via the central controller 150. In certain cases, one or more of the valves 1245, 1260 may be partially opened and/or partially closed. In other instances, one or more of the valves 1245, 1260 may be fully opened or fully closed.

A benefit of the chemical cleaning system 1200 is that no additional pumps are required to clean the hybrid filter assembly 200 because the chemical cleaning agent 1212 is gravity-fed into the hybrid filter assembly 200. Further, because the chemical cleaning agent 1212 can be directly injected into the top of the hybrid filter assembly 200, the chemical cleaning agent 1212 can be fed directly into the second stage filtration modules (e.g., the four membrane filtration modules 510a-510d of the second filtration stage 320) in the hybrid filter assembly 200. However, the chemical cleaning agent's 1212 feed rate can depend on the size of the chemical feed tank 1210. Therefore, it may be beneficial to modify the chemical cleaning system 1200 to include a chemical dosing pump so that the chemical feed tank 1210 does not have to be elevated above the hybrid filter assembly. In any of the embodiments described herein, the chemical dosing pump may be provided in the form of a standalone pump, may utilize or be the variable speed pump 122 and/or the booster pump 123, may be incorporated into the chemical feed tank 1210, may be incorporated into the hybrid filter assembly 200, or otherwise use an existing pump associated with the aquatic application 100.

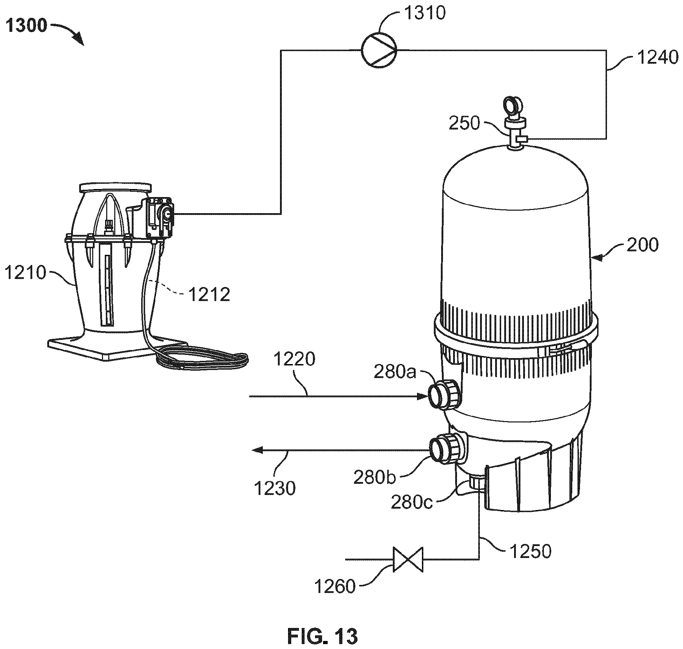

Thus, as shown in FIG. 13, a chemical cleaning system 1300 can include a chemical dosing pump 1310 in conjunction with and in communication with the chemical feed tank 1210 and the chemical cleaning agent 1212 therein. The chemical cleaning system 1300 is similar to the chemical cleaning system 1200 of FIG. 12. However, the chemical feed tank 1210 is fluidly coupled to the hybrid filter assembly 200 via the chemical feed line 1240. The chemical dosing pump 1310 is positioned in the chemical feed line 1240 and provides the driving force to deliver the chemical cleaning agent 1212 to the hybrid filter assembly 200. The chemical dosing pump 1310 can be provided in the form of a peristaltic pump, a diaphragm pump, a motor-drive metering pump, a centrifugal pump, and any other pump known in the art. In some forms, the chemical dosing pump 1310 is a peristaltic pump. Although the chemical dosing pump 1310 is depicted as a separate component, the pump 1310 may be included with and/or integral with the chemical feed tank 1210 or the hybrid filter assembly 200.

The chemical cleaning system 1300 is operated similarly to the chemical cleaning system 1200 of FIG. 12 because the only difference between the chemical cleaning system 1200 and the chemical cleaning system 1300 is the location of the chemical feed tank 1210 and the method of delivering the chemical cleaning agent to the hybrid filter assembly 200 (i.e., gravity-fed vs. pumping). However, the chemical dosing pump 1310 may be able to provide a more precise dosing of the chemical cleaning agent 1212 as compared to the gravity-fed system of FIG. 12. even though the chemical cleaning system 1300 utilizes an additional piece of equipment (i.e., the chemical dosing pump 1310). Accordingly, utilizing one or more pumps already included in the aquatic application 100 of FIG. 1 can be desirable to supply the driving force for delivering the chemical cleaning agent throughout the hybrid filter assembly 200. Thus, several of the below embodiments illustrate systems that utilize one or more pumps already included in the aquatic application 100 of FIG. 1.

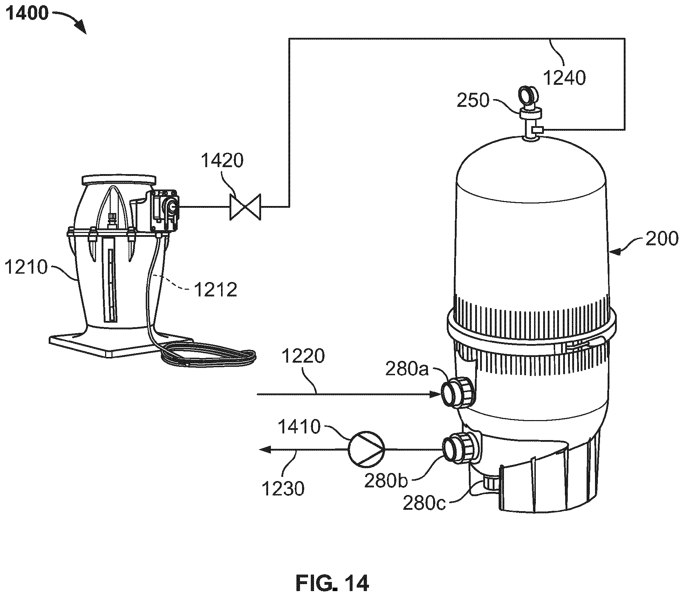

Turning to FIG. 14, a chemical cleaning system 1400 that utilizes a pump 1410 is shown. In some instances, the pump 1410 can be the variable speed pump 122 and/or the booster pump 123 of FIG. 1. Thus, in some instances the chemical feed line 1240 does not include a separate chemical dosing pump. Rather, the pump 1410 acts as the chemical dosing pump because the suction side of the pump 1410 is fluidly coupled to the outlet port 280b of the hybrid filter assembly 200. When the inlet port 280a is closed, the pump 1410 can draw the chemical cleaning agent 1212 into the hybrid filter assembly 200 via the chemical feed line 1240 because a vacuum can be created in the hybrid filter assembly 200. In some embodiments, the chemical feed line 1240 also includes a two-way valve 1420 to control the flow of the chemical cleaning agent 1212. In particular, the valve 1420 can be oriented in a closed orientation during normal operation of the hybrid filter assembly 200 such that the pump 1410 does not pull the chemical cleaning agent 1212 into the hybrid filter assembly 200. In other instances, the chemical feed line 1240 can include a separate pump, such as the pump 1310 shown in FIG. 13, designed to control the feed rate of the chemical cleaning agent 1212. Thus, in those instances, the two-way valve 1420 may be omitted from the chemical cleaning system 1400 because the pump 1410 is not used to draw the chemical cleaning agent into the hybrid filter assembly 200.

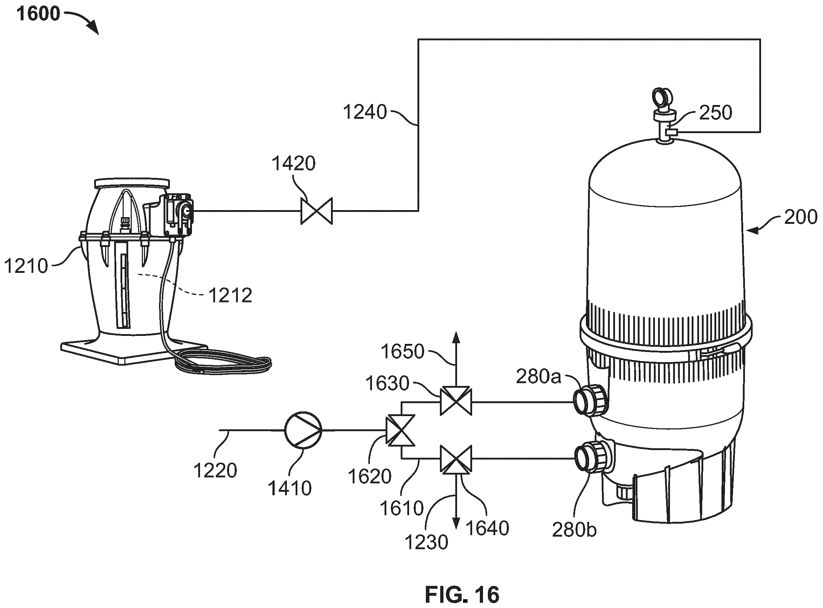

In some instances, the waste chemical cleaning agent (e.g., the chemical cleaning agent 1212 that has passed through the hybrid filter assembly 200 and contacted one or more of the four membrane filtration modules 5 10a-5 10d) can be fed back into the aquatic application 100 via the outlet port 280b. In some instances, the outlet line 1230 can include a waste line. Thus, the waste chemical cleaning agent 1212 can be sent to a waste system (e.g., via the outlet port 280b or the drain port 280c) instead of back to the aquatic application 100. Accordingly, in some embodiments, the chemical cleaning system 1400 can include a backwash valve system for directing fluid flow during a backwash and/or a chemical cleaning procedure. The backwash valve system can include two, three-way valves that are designed to direct fluid flow in/out of the hybrid filter assembly 200, to a waste system, and to/from the aquatic application 100 (see FIGS. 16-18 for a detailed description of one embodiment of a backwash valve system.)

Alternatively, after the chemical cleaning agent 1212 has been drawn into the hybrid filter assembly 200, the pump 1410 can be turned off, the outlet port 280b blocked or otherwise closed, and the drain port 280c can be opened so that the waste chemical cleaning agent can flow to a waste system, a container, or otherwise disposed of. However, this can drain the hybrid filter assembly 200 of fluid. Thus, during a normal chemical cleaning procedure, it can be useful to dispose of the waste chemical cleaning agent 1212 through the outlet line 1230 as described above.

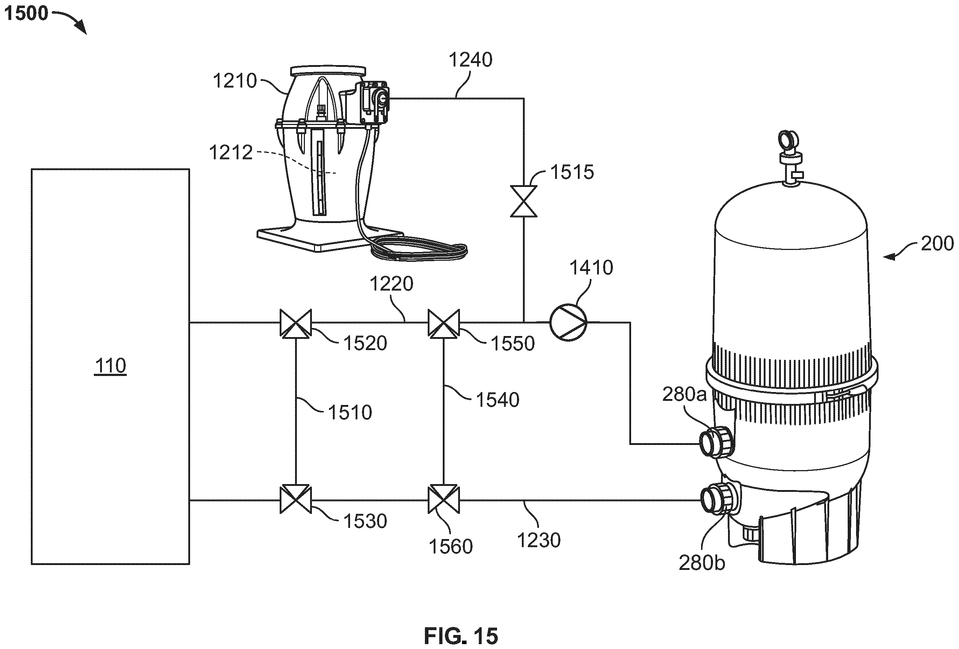

In some instances, it can be desirable to circulate the chemical cleaning agent 1212 throughout the hybrid filter assembly 200 more than one time. Thus, including a bypass line in the system can be beneficial so that the hybrid filter assembly 200 can be more easily isolated during cleaning. Accordingly, FIGS. 15-18 illustrate various embodiments of a chemical cleaning system including a bypass line.

Referring first to FIG. 15, a chemical cleaning system 1500 including a first bypass line 1510 upstream of the pump 1410 is shown. Like the chemical cleaning system 1400 of FIG. 14, the chemical cleaning system 1500 can utilize the pump 1410 to provide the driving force to pull the chemical cleaning agent 1212 from the chemical feed tank 1210 into the hybrid filter assembly 200. As shown in one embodiment, the chemical feed line 1240 ties into the inlet line 1220 upstream of the pump 1410 (i.e., on the suction side of the pump 1410). Thus, the pump 1410 can help mix the chemical cleaning agent 1212 before entering the hybrid filter assembly 200. Further, the chemical cleaning system 1500 can include a two-way valve 1515 in the chemical feed line 1240 upstream of the pump 1410 to control the flow of the chemical cleaning agent 1212 therethrough. Alternatively, in some instances, the chemical feed line 1240 can include a second pump (e.g., the pump 1310 of FIG. 13) that is used to control the flow and dosage of the chemical cleaning agent 1212. In these instances, the chemical feed line 1240 can tie into the inlet line 1220 upstream of the suction side of the pump 1410 or downstream of the pump 1410 discharge.

The first bypass line 1510 can tie into the inlet line 1220 and the outlet line 1230 upstream of the injection point for the chemical cleaning agent (i.e., where the chemical feed line 1240 ties into the inlet line 1220). A first three-way valve 1520 can be provided at the tie-in point between the first bypass line 1510 and the inlet line 1220. A second three-way valve 1530 can be provided at the tie-in point between the first bypass line 1510 and the outlet line 1230. Thus, a flow of water between the swimming pool 110 and the hybrid filter assembly 200 can be blocked or otherwise restricted.

Thus, in some instances, the swimming pool 110 can be circulated but the hybrid filter assembly 200 can be isolated so that maintenance can be performed on the hybrid filter assembly 200. However, in other instances, the chemical cleaning agent 1212 can be circulated through the hybrid filter assembly 200 while circulation in the swimming pool 110 is stopped. This configuration can result in better mixing of the chemical cleaning agent 1212 through the second filtration stage 320. Once the first three-way valve 1520 and the second three-way valve 1530 are opened, and fluid flow to the swimming pool 110 is restored and the chemical cleaning agent 1212 can be dispersed throughout the entire aquatic application 100. However, limiting the amount of the chemical cleaning agent 1212 circulated throughout the aquatic application 100 may be desirable.

Therefore, in some embodiments, the chemical cleaning system 1500 can include a second bypass line 1540. The second bypass line 1540 can include a third three-way valve 1550 provided downstream of the first three-way valve 1530 at the tie-in point between the first bypass line 1510 and the inlet line 1220. A fourth three-way valve 1560 can be provided upstream of the second three-way valve 1530 at the tie-in point between the first bypass line 1510 and the outlet line 1230. Accordingly, the first bypass line 1510 can be designed to allow the aquatic application 100 to be circulated regardless of the operational status of the hybrid filter assembly 200, and the second bypass line 1540 can be designed to allow fluid to circulate through the hybrid filter assembly 200 regardless of the operational status of the aquatic application 100. Thus, the hybrid filter assembly 200 can be cleaned or turned off without disrupting a bather from using the swimming pool 110.

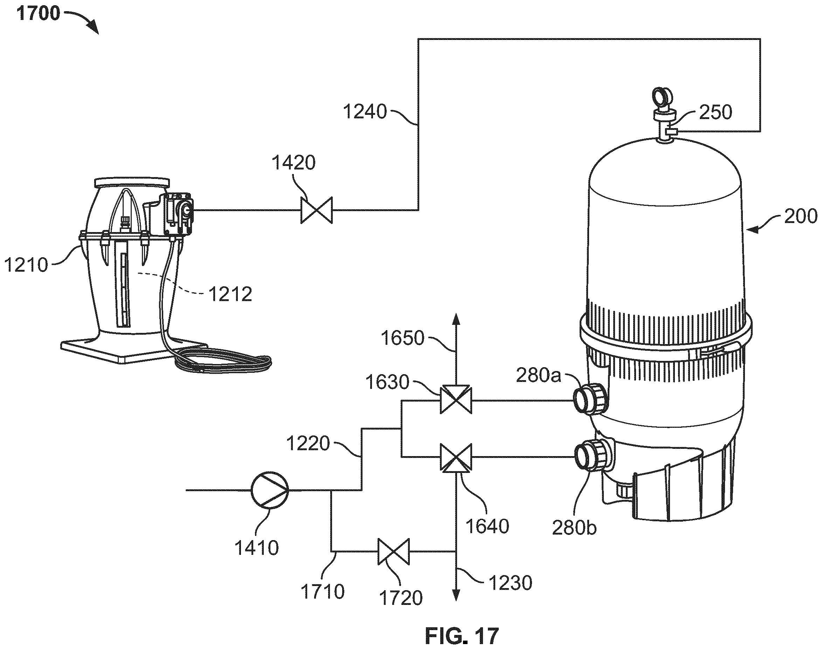

FIGS. 16 and 17 illustrate instances of chemical cleaning systems including a bypass line positioned downstream of the pump 1410. In these instances, the chemical cleaning agent 1212 may be circulated through the hybrid filter assembly 200, but not the remainder of the aquatic application 100 of FIG. 1. Referring first to FIG. 16, a chemical cleaning system 1600 including a bypass line 1610 is shown. The bypass line 1610 can include a first three-way valve 1620 downstream of the pump 1410. The pump 1410 is disposed in the inlet line 1220.

However, like the chemical cleaning system 1400 of FIG. 14, the chemical feed line 1240 is in fluid communication with the first port 250 of the hybrid filter assembly 200. Thus, the chemical feed line 1240 can include the two-way valve 1420 to control the flow of the chemical cleaning agent 1212 so that during the normal filtration operation of the hybrid filter assembly 200, the pump 1410 does not pull the chemical cleaning agent 1212 into the hybrid filter assembly 200. However, during a cleaning operation, the two-way valve 1420 can be oriented in an open position to permit the chemical cleaning agent 1212 to flow through the chemical feed line 1240. Further, the first three-way valve 1620 can be configured in a first position to allow the pump 1410 to draw a vacuum on the hybrid filter assembly 200, thereby drawing the chemical cleaning agent into the hybrid filter assembly 200 via the chemical feed line 1240.

The bypass line 1610 can include a second three-way valve 1630 downstream of the first three-way valve 1620 and upstream of the inlet port 280a. The second three-way valve 1630 can control the fluid into the hybrid filter assembly 200 via the inlet port 280a and/or to a waste line 1650. The waste line 1650 can be in fluid communication with a waste system or drain to the environment. The bypass line 1610 can further include a third three-way valve 1640 upstream of the first three-way valve 1620 and downstream of the outlet port 280b. The third three-way valve 1640 can control the fluid flow out of the hybrid filter assembly 200 via the outlet port 280b and/or to the outlet line 1230 and deliver the fluid from the hybrid filter assembly 200 to the downstream components of the aquatic application 100. Thus, the first, second, and third three-way valves 1620, 1630, and 1640, respectively, can be oriented such that the chemical cleaning agent 1212 can be circulated throughout the hybrid filter assembly 200 without being circulated through the other components of the aquatic application 100. Further, depending on the valve configuration, the at least some or all of the waste chemical cleaning agent can be directed out of the waste line 1650 and/or circulated throughout the aquatic application 100.

Turning to FIG. 17, another embodiment of a chemical cleaning system 1700 including a bypass line 1710 downstream of the pump 1410 is shown. Here, the bypass line 1710 can tie into the inlet line 1220 downstream of the discharge of the pump 1410 and tie into the outlet line 1230 downstream of the third three-way valve 1640. The bypass line 1710 can include a second two-way valve 1720 between the tie-ins for the inlet line 1220 and the outlet line 1230.

In a normal filtration operation, the second two-way valve 1720 can be oriented in a closed position so that there is no fluid flow through the bypass line 1710. Further, the second and third three-way valves 1630 and 1640 can be in a first orientation so that fluid flows from the swimming pool 110 through the hybrid filter assembly 200 via the inlet line 1220 and the inlet port 280a, out through the outlet port 280b, and back to the swimming pool 110 through the outlet line 1230.

In a cleaning operation, the second two-way valve 1720 can be opened, and the orientations of the second and third three-way valves 1630 and 1640 can be changed so that the hybrid filter assembly 200 can be operated in a backwash mode. To draw the chemical cleaning agent 1212 into the hybrid filter assembly 200, the second two-way valve 1720 can be positioned in a closed orientation so that a vacuum can be pulled on the hybrid filter assembly 200, thereby drawing the chemical cleaning agent 1212 into the hybrid filter assembly 200. The second and third three-way valves 1630 and 1640 can be orientated such that a fluid circuit is maintained within the bypass line 1710 but does not circulate through the other components of the aquatic application 100.

Therefore, the chemical cleaning systems 1600 and 1700 function similarly. However, depending on the plumbing already available, the layout of the system, and/or design considerations like the preferred type of valves (i.e., two-way valves vs. three-way valves), choosing one embodiment over the other can be beneficial. However, each of the chemical cleaning systems 1600 and 1700 is arranged such that the chemical feed line 1240 is fluidly coupled to the first port 250 of the hybrid filter assembly 200. As discussed above, it can be beneficial to inject the chemical cleaning agent 1212 upstream of the pump 1410 because the pump 1410 can provide additional mixing of the chemical cleaning agent 1212.

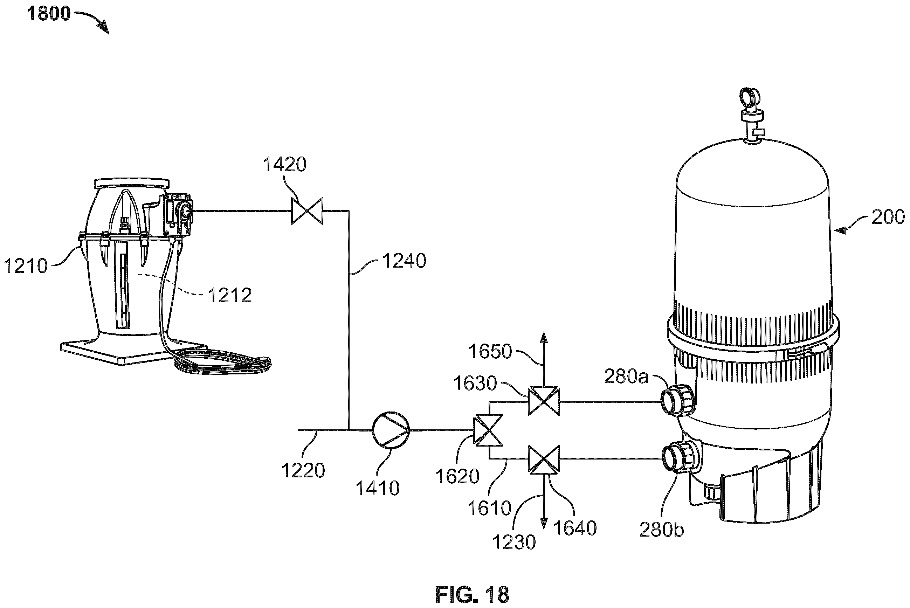

Accordingly, FIG. 18 illustrates a chemical cleaning system 1800 where the chemical feed line 1240 ties into the inlet line 1220 on the suction side of the pump 1410. Thus, the pump 1410 can still provide the driving force for delivering the chemical cleaning agent 1212 to the hybrid filter assembly 200 and also provide mixing of the chemical cleaning agent 1212. However, the remainder of the chemical cleaning system 1800 is similar to that of the chemical cleaning system 1600 of FIG. 16 and functions in a similar manner. Further, this system configuration can be ideal for incorporating other chemical cleaning agent systems, such as a salt chlorine generator cell in place of the chemical feed tank 1210. In instances where a salt chlorine generator is used, the salt chlorine generator can be positioned on the discharge side of the pump 1410. Thus, the chemical cleaning system 1800 can also include one or more isolation valves before and/or after the salt chlorine generator to control the flow of the chemical cleaning agent generated by the salt chlorine generator.

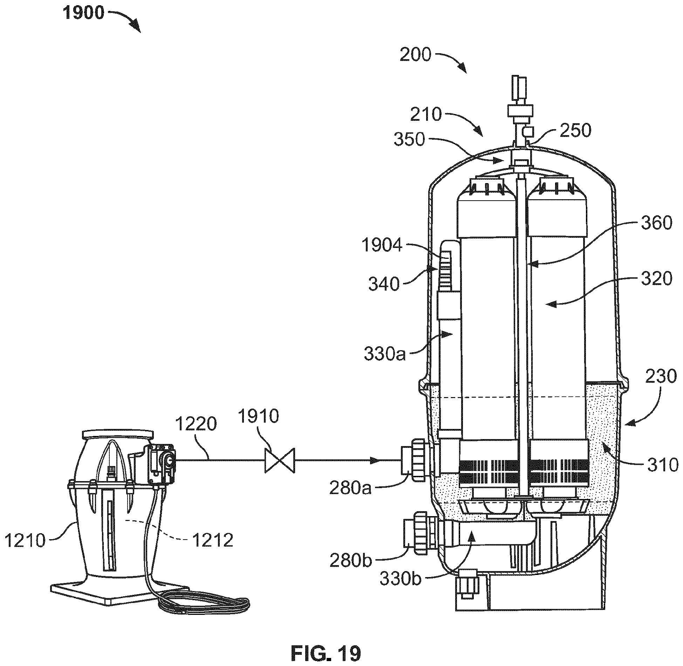

The pump(s) 1310, 1410 described in FIGS. 13-18 may be the variable speed pump 122, the booster pump 123, or a different pump. In addition to the variable speed pump 122 and the booster pump 123, other components of the aquatic application 100 can also be used to provide the driving force to deliver the chemical cleaning agent 1212 to the hybrid filter assembly 200. In some instances, internal components already included in the hybrid filter assembly 200 can be utilized. For example, FIG. 19 discusses two embodiments where an internal venturi pump included in the hybrid filter assembly 200 is utilized.

Referring to FIG. 19, one embodiment of a chemical cleaning system 1900 is illustrated. As shown, the chemical feed tank 1210 can be in fluid communication with the inlet line 1220. In one instance, a venturi pump 1904 included in the diffuser 340 of the hybrid filter assembly 200 can be utilized to draw the chemical cleaning agent 1212 into the system. Referring back to FIGS. 3A and 8A, the diffuser 340 can be connected to the inlet piping 330a to distribute water throughout the filtration vessel 210. As shown in FIG. 19, when the chemical feed tank 1210 is in fluid communication with the inlet port 280a of the hybrid filter assembly 200, the diffuser 340 can create a vacuum effect and draw the chemical cleaning agent 1212 into the hybrid filter assembly 200. Thus, the inlet line 1220 can act as the chemical feed line. Accordingly, in some embodiments, the inlet line 1220 can include a valve 1910 downstream of the chemical feed tank 1210 to control the flow of the chemical cleaning agent 1212. In other instances, a venturi pump can be included in the inlet line 1220 before the hybrid filter assembly 200. Thus, in this instance, the valve 1910 may be omitted because the venturi included in the inlet line 1220 can control the flow and dosage of the chemical cleaning agent 1212.

Alternatively, a venturi included in one or more of the bottom endcap(s) 630 of the second filtration stage 320 can be used to distribute the chemical cleaning agent throughout the hybrid filter assembly 200. As shown best in FIGS. 6A, 6B, and 10, the bottom endcap 630 can include axial slits 640 around the circumference thereof. Fluid can flow into and out of the second filtration stage 320 through the axial slits 640. In some embodiments, the bottom endcap 630 can include a venturi pump or diffuser upstream of the axial slits 640 to help more uniformly disperse the fluid. Thus, similar to the first embodiment described above, this embodiment can use the diffuser in the bottom endcap 630 to distribute the chemical cleaning agent 1212 throughout the hybrid filter assembly 200. A benefit of the chemical cleaning system 1900 is that it does not require additional pumps and may require less piping and valving than alternative embodiments.

The above embodiments illustrate chemical cleaning systems where the chemical cleaning agent 1212 is fed into the hybrid filter assembly 200 through an existing port (e.g., the first port 250 and the inlet port 280a). However, it can be beneficial to have a separate port dedicated to the chemical cleaning agent 1212 injection location because the system can be designed to deliver the chemical cleaning agent more precisely to the second filtration stage 320.

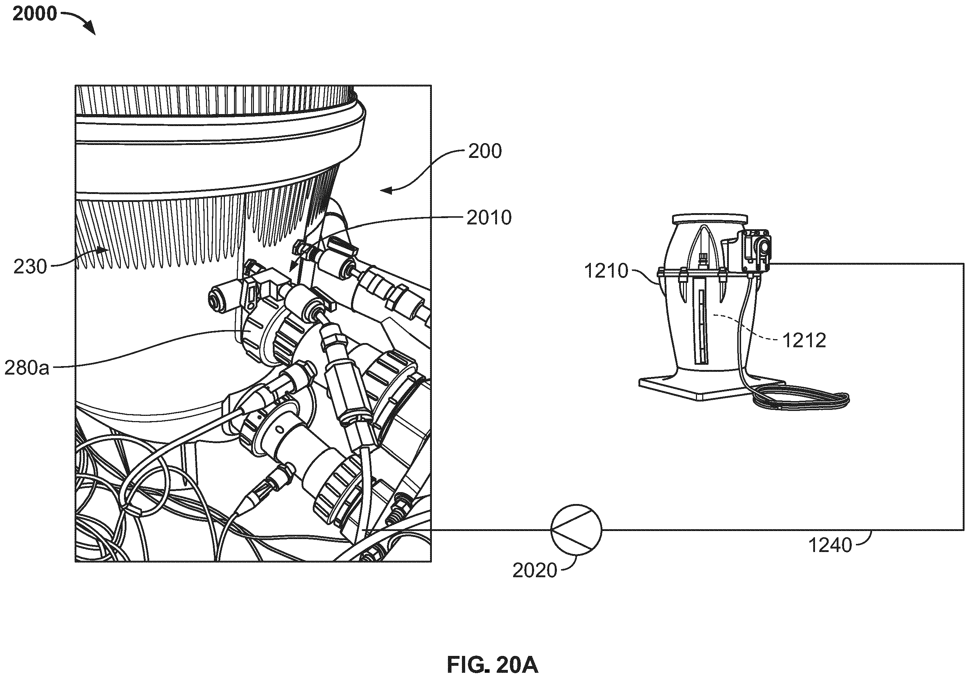

Thus, FIGS. 20A-20C illustrate a chemical cleaning system 2000 including a chemical cleaning agent injection port 2010 extending through the filtration vessel 210. As shown, the chemical cleaning agent injection port 2010 can extend through the lower housing 230 near the inlet port 280a. The chemical feed line 1240 can tie into the chemical cleaning agent injection port 2010. Similar to the chemical cleaning system 1300 of FIG. 13, here the chemical feed line 1240 can include a chemical dosing pump 2020 designed to provide the driving force to deliver the chemical cleaning agent 1212 to the hybrid filter assembly 200. The chemical dosing pump 2020 can be provided in the form of a peristaltic pump, a diaphragm pump, a motor-drive metering pump, a centrifugal pump, and any other pump known in the art. In some forms, the chemical dosing pump 2020 is a peristaltic pump that is designed to dose the chemical cleaning agent 1212 through a time-based pump feed that is controlled by a controller such as the central controller 150 of FIG. 1.

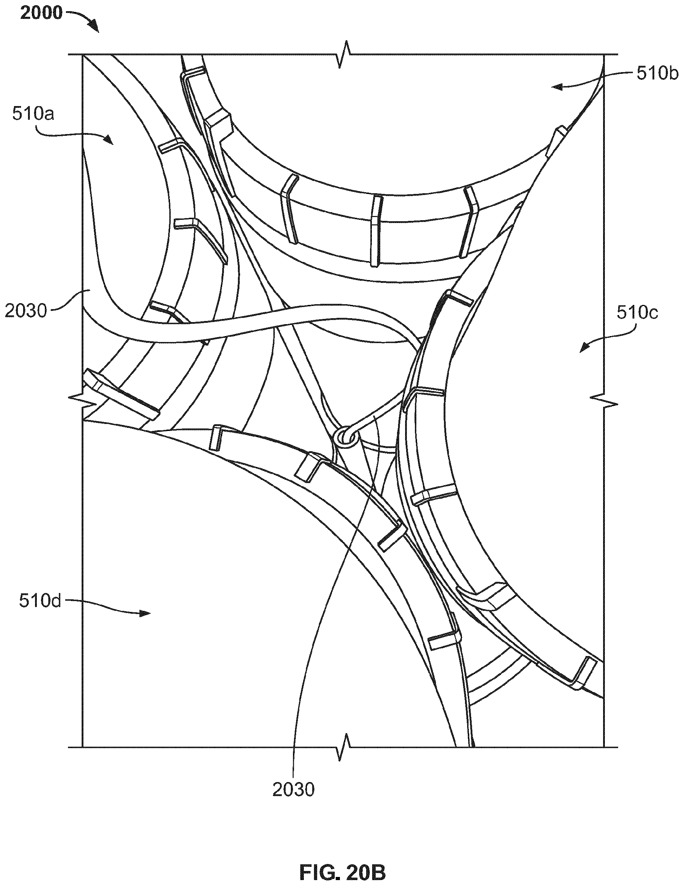

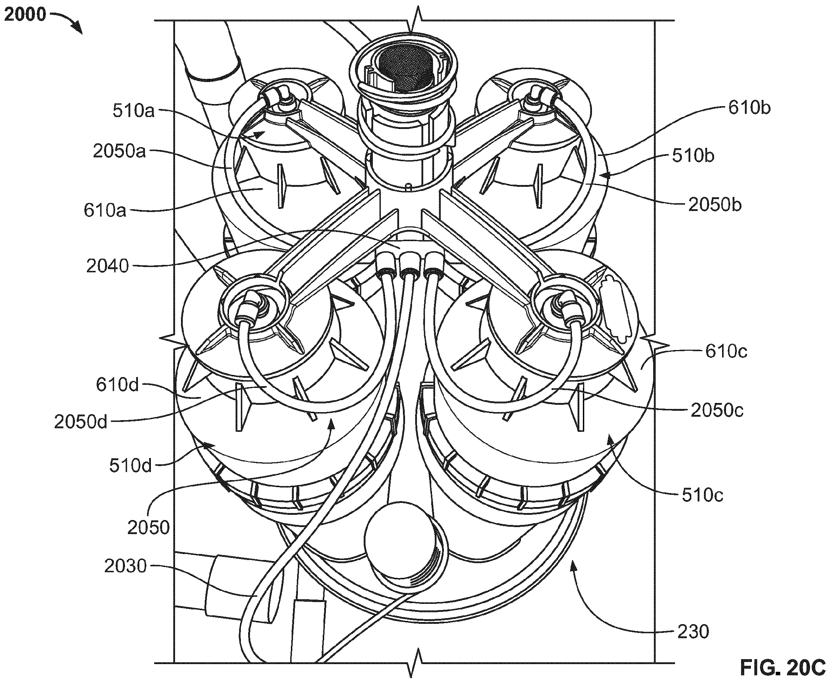

As shown best in FIGS. 20B and 20C, one or more chemical delivery tubes 2030 located within the filtration vessel 210 can be fluidly coupled to the chemical cleaning agent injection port 2010. The one or more chemical delivery tubes 2030 can further be fluidly coupled to the top endcap(s) of the one or more filtration modules. In alternative instances, the one or more chemical delivery tubes 2030 may also be coupled to the bottom endcap(s) of the one or more filtration modules. In some instances, as illustrated in FIG. 20C, the chemical delivery tube 2030 is fluidly coupled to the chemical cleaning agent injection port 2010 and a chemical delivery manifold 2040. A plurality of filtration module chemical delivery tubes 2050 can be fluidly coupled to the chemical delivery manifold 2040 and one or more of the top endcaps 620a-620d of the plurality of membrane filtration modules 510a-510d. As shown, the chemical cleaning system 2000 includes four filtration module chemical delivery tubes 2050a-2050d fluidly coupled to the top endcaps 620a-620d of the membrane filtration modules 510a-510d. A benefit of the chemical delivery tubes 2030 is that less of the chemical cleaning agent 1212 may be needed because the chemical cleaning agent 1212 is delivered directly to the second filtration stage 320.

However, in hybrid filter assemblies including a plurality of filtration modules, the filtration modules can become fouled at different rates. Thus, in some instances, the chemical delivery manifold 2040 and/or each of the filtration module chemical delivery tubes 2050a-2050d can include a valve designed to selectively control the flow of the chemical cleaning agent 1212 to each of the membrane filtration modules 5 10a-5 10d. Thus, the dosage of the chemical cleaning agent 1212 to the individual filtration modules 510a-510d can be independently controlled. Therefore, it can be beneficial to be able to tailor the dosage rate of the chemical cleaning agent 1212 to each individual filtration module 510a-510d.

It is to be understood that the above embodiments are not mutually exclusive. Rather, various components from the above embodiments can be combined with each other or modified as would be understood by one skilled in the art. In addition, the chemical cleaning systems, tanks, agents, and other associated components of the chemical cleaning systems may be used with the hybrid filtration assemblies disclosed herein, including those depicted in FIGS. 21-26C, 34-37, and 38-41.

For example, the chemical cleaning systems 1200-2000 of FIGS. 12-20C, respectively, can include multiple chemical tanks. As discussed above, the chemical cleaning tank can contain chlorine, bromine, calcium hypochlorite, trichloroisocyanuric acid, dichloro-s-triazinetrione, and other bleaching agents. However, it can be beneficial to clean the hybrid filter assemblies with more than one cleaning agent. Thus, it may be desirable to include more than one chemical tank so that the hybrid filter assembly can be dosed with multiple cleaning agents. Accordingly, a multi-chemical tank system can include additional piping and valves to control the flow of the chemical cleaning agent from each chemical tank.

It is to be understood that in some instances, the chemical cleaning systems disclosed herein with reference to FIGS. 12-20C and 26A-26C may be configured to provide a metered amount or a specified dose of the chemical cleaning agent 1212 to the components of the hybrid filter assemblies described herein. Providing the metered amount or the specified dose may be accomplished using not only the valves, actuators, and pumps described herein, but also other similar dosing mechanisms not specifically recited discussed.

In another example, the chemical cleaning systems 1200-2000 of FIGS. 12-20C, respectively, each depict various valving systems. However, each system can contain more or fewer valves depending on the embodiment. Further, the chemical cleaning agent injection port 2010 of FIG. 20A can be utilized with any of the embodiments depicted in FIGS. 1-26C and 34-41. Similarly, a valve system including a first three-way valve positioned on the inlet line 1220 and a second three-way valve positioned on the outlet line 1230 (e.g., valves 1520 and 1530 of FIG. 15 and/or valves 1630 and 1640 of FIG. 16-18) can be utilized with any embodiments of the hybrid filter assemblies and/or chemical cleaning systems contemplated herein.

As yet another example, in some instances, the chemical feed tank 1210 may not be provided in the chemical cleaning systems described herein with reference to FIGS. 12-20C and 26A-26C. In such instances, a container, a vessel, a receptacle, and/or another storage unit may be used to retain the chemical cleaning agent 1212. In other instances, the sanitizer 126 and/or the water chemistry regulator 128 may retain the chemical cleaning agent 1212 utilized in any of the chemical cleaning systems depicted in FIGS. 12-20C and 26A-26C. In yet other instances, the chemical cleaning systems depicted in FIGS. 12-20C and 26A-26C may be placed in fluid communication with another source of the chemical cleaning agent via the chemical feed line.

Turning to FIG. 21, another instance of a hybrid filter assembly 2100 is provided. In certain instances, the hybrid filter assembly 2100 may be the filter 124 of FIG. 1. The hybrid filter assembly 2100 may be imparted with substantially the same functionality and many of the same design characteristics as the hybrid filter assembly 200. In addition, components having similar names and/or numbers in the hybrid filter assembly 2100 may have similar structure and function as the components described with reference to the hybrid filter assembly 200. For example, the hybrid filter assembly 2100, like the hybrid filter assembly 200, may be provided in the form of a first filtration stage (e.g., a depth filtration stage) and a second filtration stage (e.g., a membrane filtration stage). As an additional example, like the hybrid filter assembly 200, the hybrid filter assembly 2100 may be operated in a normal operational mode (e.g., a filtration mode), a chemical cleaning mode, a backwash mode, and/or a bypass mode. However, unlike the hybrid filter assembly 200, the first filtration stage and the second filtration stage may be provided in separate housings, vessels, and/or enclosures in the hybrid filter assembly 2100.

More particularly, as shown in FIG. 21, the hybrid filter assembly 2100 may be provided in the form of a first filtration stage 2110 including a vessel 2112 that retains a granular media 2115, and a second filtration stage 2120 substantially surrounded by an enclosure 2130. The first filtration stage 2110 and the second filtration stage 2120 may be fluidly coupled to each other and the aquatic application 100 of FIG. 1. In addition, when the hybrid filter assembly 2100 operates in a filtration mode, water from the swimming pool 110 is first provided to the first filtration stage 2110 before being provided to the second filtration stage 2120.

The first filtration stage 2110 may be positioned proximate or adjacent to the enclosure 2130 and may act as a "prefilter" for the second filtration stage 2120, although in some instances the vessel 2112 of the first filtration stage 2110 may be positioned within the enclosure 2130. In some forms, the first filtration stage 2110 operates using depth filtration by capturing debris within the volume of a porous media (e.g., the granular media 2115). Specifically, as fluid flows through the porous media, the depth and pore size of the media create a physical barrier in which particulates get trapped in the media itself.

The vessel 2112 of the first filtration stage 2110 may be provided in the form of a substantially cylindrical body 2132 positioned on and/or coupled to a base 2134, although the vessel 2112 may also be provided in other shapes and forms (e.g., an ovular body, a body formed as a prism, a body that is not coupled to a base). In some instances, the cylindrical body 2132 and/or other components of the first filtration stage 2110 may be composed of polymeric materials, such as thermoplastics, which can have inherent resistance to common environmental and chemical stressors. A valve 2136 including a pressure gauge 2138 may be coupled to a top portion 2140 of the cylindrical body 2132, although the valve 2136 may also be positioned elsewhere on the vessel 2112. The valve 2136 may be designed to help deaerate the vessel 2112 and the pressure gauge 2138 may monitor the interior pressure (and thus the performance of) the vessel 2112.

In certain instances, as illustrated in FIG. 21, the vessel 2112 may be provided in the form of a side-mount filter having an inflow port 2150 and an outflow port 2152. Each of the ports 2150, 2152 may extend partially or fully through a body of the vessel 2112. During normal operation of the hybrid filter assembly 2100, fluid may flow into the vessel 2112 through the inflow port 2150 and to a diffuser assembly within the vessel 2112. The diffuser assembly may be positioned proximate or adjacent to the top portion 2140 of the vessel 2112. After exiting the diffuser assembly, the fluid may then flow downwardly through the vessel 2112 and through the granular media 2115. The fluid may exit the vessel 2112 after flowing through one or more sieves that are in fluid communication with the outflow port 2152. In certain cases, the sieves may be designed to help retain the granular media 2115 within the vessel 2112. Once provided to the outflow port 2152, the fluid may exit the first filtration stage 2110.

In certain instances, the vessel 2112 may be provided as a top-mount filter in which the inflow port 2150 and the outflow port 2152 are positioned on a manifold coupled to the top portion 2140 of the vessel. In some such instances, each of the valve 2136, pressure gauge 2138, the inflow port 2150, and the outflow port 2152 may be provided in and/or associated with the same manifold.

Referring again to FIG. 21, the vessel 2112 of the first filtration stage 2110 may be designed to retain a granular media 2115. The granular media 2115 of the first filtration stage 2110 may be provided in the form of sand, crushed glass, an activated media such as carbon, pea gravel, activated glass media, and/or other suitable filtration media. For example, the granular media 2115 may be provided in the form an activated filter media (e.g., an activated glass media including metal oxide catalysts) imparted with self-sterilization or antimicrobial properties. In such instances, the activated filter media may prevent bacteria-induced efficacy degradation of the first filtration stage 2110 (e.g., filter media mud-balling, coagulation, and channeling). In addition, in certain instances, the activated filter media (e.g., an activated glass media) may be imparted with a negative charge to facilitate the adsorption of sub-micron particulates and dissolved organic molecules such that the aforementioned particulates and molecules are retained in the granular media 2115.

In some instances, the granular media 2115 is designed to capture particles larger than those intended to be captured by the second filtration stage 2120. For example, the granular media 2115 of the first filtration stage 2110 may be designed to capture particles larger than about 10 microns (or larger than 10 microns) in size. By capturing large particles in the first filtration stage 2110, the second filtration stage 2120 can work more effectively because it may not become clogged with larger particles.

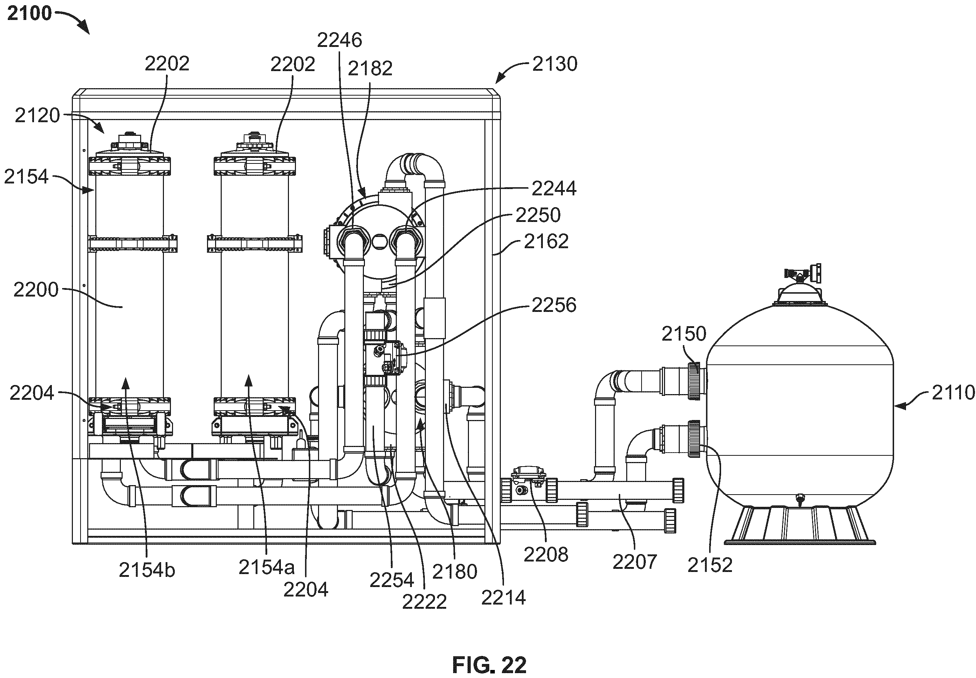

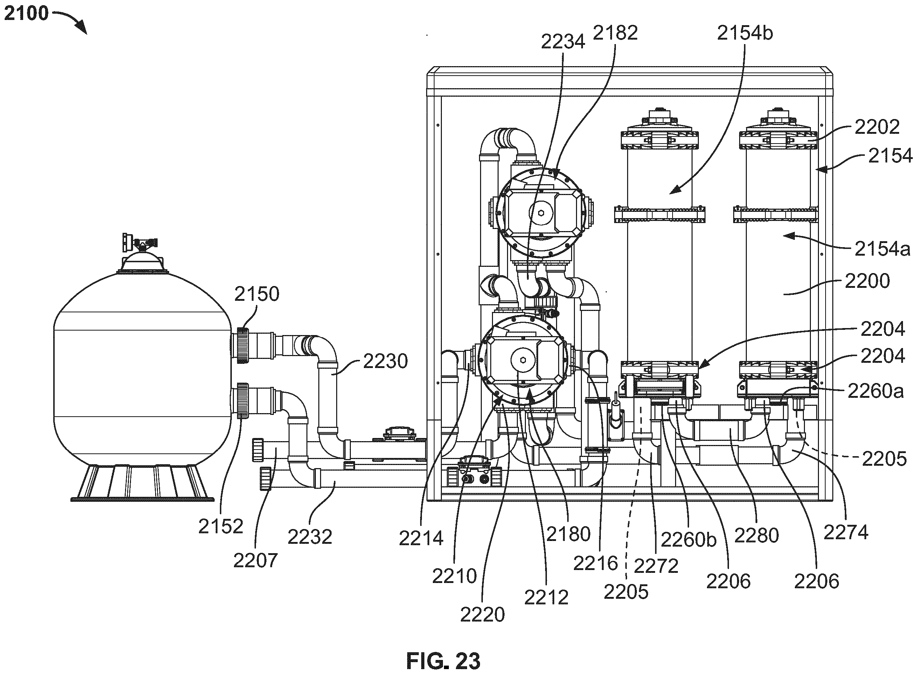

Referring again to FIG. 21, when the hybrid filter assembly 2100 operates in the filtration mode, the second filtration stage 2120 may be downstream of the first filtration stage 2110. As best illustrated in FIGS. 22 and 23, the second filtration stage 2120 can include one or more filtration modules that are disposed in an upright orientation. The filtration modules can be provided in the form of a membrane filter, such as a reverse osmosis filter, nanofiltration filter, ultrafiltration filter, or microfiltration filter. In one instance, the membrane filter is a hollow-fiber membrane filter. Membrane filtration captures contaminants in a physical barrier via a size-exclusion mechanism consistent with sand, diatomaceous earth, and pleated cartridge pool and spa filter media. However, membrane filtration is capable of capturing particles above about 0.005 microns in size (or 0.005 microns in size), particularly in the range of about 0.02 microns to about 0.2 microns (or 0.02 microns to 0.2 microns).

In certain instances, the second filtration stage 2120 may be provided in the form of one or more membrane filtration modules 2154. For example, the second filtration stage 2120 may include between one to eight membrane filtration modules 2154, although the number of membrane filtration modules 2154 may be even greater than eight. As provided in the illustrated instance of FIG. 21, the second filtration stage 2120 comprises a first membrane filtration module 2154a and a second membrane filtration module 2154b. As yet another example, the second filtration stage 2120 may include four or six membrane filtration modules 2154.

In some instances, the hybrid filter assembly 2100 may include multiple membrane filtration modules of the same type and capacity, including nominal pore size, diameter, and practical length, which are co-located within the enclosure 2130 in a parallel array. In other instances, the hybrid filter assembly 2100 may include a single membrane filtration module or multiple membrane filtration modules of different types, lengths, and/or diameters, employed in series and/or in parallel. For example, the first membrane filtration module 2154a may be provided as a reverse osmosis filter and the second membrane filtration module 2154b may be provided as an ultrafiltration filter. As an additional example, the first membrane filtration module 2154a and the second membrane filtration module 2154b may be arranged in series. As yet another example, as provided in FIG. 21, the first membrane filtration module 2154a and the second membrane filtration module 2154b may be arranged in parallel.

In one instance, the one or more membrane filtration modules 2154 are defined by an asymmetric hollow fiber membrane produced from selective homopolymers or copolymers (e.g., polyethersulfone (PES) and polyvinylpyrrolidone (PVP) polymers). In other instances, the hollow fiber membranes may be formed of a blend of polymers such as, by way of example, a blend of polyethersulfone (PES) and polyvinylpyrrolidone (PVP) polymers or a blend of PES, PEV, and polyethylene glycol (PEG) polymers. In some instances, the hollow fibers deposited in each of the membrane filtration modules of the one or more membrane filtration modules 2154 may be imparted with a surface area of at least about 20 square meters to at least about 30 square meters, although the surface area of the hollow fibers deposited within each of the membrane filtration modules of the one or more membrane filtration modules 2154 may be less or greater than these values. In other embodiments, the one or more membrane filtration modules 2154 can be provided in a symmetric type with uniform pore structure, or as a layer deposited onto a structural core. In some instances, the one or more membrane filtration modules 2154 can be produced from silicon carbide ceramic having a controlled crystalline or lattice structure.

Referring again to FIG. 21, in some forms, the membrane filtration modules 2154 are ultrafiltration membranes imparted with a nominal pore size of about 10 to about 50 nanometers, or more particularly, about 20 to about 40 nanometers, and imparted with a lumen diameter of about 0.25 millimeters to about 2.5 millimeters. In other forms, the membrane filtration modules 2154 are ultrafiltration membranes imparted with a nominal pore size of 10 to 50 nanometers, or more particularly, 20 to 40 nanometers, and imparted with a lumen diameter of 0.25 millimeters to 2.5 millimeters. The ultrafiltration membranes may be operated in a dead-end, inside-out deposition mode, and fouling recovery is achieved through backwashing via flux reversal. In other embodiments, the one or more membrane filtration modules 2154 may be provided in the form of microfiltration membranes imparted with a nominal pore size of about 50 nanometers to about 1,500 nanometers (or 50 nanometers to 1,500 nanometers). In yet other embodiments, the membrane filtration module 600 may have fibers imparted with a lumen diameter of about 0.3 millimeters to about 3 millimeters (or 0.3 millimeters to 3 millimeters). Depending on the embodiment, the lumen diameter of the fibers may be imparted with a value of about 0.5 millimeters to about 2 millimeters (or 0.5 millimeters to about 2 millimeters). In some instances, the membrane filtration modules 2154 may be imparted with a molecular weight cut-off (MWCO) value of about 150 kilodaltons to about 200 kilodaltons (or 150 kilodaltons to 200 kilodaltons), although the MWCU value may be less than or greater than these values. In other instances, the one or more membrane filtration modules 2154 may be imparted with a MWCU value such that the one or more membrane filtration modules 2154 retain silt, bacteria, viruses, and/or other particles that reduce water clarity while still allowing water to permeate across the membrane. In some embodiments, the one or more membrane filtration modules 2154 can be operated using an outside-in deposition mode, and/or the fibers of the membrane filtration module 600 can be provided in a randomized arrangement or by including helically wound fibers.

In some instances, the one or more membrane filtration modules 2154 may be imparted with high chemical resistance. In some such instances, the one or more membrane filtration modules 2154 may be imparted with acid-resistant, base-resistant, and/or chlorine-resistant properties. For example, the one or more membrane filtration modules 2154 may not substantially degrade under high- or low-pH conditions, e.g., the one or more membrane filtration modules 2154 may be designed to operate without significant degradation when the water supplied to the one or more membrane filtration modules 2154 are imparted with a pH value of between about 2 to about 12 (or between 2 to 12). As an additional example, the one or more membrane filtration modules 2154 may be designed to operate without significant degradation when the fluid supplied to the one or more membrane filtration modules 2154 are imparted with a free chlorine value of no more than about 500 milligrams per liter (or no more than 500 milligrams per liter). In certain instances, the one or more membrane filtration modules 2154 may be designed to operate without significant degradation when the water supplied to the one or more membrane filtration modules 2154 are imparted with a pH value somewhat lower or higher than the values recited herein. In certain other instances, the one or more membrane filtration modules 2154 may be designed to operate without significant degradation when the water supplied to the one or more membrane filtration modules 2154 are imparted with a free chlorine value even greater than the values recited herein. Thus, in certain cases, the one or more membrane filtration modules 2154 may be designed to resist the chemicals provided to the one or more membrane filtration modules 2154 during the chemical cleaning process.

In certain instances, the one or more membrane filtration modules 2154 can be provided in the form of the membrane filtration modules 510a-510d described with reference to FIGS. 5A and 5B. In some instances, the one or more membrane filtration modules 2154 can be provided in the form of any of the membrane filtration modules 600 described with reference to FIGS. 6A, 6B, 7A, 7B, 9, and 10. In other instances, the one or more membrane filtration modules 2154 may be provided as the Pentair X-Flow XF53 Membrane Element manufactured by X-Flow B.V. of the Netherlands. In yet other instances, the one or more membrane filtration modules 2154 may be provided in other forms.

During normal operation of the hybrid filter assembly 2100, fluid may flow through the one or more membrane filtration modules 2154 in the manner described with reference to the membrane filtration module 600 and FIG. 9. During backwashing of the hybrid filter assembly 2100, fluid may flow through the one or more membrane filtration modules 2154 in the manner described with reference to the membrane filtration module 600 and FIG. 10. During chemical cleaning of the second filtration stage 2120, water may flow through the one or more membrane filtration modules 2154 in either of the manners described with reference to the membrane filtration module 600 and FIGS. 9 and 10. However, fluid may flow through the one or more membrane filtration modules 2154 in other manners than those described herein.

Referring again to FIG. 21, in certain instances, the enclosure 2130 may be provided in the form of a base 2160, at least two sidewalls 2162 extending upwardly and away from the base 2160, and a top portion 2164 coupling the sidewalls 2162 together. One or more of the base 2160, the sidewalls 2162, and the top portion 2164 may include apertures extending therethrough. The apertures may receive the plumbing of the aquatic application 100 (see FIG. 1), including any plumbing that places the first filtration stage 2110 and the second filtration stage 2120 into fluid communication. However, in other instances, the apertures may not be provided, and the plumbing may instead be routed around the base 2160, the sidewalls 2162, and the top portion 2164. In the illustrated instance of the enclosure 2130, the two sidewalls 2162 are positioned on opposite ends of the base 2160, although in other instances the sidewalls 2162 may be otherwise arranged. In addition, while the illustrated instance of the enclosure 2130 only includes two sidewalls 2162, the enclosure 2130 may be provided with only a single sidewall 2162 or additional sidewalls 2162. For example, the enclosure 2130 may include four sidewalls 2162 extending between the base 2160 and the top portion 2164 such that the second filtration stage 2120 is substantially enclosed within the enclosure 2130. In certain instances, the enclosure 2130 may not be provided. In some such instances, the components of the second filtration stage 2120 may be supported by scaffolding and/or the plumbing of the aquatic application 100.

Referring again to FIG. 21, conduits 2170 and various valves (e.g., a first automated control valve 2180 and a second automated control valve 2182) may fluidly couple components of the hybrid filter assembly 2100 (e.g., fluidly couple the first and second filtration stages 2110, 2120) and/or control a flow of fluid through the hybrid filter assembly 2100. In some instances, the first automated control valve 2180 and/or the second automated control valve 2182 may be actuated by the central controller 150 of FIG. 1 to, alone or in tandem, function as a backwash valve system designed to direct fluid flow during a backwash and/or a chemical cleaning procedure. In certain instances, the first automated control valve 2180 and/or the second automated control valve 2182 may be actuated by the central controller 150 to, alone or in tandem, direct fluid flow in/out of the hybrid filter assembly 2100, to a waste system, and to/from the aquatic application 100 (see FIG. 1).

FIGS. 22-25 provide additional views of the hybrid filter assembly 2100 such that the arrangement and/or additional components of the first filtration stage 2110, the second filtration stage 2120, the conduits 2170, the first and second automated control valves 2180, 2182, and other items of the hybrid filter assembly 2100 are further illustrated. Turning first to FIGS. 22 and 23, the one or more membrane filtration modules 2154 are depicted. In certain instances, the one or more membrane filtration modules 2154 are provided in the form of an enclosed assembly comprising a substantially cylindrical housing 2200, a top endcap 2202, and a bottom endcap 2204, although the one or more membrane filtration modules 2154 may also be provided in other shapes and forms. Together, the cylindrical housing 2200, the top endcap 2202, and the bottom endcap 2204 may define an interior of the one or more membrane filtration modules 2154 within which membrane filters may be retained. The top endcap 2202 may be a "blind" endcap designed to separate a feed stream provided to the one or more membrane filtration modules 2154 and a permeate stream generated by the one or more membrane filtration modules 2154. In some instances, the top endcap 2202 can include a plug (not shown) designed to form a substantially watertight seal to prevent water from entering or leaving one or more membrane filtration modules 2154.

The bottom endcap 2204 may couple to a bottom portion of the one or more membrane filtration modules 2154 and help create a watertight seal in the one or more filtration modules. Optionally, the bottom endcap 2204 may further include flow-distributing and/or combining features designed as manifolding elements that circumscribe and extend partially or fully through the bottom endcap 2204. In some instances, the bottom endcap 2204 can include a plug (not shown) designed to form a substantially watertight seal to prevent water from entering or leaving one or more membrane filtration modules 2154 of the second filtration stage 2120.

The bottom endcap 2204 may be integrally formed with or coupled to one or more ports designed to fluidly couple the one or more membrane filtration modules 2154 to the other components of the hybrid filter assembly 2100 and/or the swimming pool 110. For example, the bottom endcap 2204 may include at least one membrane inlet port 2205 and at least one membrane outlet port 2206 that each extend partially or completely through the bottom endcap 2204. When the hybrid filter assembly 2100 is operating in a filtration mode, fluid may be provided to each of the one or more membrane filtration modules 2154 via the membrane inlet port 2205 and water may exit each of the one or more membrane filtration modules 2154 via the membrane outlet port 2206.

As stated previously, the hybrid filter assembly 2100 may be provided with the conduits 2170 which fluidly couple the components of the hybrid filter assembly 2100. While one instance of the arrangement of the conduits 2170 of the hybrid filter assembly 2100 are described with reference to FIGS. 22-25, other arrangements of the conduits 2170 may be provided.

To begin, as best shown in FIGS. 22 and 23, the conduits 2170 may include an inlet conduit 2207 designed to provide fluid communication between the aquatic application 100 of FIG. 1 and the hybrid filter assembly 2100. When the hybrid filter assembly 2100 operates in the filtration mode, the inlet conduit 2207 may supply water from the swimming pool 110 of the aquatic application 100 (see FIG. 1) to the hybrid filter assembly 2100. In certain instances, the hybrid filter assembly 2100 may be fluidly coupled to one or more pumps (e.g., the variable speed pump 122 of FIG. 1, the booster pump 123 of FIG. 1, or another standalone pump) designed to provide a driving force for the pool water to flow through the inlet conduit 2207 and the hybrid filter assembly 2100. In certain instances, the inlet conduit 2207 may be coupled to or otherwise provided with a first sensor 2208. The first sensor 2208 may be designed to measure or monitor one or more parameters (e.g., the pressure, flow rate, temperature, pH, turbidity, free chlorine content, an ORP value, and/or other parameters) of the water flowing through the inlet conduit 2207.

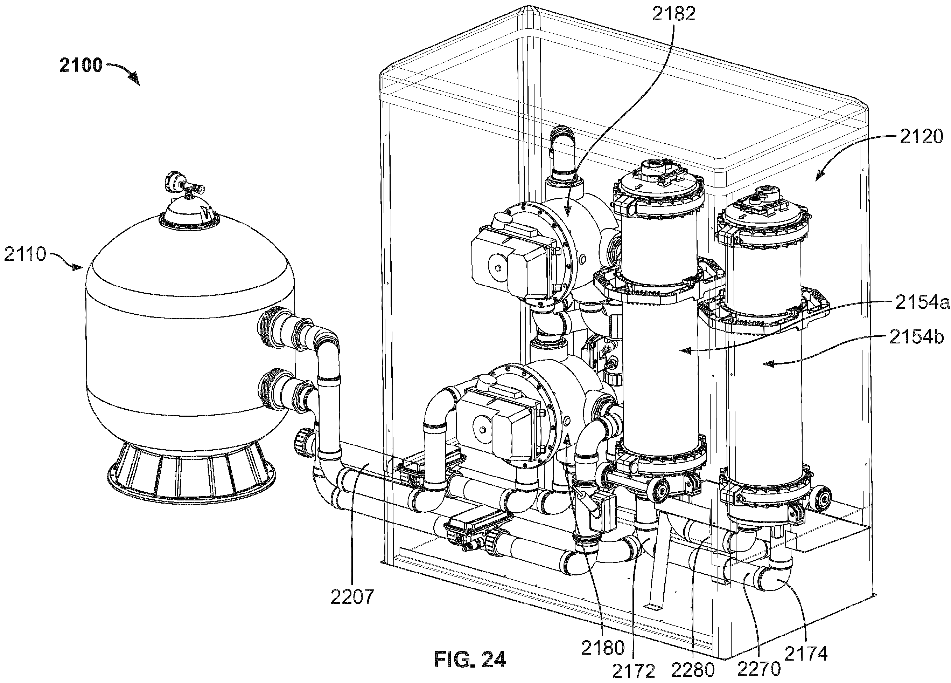

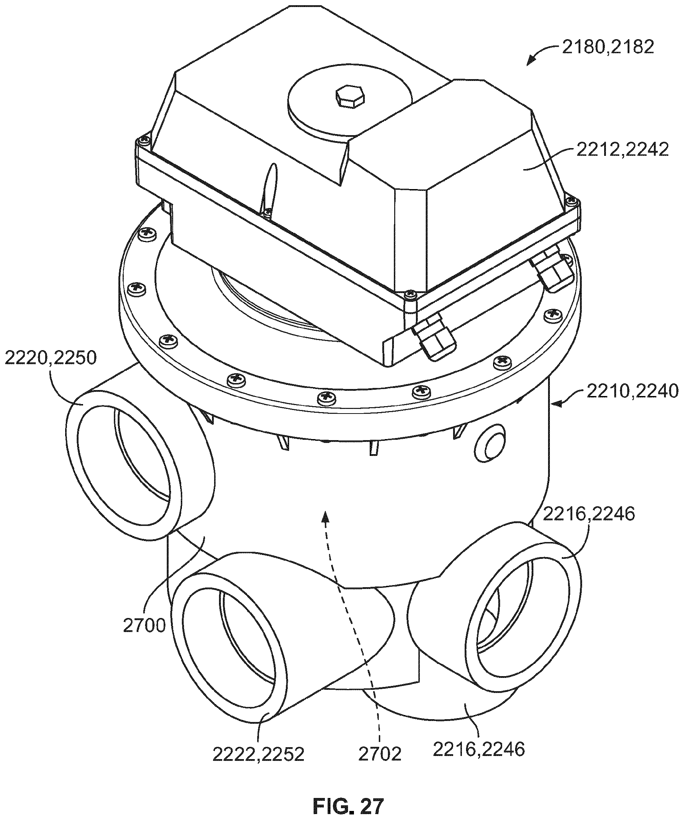

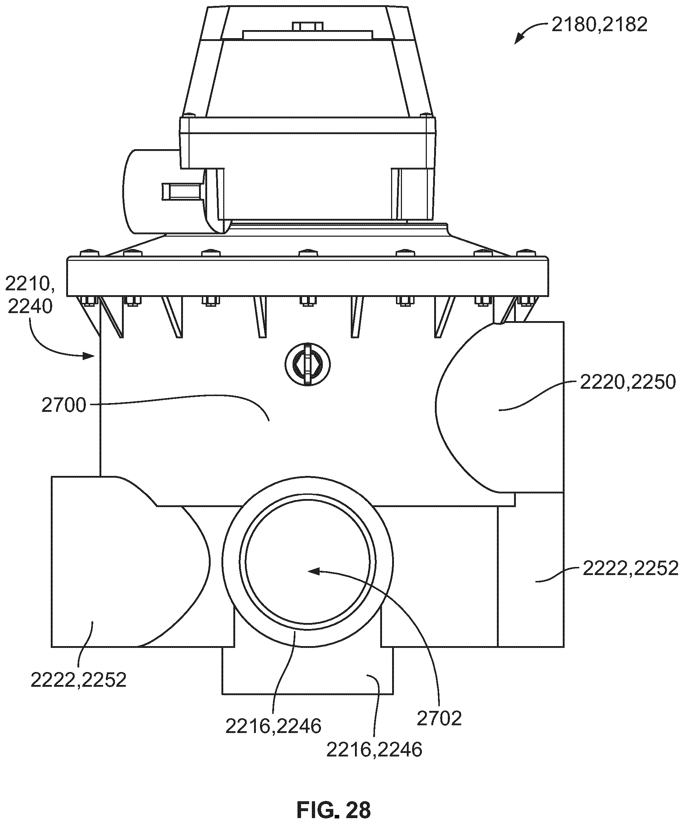

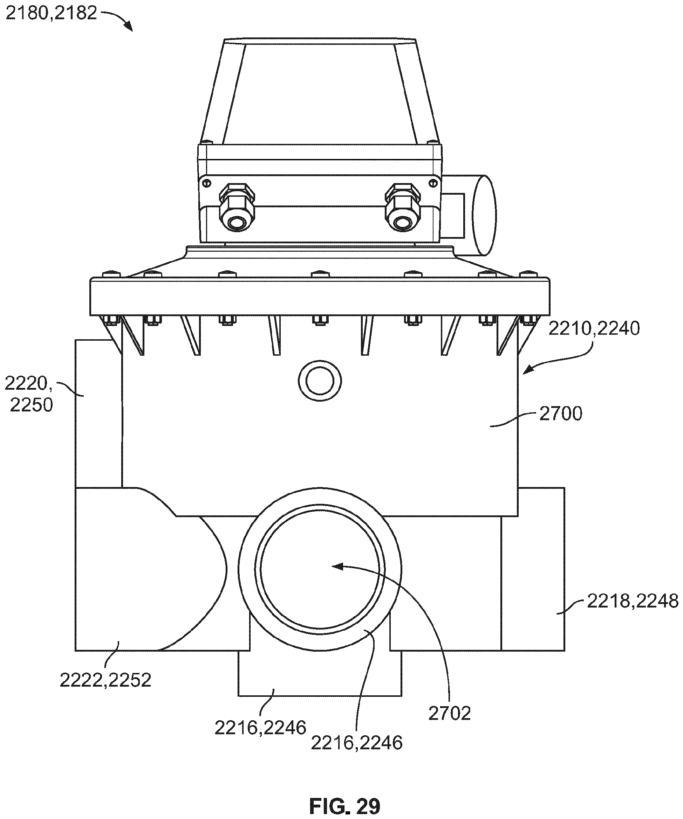

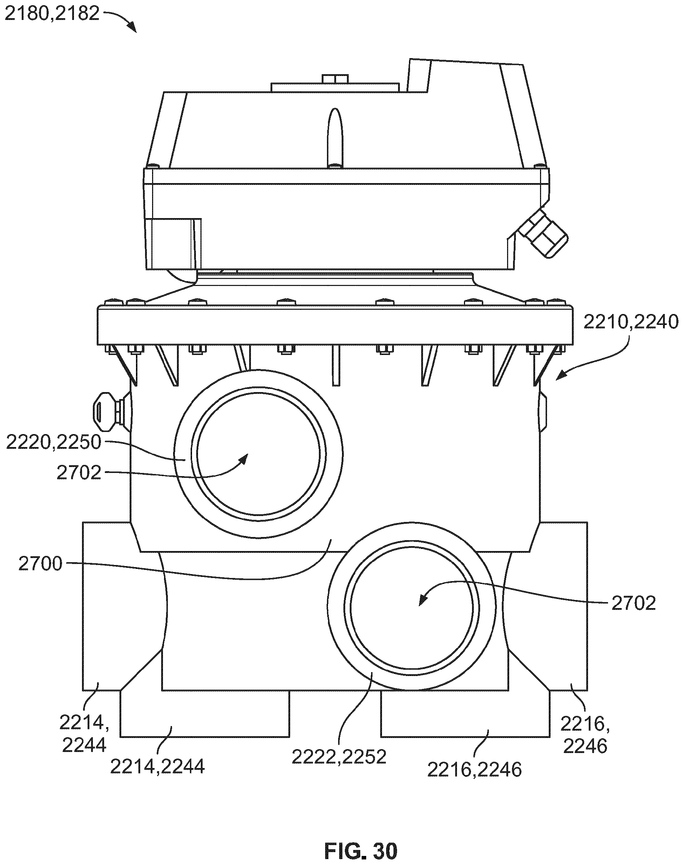

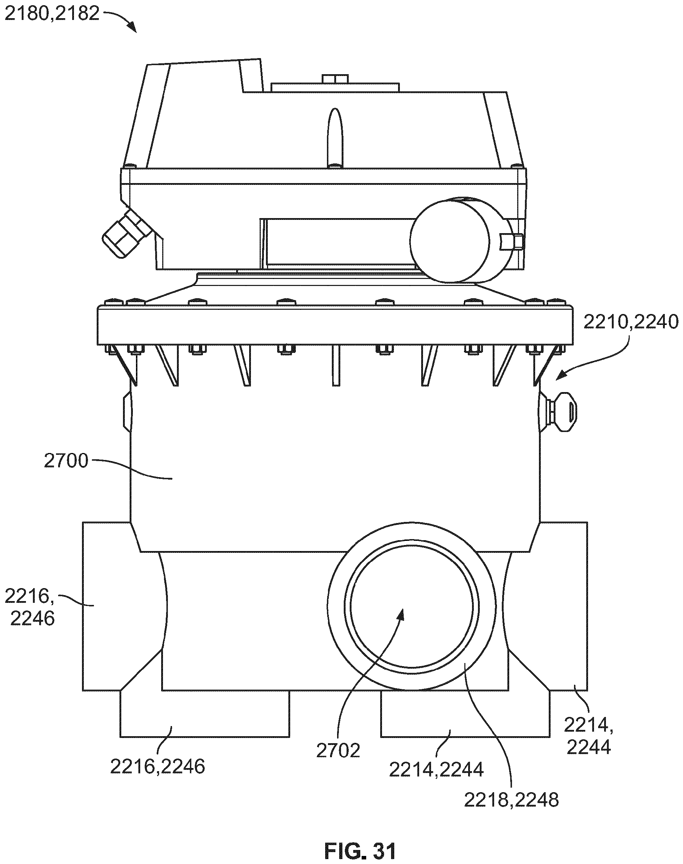

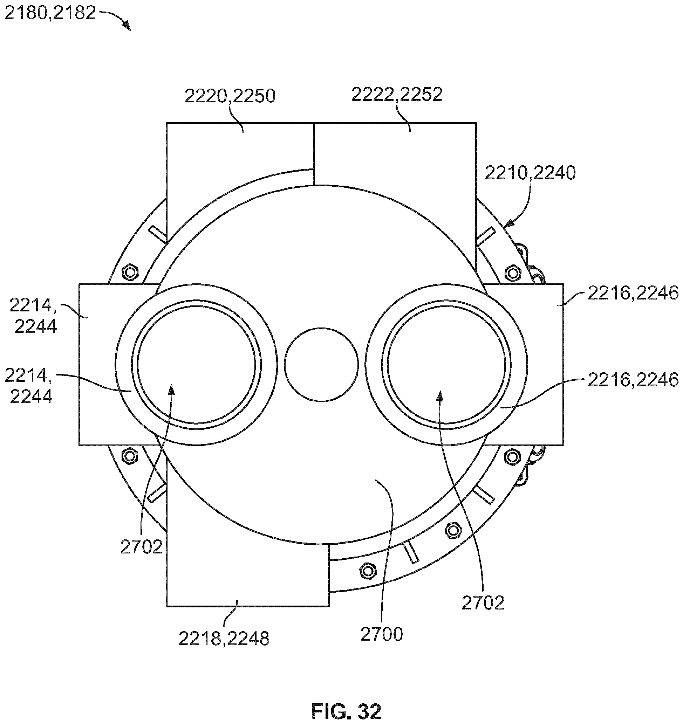

As best illustrated in FIG. 22, the inlet conduit 2207 may extend from the environment outside of the enclosure 2130, through an aperture of the sidewall 2162, and into an interior volume of the enclosure 2130. As best illustrated in FIGS. 23 and 24, the inlet conduit 2207 may couple to the first automated control valve 2180. The first automated control valve 2180 may be provided in the form of a manifold 2210, an actuator 2212, the manifold 2210 including one or more of an influent port 2214, an effluent port 2216, a waste port 2218, a pump port 2220, and a return port 2222 (see FIGS. 27-32). In certain instances, the manifold 2210 may be provided with more than one of each of the ports 2214, 2216, 2218, 2220, 2222 (e.g., the manifold 2210 may include two or more influent ports 2214 and/or two or more effluent ports 2216). An example first automated control valve 2180 is described in detail with reference to FIGS. 27-32.

Referring again to FIG. 23, in certain instances, the inlet conduit 2207 may be coupled to the pump port 2220 of the first automated control valve 2180. During normal operation of the hybrid filter assembly 2100, pool water may flow through the pump port 2220, into the manifold 2210, and to the influent port 2214. The influent port 2214 may be fluidly coupled to a first filtration stage inlet conduit 2230, which in turn is fluidly coupled to the inflow port 2150. After processing within the vessel 2112 of the first filtration stage 2110, the pool water may then flow out of the vessel 2112 through the outflow port 2152 and to the first filtration stage outlet conduit 2232 before being provided to the effluent port 2216 of the first automated control valve 2180.

Similar to the first automated control valve 2180, the second automated control valve 2182 may be provided in the form of a manifold 2240, an actuator 2242, the manifold 2240 including one or more of an influent port 2244, an effluent port 2246, a waste port 2248, a pump port 2250, and a return port 2252 (see FIGS. 27-32). In certain instances, the manifold 2210 may be provided with more than one of each of the ports 2244, 2246, 2248, 2250, 2252 (e.g., the manifold 2210 may include two or more influent ports 2244 and/or two or more effluent ports 2246). In certain instances, the first and second automated control valves 2180, 2182 may be substantially identical in structure. In other instances, the first and second automated control valves 2180, 2182 may not be substantially identical (e.g., the first and second automated control valves 2180, 2182 may be provided with different numbers of ports, different types of ports, and/or manifolds that are differently shaped and sized). An example second automated control valve 2182 is described in detail with reference to FIGS. 27-32.

Referring again to FIG. 22, the first automated control valve 2180 may be fluidly coupled to the second automated control valve 2182 via a valve conduit 2254. In certain instances, the valve conduit 2254 may be coupled to the return port 2222 of the first automated control valve 2180 and the pump port 2250 of the second automated control valve 2182. When the hybrid filter assembly 2100 is operating in the filtration mode, water may flow from the first automated control valve 2180 and to the second automated control valve 2182 via the valve conduit 2254. In some instances, the valve conduit 2234 may be coupled to or otherwise provided with a second sensor 2256. The second sensor 2256 may be designed to measure or monitor the one or more parameters (e.g., the pressure, flow rate, temperature, pH, turbidity, free chlorine content, an ORP value, and/or other parameters) of the water flowing through the valve conduit 2254.

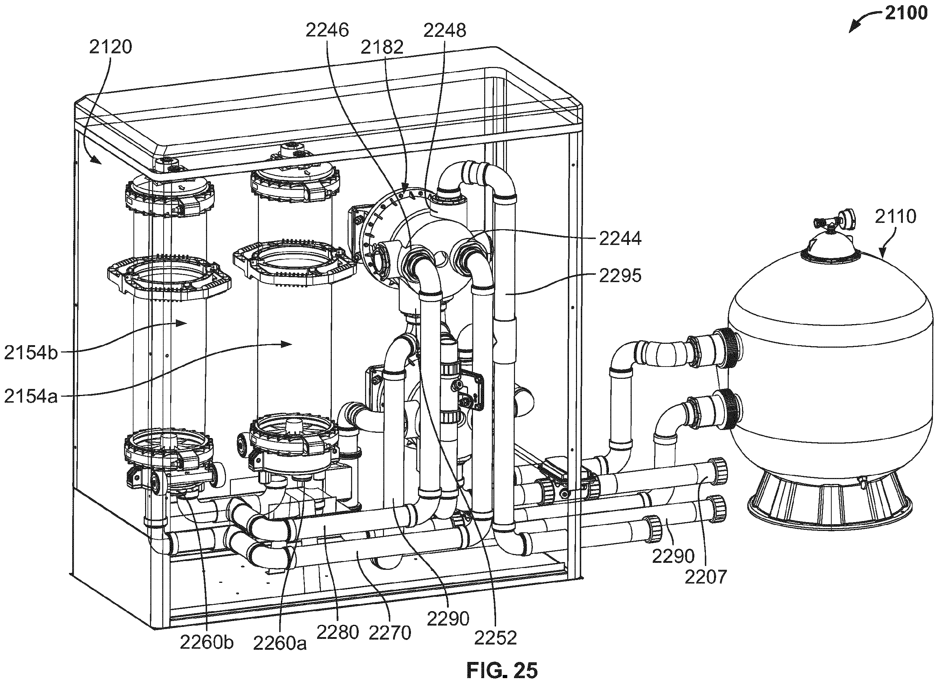

As best illustrated in FIGS. 23 and 25, the influent port 2244 of the second automated control valve 2182 may be fluidly coupled to a module inlet port 2260 of the one or more membrane filtration modules 2154. In certain instances, the module inlet port 2260 may be provided on the bottom endcap 2204 of each of the membrane filtration modules of the one or more membrane filtration modules 2154, although the module inlet port 2260 may be positioned elsewhere in the one or more membrane filtration modules 2154 (e.g., on the top endcap 2202). In certain instances, the module inlet port 2260 may be provided as one of the one or more membrane inlet ports 2205 previously described with reference to FIG. 23. In some cases, the influent port 2244 of the second automated control valve 2182 may be fluidly coupled to a first module inlet port 2260a provided on the bottom endcap 2204 of the first membrane filtration module 2154a and a second module inlet port 2260b provided on the bottom endcap 2204 of the second membrane filtration module 2154b. During normal operation of the hybrid filter assembly 2100, fluid from the first filtration stage 2110 may be provided to each of the one or more membrane filtration modules 2154 of the second filtration stage 2120 via the module inlet port 2260.

As shown in FIGS. 24 and 25, the second automated control valve 2182 may be fluidly coupled to the second filtration stage 2120 via a second filtration stage inlet conduit 2270. In certain instances, the second filtration stage inlet conduit 2270 may be coupled to each of the inlet ports 2260 provided with the one or more membrane filtration modules 2154 and to the influent port 2244. During normal operation of the hybrid filter assembly 2100, fluid from the second automated control valve 2182 may flow to the second filtration stage 2120 (i.e., each of the one or more membrane filtration modules 2154) via the second filtration stage inlet conduit 2270. As shown in FIGS. 23 and 24, the second filtration stage inlet conduit 2270 may include a first branch 2272 and a second branch 2274. The first branch 2272 may couple to the first module inlet port 2260a of the first membrane filtration module 2154a and the second branch 2274 may couple to the second module inlet port 2260b of the second membrane filtration module 2154b. Thus, each of the first and second membrane filtration modules 2154a, 2154b may receive a portion of the fluid from the first filtration stage 2110 and process the fluid in parallel.

During normal operation of the hybrid filter assembly 2100, after the fluid has been processed in the one or more membrane filtration modules 2154, the fluid may then be returned to the swimming pool 110 of FIG. 1. In some instances, the fluid may exit the second filtration stage 2120 via a second filtration stage outlet conduit 2280 coupled to each the one or more membrane filtration modules 2154 (see, e.g., FIG. 25).

In certain instances, during normal operation of the hybrid filter assembly 2100, the fluid may be provided to one or both of the first and second automated control valves 2180, 2182 before the fluid exits the hybrid filter assembly 2100. For example, as best illustrated in FIG. 25, the second filtration stage outlet conduit 2280 may be coupled to the effluent port 2246 of the second automated control valve 2182. Once the fluid is provided to the second automated control valve 2182 from the second filtration stage 2120, fluid may exit the second automated control valve 2182 via a system outlet conduit 2290 coupled to the return port 2252 of the second automated control valve 2182. The system outlet conduit 2290 may be designed to provide fluid communication between the aquatic application 100 of FIG. 1 and the hybrid filter assembly 2100. In other instances, during normal operation of the hybrid filter assembly 2100, the fluid may exit the hybrid filter assembly 2100 without flowing through the first and second automated control valves 2180, 2182. For example, in such instances, the system outlet conduit 2290 may be directly coupled to the one or more membrane filtration modules 2154 to allow fluid to exit the hybrid filter assembly 2100 without passing through the first and second automated control valves 2180, 2182.

The hybrid filter assembly 2100 may also operate in a backwash mode. For backwashing, fluid flow through the hybrid filter assembly 2100 is reversed with respect to the filtration mode described above. Thus, the particles that have previously been captured by the one or more membrane filtration modules 2154 can be removed from the hybrid filter assembly 2100 in unison. Further, in some instances, the particles that have previously been captured by the first filtration stage 2110 may also be removed from the hybrid filter assembly 2100.

In certain instances, both the first filtration stage 2110 and the second filtration stage 2120 may be backwashed when the backwash mode is initiated by the central controller 150 of FIG. 1. When the backwash mode is activated, water is pumped or otherwise passed into the hybrid filter assembly 2100 through the system outlet conduit 2290 and upwardly through the one or more membrane filtration modules 2154. Next, after the one or more membrane filtration modules 2154 have been backwashed, fluid from the one or more membrane filtration modules 2154 may be directed back to the first filtration stage 2110. When the first filtration stage 2110 is backwashed with sufficient velocity, the granular media 2115 may lift and disperse, allowing the trapped particulates to flow out of the volume of the granular media 2115. Thus, particles that were captured by the first and second filtration stages 2110, 2120 may be removed during a single pass of the backwashing fluid. More particularly, in some instances, after passing through the second filtration stage 2120, fluid may be directed to the influent port 2244 of the second automated control valve 2182. Then, fluid may flow to the pump port 2250 of the second automated control valve 2182 before being provided to the return port 2222 of the first automated control valve 2180 via the valve conduit 2254. Once the fluid has been provided to the first automated control valve 2180, the backwashing fluid may flow through the first filtration stage outlet conduit 2232 and to the first filtration stage 2110. Then, the backwashing fluid may flow through the first filtration stage inlet conduit 2230 and to the first automated control valve 2180. The backwashing fluid (and any particles retained therein) may exit the hybrid filter assembly 2100 by passing through the inlet conduit 2207 and/or by flowing through the valve conduit 2254 and to the second automated control valve 2182 before being provided to a waste conduit 2295. Thus, in certain instances, the backwashing fluid may be provided to a waste system in fluid communication with the waste conduit 2295.

In other instances, only one of the first filtration stage 2110 and the second filtration stage 2120 may be backwashed when the central controller 150 initiates the backwash mode. For example, only the first filtration stage 2110 may be backwashed when the backwash mode is initiated. To begin, the central controller 150 may direct actuation of the first automated control valve 2180 and/or the second automated control valve 2182 to fluidly isolate the first filtration stage 2110 from the second filtration stage 2120. After the first and second filtration stages are fluidly isolated, the backwashing fluid may be provided to either of the first filtration stage 2110 or the second filtration stage 2120. In some instances, the actuation of the first and second automated control valves 2180, 2182 may occur at substantially the same time or after the backwashing fluid is provided to one of the first filtration stage 2110 or the second filtration stage 2120.

By backwashing the hybrid filter assembly 2100, the efficiency of the first filtration stage 2110 and the second filtration stage 2120 can be maintained, thereby extending the life of the hybrid filter assembly 2100. Furthermore, other methods or processes for backwashing the first filtration stage 2110 and/or the second filtration stage 2120 may be utilized with the hybrid filter assembly 2100 than those described herein.

In addition to backwashing, it can be beneficial to chemically clean the hybrid filter assembly 2100 because backwashing may not remove or neutralize all contaminants (e.g., organics, viruses, and bacteria) within the hybrid filter assembly 2100. In some instances, it can be useful to clean the one or more membrane filtration modules 2154 with one or more of a disinfectant or chemical cleaning agent such as chlorine, bromine, calcium hypochlorite, trichloroisocyanuric acid, dichloro-s-triazinetrione, other cleaning or bleaching agents, and applicable combinations thereof. Like the hybrid filter assembly 200, the hybrid filter assembly 2100 may be in communication with a chemical cleaning tank designed to dispense a chemical cleaning agent to the first filtration stage 2110 and/or the second filtration stage 2120 of the hybrid filter assembly 2100. In certain instances, the hybrid filter assembly 2100 may be coupled to and used with any of the chemical cleaning systems described with reference to FIGS. 12-20C.

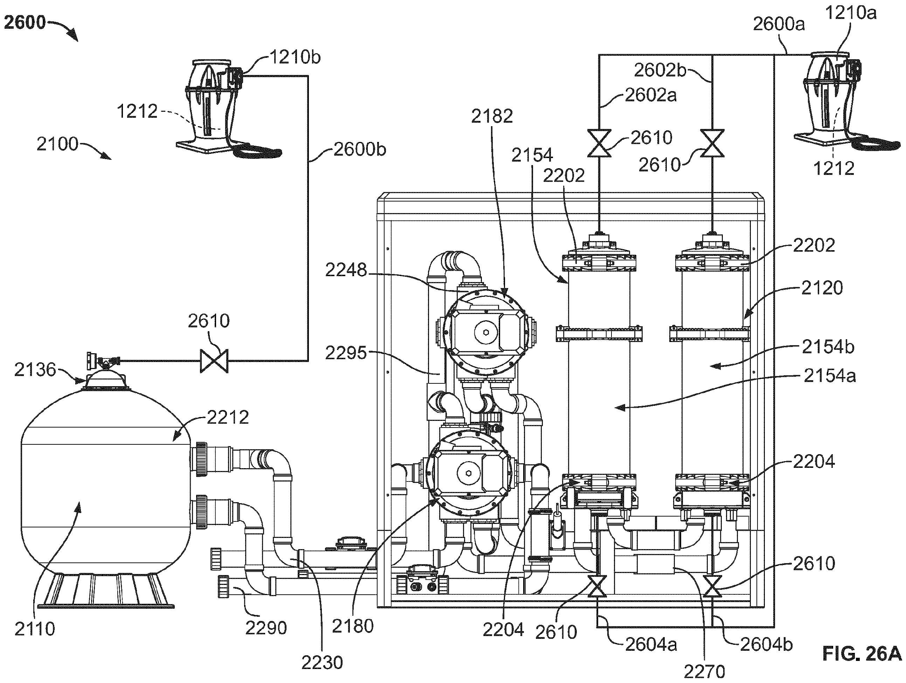

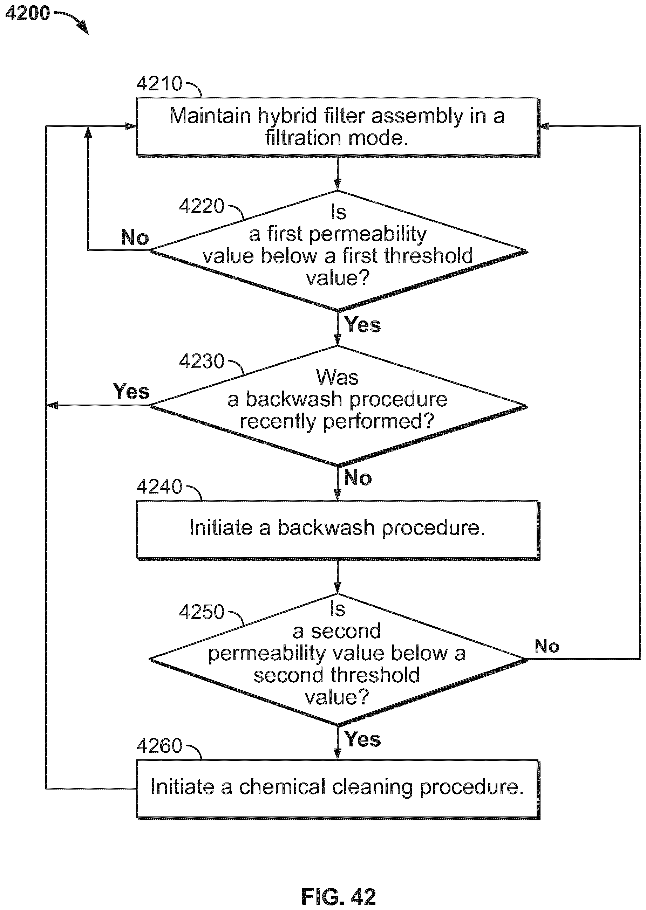

Together, FIGS. 26A-26C illustrate various configurations of a chemical cleaning system. Each of the instances of the chemical cleaning system may have substantially similar functionality (e.g., each instance may be capable of chemically cleaning the first filtration stage 2110 and/or the second filtration stage 2120 of the hybrid filter assembly 2100). However, each instance of the chemical cleaning system may differ in the number of chemical feed tanks 1210 provided with the system and/or the points at which the chemical feed tank 1210 is tied into the hybrid filter assembly 2100. In certain cases, when the chemical feed tank 1210 is placed in fluid communication with the first filtration stage 2110, the chemical feed tank 1210 may retain chemicals specifically designed to treat the granular media 2115 of the first filtration stage 2110 (e.g., enzymes, a phosphate remover) in addition to or instead of the chemical cleaning agents 1212 described herein. Further, as would be understood by one having skill in the art, other arrangements and variations of a chemical cleaning system could be implemented in accordance with the teachings of FIGS. 26A-26C. In addition, in any of the chemical cleaning systems of 26A-26C, the sanitizer 126 and/or the water chemistry regulator 128 of FIG. 1 may be used to retain the chemical cleaning agent 1212 provided by the chemical cleaning systems of FIGS. 26A-26C. Furthermore, the chemical cleaning systems of 26A-26C may be utilized in any of the methods (e.g., the backwash modes, the chemical cleaning modes, etc.), and variations thereof, described with reference to FIGS. 42-54.

Turning first to FIG. 26A, an instance of a chemical cleaning system 2600 is shown. The chemical cleaning system 2600 may include at least one chemical feed tank 1210 as described with reference to FIGS. 12-20C. As shown in FIG. 26A, the chemical cleaning system 2600 may include a first chemical feed tank 1210a and/or a second chemical feed tank 1210b.

The chemical feed tank 1210a may be provided with a chemical feed line 2600a. The chemical feed line 2600a may be designed to place the first chemical feed tank 1210a into fluid communication with the second filtration stage 2120. The chemical feed line 2600a may include various branches that tie into components of the second filtration stage 2120 or otherwise place the chemical feed tank 1210a in fluid communication with the second filtration stage 2120. For example, the chemical feed line 2600a may include a branch 2602a that ties into the top endcap 2202 of the first membrane filtration module 2154a, a branch 2602b that ties into the top endcap 2202 of the second membrane filtration module 2154b, a branch 2604a that ties into the bottom endcap 2204 of the first membrane filtration module 2154a, and/or a branch 2604b that ties into the bottom endcap 2204 of the second membrane filtration module 2154b. For example, the branches 2604a, 2604b may tie into the at least one membrane inlet port 2205 and/or the at least one membrane outlet port 2206 (see FIG. 23). In certain instances, the chemical feed line 2600a may only tie into the top endcap 2202 or the bottom endcap 2204 of each membrane filtration module of the one or more membrane filtration modules 2154. In other instances, the chemical feed line 2600a may tie into both the top endcap 2202 and the bottom endcap 2204 of each of the one or more membrane filtration modules 2154. In instances in which more than two membrane filtration modules are provided, the chemical feed line 2600a may tie into each membrane filtration module of the one or more membrane filtration modules 2154. In certain instances, the chemical feed line 2600a may not tie into all of the membrane filtration modules of the one or more membrane filtration modules 2154 (e.g., the chemical feed line 2600a may only tie into a single membrane filtration module of the one or more membrane filtration modules 2154).

In certain instances, the first chemical feed tank 1210a may also tie into or otherwise be placed in fluid communication with the first filtration stage 2110. In other instances, as illustrated in FIG. 26A, a second chemical feed tank 1210b may tie into or otherwise be placed into fluid communication with the first filtration stage 2110. A chemical feed line 2600b may be designed to place the second chemical feed tank 1210b into fluid communication with the first filtration stage 2110. In some instances, the chemical feed line 2600b may be placed into fluid communication with the valve 2136 of the vessel 2112. The chemical feed line 2600b may also be fluidly coupled to the vessel 2112 in other manners than those described herein.

Referring again to FIG. 26A, in some instances, the chemical cleaning system 2600 may be provided with one or more mechanisms designed to control or regulate the amount of the chemical cleaning agent 1212 provided to the hybrid filter assembly 2100. For example, the chemical cleaning system 2600 may be provided with one or more valves 2610 designed to control fluid flow through the chemical feed lines 2600a, 2600b. The valves 2610 may be provided as a two-way valve, a three-way valve, an automated control valve, and/or any other valve described herein. In the chemical cleaning system 2600, the one or more valves 2610 may be positioned in any of the branches 2602a, 2602b, 2604a, 2604b of the chemical feed line 2600a and in any position in the chemical feed line 2600b, although the one or more valves 2610 may also be positioned elsewhere in the chemical feed line 2600a (e.g., immediately downstream of the chemical feed tank 1210 and before any of the branches 2602a, 2602b, 2604a, 2604b; at the junction between the branches 2602a, 2602b of the chemical feed line 2600a). In certain instances, one or more of the valves 2610 illustrated in FIG. 26A may be omitted from the chemical cleaning system 2600. In other instances, additional valves 2610 may be provided in the chemical cleaning system 2600. In certain instances, the valves 2610 may not be provided and the flow of the chemical cleaning agent 1212 may instead be controlled by one or more pumps. The one or more pumps may be positioned anywhere along the chemical feed lines 2600a, 2600b, including in any position described with reference to the one or more valves 2610. In yet other instances, valves and pumps may be omitted from the chemical cleaning system 2600. In some such instances, a dosing mechanism or valve may be integrally provided with the chemical feed tank 1210.

Still referring to FIG. 26A, in certain instances, the chemical cleaning agent 1212 may be flushed from the first filtration stage 2110 and/or the second filtration stage 2120 after the chemical cleaning agent 1212 is provided to the first filtration stage 2110 and/or the second filtration stage 2120. For example, the chemical cleaning agent 1212 may be flushed from the first filtration stage 2110 and/or the second filtration stage 2120 by operating the hybrid filter assembly 2100 in a backwash mode. In certain instances, the central controller 150 of FIG. 1 may direct the first and second automated control valves 2180, 2182 to provide a flushing fluid to the first filtration stage 2110 and/or the second filtration stage 2120 and then to the waste conduit 2295 after the flushing fluid passes through the first filtration stage 2110 and/or the second filtration stage 2120. In some such instances, the waste conduit 2295 is in fluid communication with a waste system, a container, a drain, and/or a sewer line. Alternatively, the flushing fluid may exit the hybrid filter assembly 2100 via the system outlet conduit 2290. In some such instances, the flushing fluid (and any unreacted chemical cleaning agent 1212 therein) may be provided to the swimming pool 110 of FIG. 1. In yet other instances, the flushing fluid may be provided to the hybrid filter assembly 2100 and/or exit the hybrid filter assembly 2100 in other manners than those described herein.

The following provides a non-limiting example of the flow path of the flushing fluid through the hybrid filter assembly 2100. In this example and referring again to FIG. 26A, after the chemical cleaning agent 1212 has been provided to the first filtration stage 2110 and the second filtration stage 2120, the flushing fluid may pass through the first filtration stage 2110 and the second filtration stage 2120. Then, flushing fluid from the first filtration stage 2110 may be provided to the first automated control valve 2180 via the first filtration stage inlet conduit 2230 and the flushing fluid may be provided to the second automated control valve 2182 via the second filtration stage inlet conduit 2270. The flushing fluid provided to the first automated control valve 2180 may pass through the first automated control valve 2180 and then travel to the second automated control valve 2182 via the valve conduit 2254 (see FIG. 22). Substantially all or all of the flushing fluid provided to the second automated control valve 2182 may exit the second automated control valve 2182 (e.g., via the waste port 2248, via the return port 2252 (see FIG. 25)). In instances in which the flushing fluid exits the second automated control valve 2182 via the waste port 2248, the flushing fluid may be removed from the hybrid filter assembly 2100 via the waste conduit 2295. Alternatively, in instances in which the flushing fluid exits the second automated control valve via the return port 2252, the flushing fluid may exit the hybrid filter assembly 2100 via the system outlet conduit 2290 and be provided to the swimming pool 110 of FIG. 1.

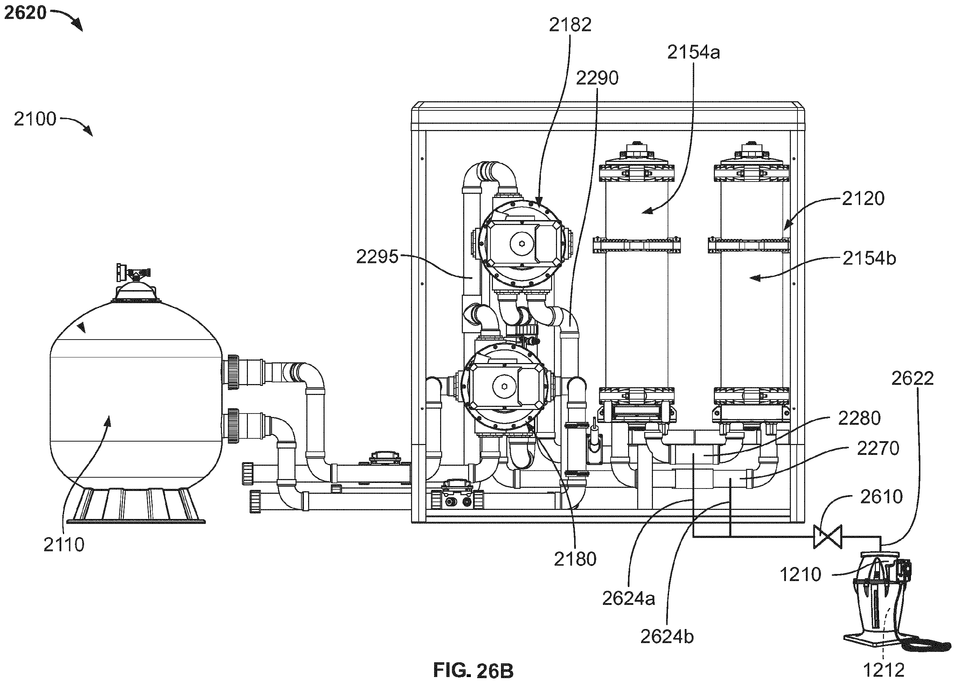

In comparison to the chemical cleaning system 2600 of FIG. 26A, the chemical cleaning system 2620 of FIG. 26B may arrange a single chemical feed tank 1210 to be in fluid communication with the second filtration stage 2120. In addition, in certain instances, the chemical cleaning system 2620 may not provide the chemical cleaning agent 1212 to the first filtration stage 2110. A chemical feed line 2622 may be designed to place the chemical feed tank 1210 into fluid communication with the second filtration stage 2120. More particularly, the chemical feed line 2622 may place the chemical feed tank 1210 into fluid communication with the second filtration stage inlet conduit 2270 and/or the second filtration stage outlet conduit 2280. For example, a first branch 2624a of the chemical feed line 2622 may place the chemical feed tank 1210 in fluid communication with the second filtration stage inlet conduit 2270 and a second branch 2624b may place the chemical feed tank 1210 in fluid communication with the second filtration stage outlet conduit 2280. In addition, a valve 2610 may be used to regulate or control the amount of the chemical cleaning agent 1212 provided from the chemical feed tank 1210 to the second filtration stage inlet conduit 2270 and/or the second filtration stage outlet conduit 2280. The valve 2610 may be arranged in or otherwise in fluid communication with the chemical feed line 2622.

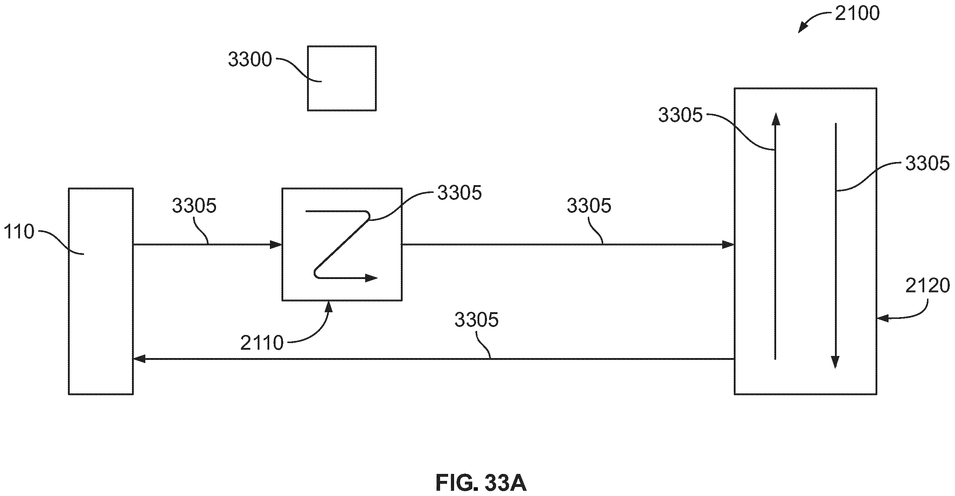

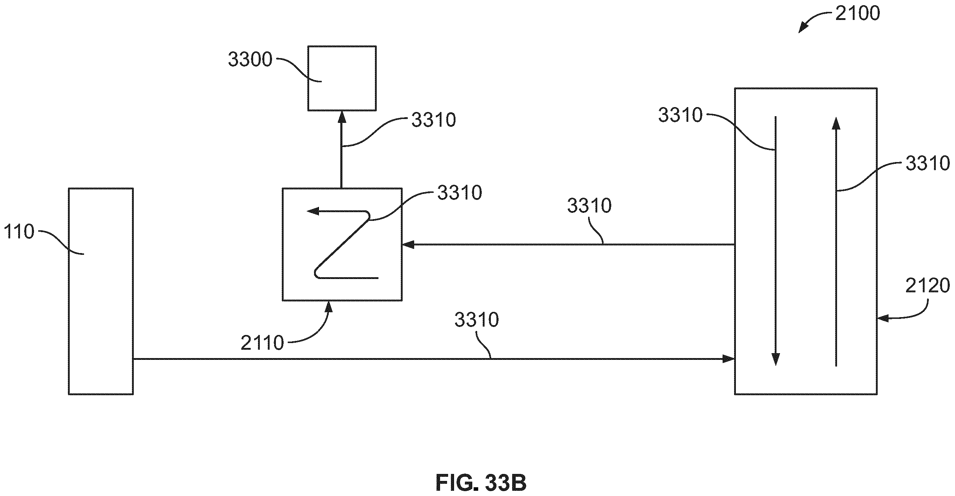

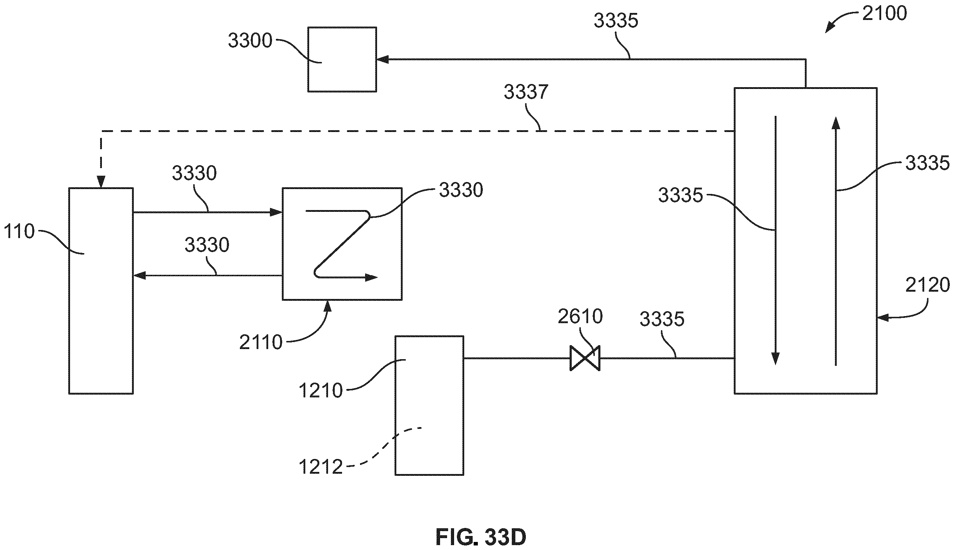

After being introduced to the second filtration stage inlet conduit 2270 and/or the second filtration stage outlet conduit 2280, the central controller 150 of FIG. 1 may direct the first and second automated control valves 2180, 2182 to provide the chemical cleaning agent 1212 to the first and second membrane filtration modules 2154a, 2154b. For example, including in instances in which the chemical cleaning agent 1212 is provided to the first and second membrane filtration modules 2154a, 2154b via the second filtration stage inlet conduit 2270, the central controller 150 may direct the hybrid filter assembly 2100 to operate such that fluid flows through the second filtration stage 2120 in a manner substantially similar to a fluid flow path (i.e., a fluid flow path 3305) described with reference to FIG. 33A. Alternatively, including in instances in which the chemical cleaning agent 1212 is provided to the first and second membrane filtration modules 2154a, 2154b via the second filtration stage outlet conduit 2280, the chemical cleaning agent 1212 may be circulated through the second filtration stage 2120 in a manner substantially similar to the fluid flow path (i.e., a fluid flow path 3310) described with reference to FIG. 33B. Furthermore, in certain cases, the bypass mode may operate as a subroutine of the chemical cleaning mode, as provided in FIG. 33D. In such cases, the chemical cleaning agent 1212 may only be provided to the second filtration stage 2120 and not the first filtration stage 2110.

Referring again to FIG. 26B, after the chemical cleaning agent 1212 has been provided to one or both of the first and second membrane filtration modules 2154a, 2154b, the chemical cleaning agent 1212 may be flushed from the hybrid filter assembly 2100. In some instances, after flowing through the first and second membrane filtration modules 2154a, 2154b, any unreacted chemical cleaning agent 1212 may be provided to the swimming pool 110 of FIG. 1 via the system outlet conduit 2290. In other instances, instead of being provided to the swimming pool 110, any unreacted chemical cleaning agent 1212 may be disposed of after the hybrid filter assembly 2100 is chemically cleaned. For example, some, substantially all, or all of the unreacted chemical cleaning agent 1212 may be provided to the waste conduit 2295. In such instances, the waste conduit 2295 may be in fluid communication with a waste system, a container, a drain, and/or a sewer line.

In the spirit of the disclosure of FIG. 26A, other variations of the chemical cleaning system 2620 of FIG. 26B may be utilized. For example, the valve 2610 may be replaced with a pump or omitted entirely, a flushing fluid may be used to remove the chemical cleaning agent 1212 from the hybrid filter assembly 2100, and/or another chemical feed tank 1210 could be provided.

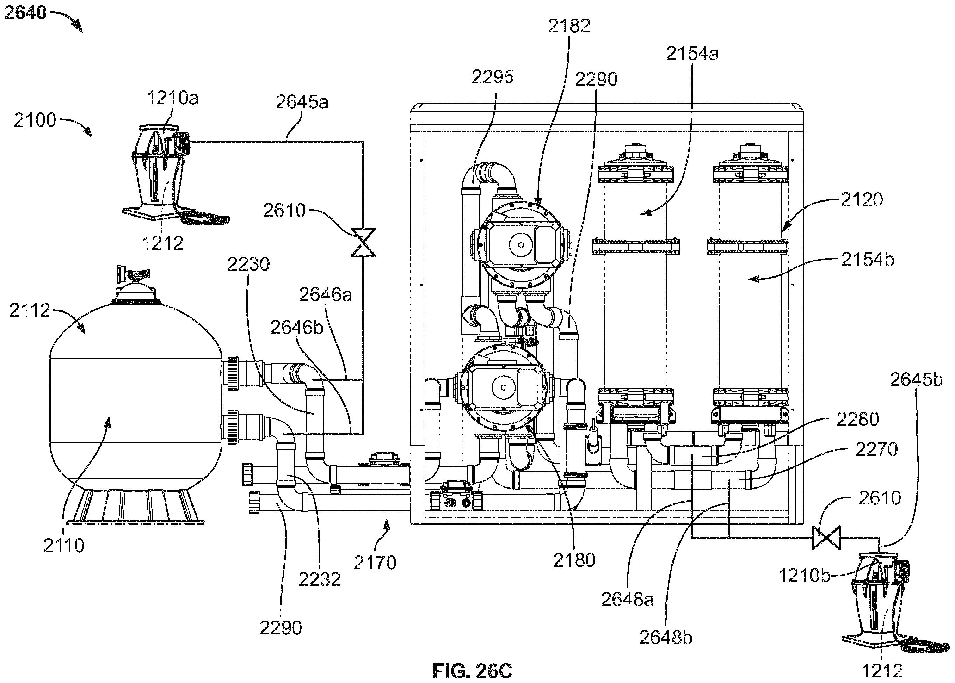

In comparison to the chemical cleaning systems 2600, 2620 of FIGS. 26A and 26B, the chemical cleaning system 2640 of FIG. 26C may include a first chemical feed tank 1210a in fluid communication with conduits 2170 coupled to the first filtration stage 2110. In addition, the chemical cleaning system 2640 of FIG. 26C may include the second chemical feed tank 1210b in fluid communication with conduits 2170 coupled to the first and second membrane filtration modules 2154a, 2154b. More particularly, the first chemical feed tank 1210a may tie into the first filtration stage inlet conduit 2230 and/or the first filtration stage outlet conduit 2232. The second chemical feed tank 1210b may tie into the second filtration stage inlet conduit 2270 and/or the second filtration stage outlet conduit 2280.

Referring still to FIG. 26C, the first chemical feed tank 1210a may be coupled to or provided with a chemical feed line 2645a. The chemical feed line 2645a may be designed to place the first chemical feed tank 1210a into fluid communication with the first filtration stage 2110. For example, the chemical feed line 2645a may include various branches that place the first chemical feed tank 1210a in fluid communication with the first filtration stage 2110. For example, the chemical feed line 2645a may include a branch 2646a that ties into the first filtration stage inlet conduit 2230 and a branch 2646b that ties into the first filtration stage outlet conduit 2232. The flow of the chemical cleaning agent 1212 from the first chemical feed tank 1210a to the first filtration stage 2110 may be regulated or controlled by the valve 2610 arranged in or otherwise in fluid communication with the chemical feed line 2645a.

The second chemical feed tank 1210b may be coupled to a chemical feed line 2645b. The chemical feed line 2645b may be designed to place the second chemical feed tank 1210b into fluid communication with the second filtration stage 2120. The chemical feed line 2645b may include various branches that place the second chemical feed tank 1210b in fluid communication with the second filtration stage 2120. For example, the chemical feed line 2645b may include a branch 2648a that ties into the second filtration stage inlet conduit 2270 and a branch 2648b that ties into the second filtration stage outlet conduit 2280. The flow of the chemical cleaning agent 1212 from the second chemical feed tank 1210b to the second filtration stage 2120 may be regulated or controlled by the valve 2610 arranged in or otherwise in fluid communication with the chemical feed line 2645b.

Referring still to FIG. 26C, in instances in which the first chemical feed tank 1210a is tied into the first filtration stage inlet conduit 2230 and/or the second chemical feed tank 1210b is tied into the second filtration stage inlet conduit 2270, the chemical cleaning agent 1212 may be circulated through the hybrid filter assembly 2100 in a manner substantially similar to the fluid flow path (i.e., a fluid flow path 3305) described with reference to FIG. 33A. Alternatively, the chemical cleaning agent 1212 may be circulated through the hybrid filter assembly 2100 in a manner substantially similar to the fluid flow path (i.e., a fluid flow path 3310) described with reference to FIG. 33B. After flowing through the first and second membrane filtration modules 2154a, 2154b, any unreacted chemical cleaning agent 1212 may be provided to the swimming pool 110 of FIG. 1 via the system outlet conduit 2290. In other instances, instead of being provided to the swimming pool 110, any unreacted chemical cleaning agent 1212 may be disposed of after the hybrid filter assembly 2100 is chemically cleaned. For example, some, substantially all, or all of the unreacted chemical cleaning agent 1212 may be provided to the waste conduit 2295. In some instances, the waste conduit 2295 may be in fluid communication with a waste system, a container, a drain, and/or a sewer line.

In the spirit of the disclosure of FIGS. 26A and 26B, other variations of the chemical cleaning system 2600 of FIG. 26C may be utilized. For example, the valve 2610 may be replaced with a pump or omitted entirely, a flushing fluid may be used to remove the chemical cleaning agent 1212 from the hybrid filter assembly 2100, only a single chemical feed tank 1210 and/or additional chemical cleaning tanks 1210 may be provided.

As best illustrated in FIGS. 27-32, an instance of the first and second automated control valves 2180, 2182 is provided. As previously described, each of the first and second automated control valves 2180, 2182 may be provided in the form of the manifold 2210, 2240, the actuator 2212, 2242, and one or more ports (e.g., the influent ports 2214, 2244; the effluent ports 2216, 2246; the waste port 2218, 2248; the pump port 2220, 2250; and the return port 2222, 2252). The one or more ports of the first and second automated control valves 2180, 2182 may extend from an outer surface 2700 of the manifold 2210, 2240 and into an interior 2702 of the manifold 2210, 2240. The one or more ports of the first and second automated control valves 2180, 2182 may be designed to couple to the conduits 2170 of the hybrid filter assembly 2100 (see, e.g., FIG. 21). In certain instances, the first and second automated control valves 2180, 2182 may be configured as a two-way valve, a three-way valve, a six-way valve, or other similar valves. In addition, the central controller 150 of FIG. 1 may direct the actuator 2212, 2242 of the first and second automated control valves 2180, 2182 to open and/or close the one or more ports of the first and second automated control valves 2180, 2182 such that fluid flow through the hybrid filter assembly 2100 may be controlled. For example, the central controller 150 may direct actuation of the first automated control valve 2180 and/or the second automated control valve 2182 to place the hybrid filter assembly 2100 in the filtration mode, a cleaning mode (e.g., the backwash mode and/or the chemical cleaning mode), and/or a bypass mode.

In the instance of the first and second automated control valves 2180, 2182 of FIGS. 27-32, the first and second automated control valves 2180, 2182 include two influent ports 2214, 2244; two effluent ports 2216, 2246; a single waste port 2218, 2248; a single pump port 2220, 2250; and a single return port 2222, 2252. In other instances, the first and second automated control valves 2180, 2182 may have additional ports, fewer ports, and/or different types of ports than described herein. In certain instances, each of the first and second automated control valves 2180, 2182 may be a six-way AQUASTAR® mp6 plc valve, manufactured by Praher Plastics Austria GmbH of Österreich, Austria.

Together, FIGS. 33A-33E illustrate non-limiting, example fluid flow paths through the hybrid filter assembly 2100 when the hybrid filter assembly 2100 operates in various modes (e.g., a filtration mode, a backwash mode, a chemical cleaning mode, and/or a bypass mode). In particular, FIGS. 33A-33E illustrate simplified fluid flow paths associated with the swimming pool 110 of FIG. 1, the first filtration stage 2110, the second filtration stage 2120, a waste system 3300, and, in some instances, the chemical feed tank 1210. In certain instances, the waste system 3300 may be provided as a drain, a container, a sewer system, and/or other similar systems capable of receiving a backwashing fluid and/or a flushing fluid. Other fluid flow paths besides those illustrated in FIGS. 33A-33E may be utilized in accordance with the teachings herein. In addition, the fluid flow paths described in FIGS. 33A-33E may also be utilized in any of the hybrid filter assemblies, and variations thereof, described herein.

FIG. 33A illustrates an example fluid flow path associated with the swimming pool 110, the first filtration stage 2110, and the second filtration stage 2120 when the hybrid filter assembly 2100 operates in a filtration mode. The central controller 150 may be designed to initiate the filtration mode. For example, the central controller 150 may direct actuation of one or more components of the hybrid filter assembly 2100 (e.g., at least one of the first automated control valve 2180 and the second automated control valve 2182) to place the hybrid filter assembly 2100 into the filtration mode. In the filtration mode, fluid may flow along fluid flow path 3305. For example, water may be provided from the swimming pool 110 and to the first filtration stage 2110, which in turn filters the water from the swimming pool 110, creating a prefiltered water. The prefiltered water from the first filtration stage 2110 may then be provided to the second filtration stage 2120. As the prefiltered water flows through the second filtration stage 2120, the prefiltered water undergoes further filtration within the one or more membrane filtration modules 2154 (see, e.g., FIG. 22) provided in the second filtration stage 2120. After the prefiltered water is processed by the second filtration stage, a filtered water is generated. In the illustrated instance of FIG. 33A, the filtered water is provided back to the swimming pool 110.

FIG. 33B illustrates an example fluid flow path associated with the swimming pool 110, the first filtration stage 2110, the second filtration stage 2120, and the waste system 3300 when the hybrid filter assembly 2100 operates in an instance of the backwash mode. The central controller 150 may be designed to initiate the backwash mode. For example, the central controller 150 may direct actuation of one or more components of the hybrid filter assembly 2100 (e.g., at least one of the first automated control valve 2180 and the second automated control valve 2182) to place the hybrid filter assembly 2100 into the backwash mode. In certain instances, when the hybrid filter assembly 2100 operates in a backwash mode, fluid may flow along a fluid flow path 3310 that is substantially opposite of the fluid flow path 3305. In some such instances, water may first flow from the swimming pool 110 and to the second filtration stage 2120. Once provided to the second filtration stage 2120, the water may be utilized to backwash the one or more membrane filtration modules 2154 (see, e.g., FIG. 22) provided in the second filtration stage 2120. Then, the water (and optionally contaminates) may exit the second filtration stage 2120 and flow to the first filtration stage 2110. Once provided to the first filtration stage 2110, the water may backwash the first filtration stage 2110. After the water exits the first filtration stage 2110, the water (and optionally contaminates) may then be provided to the waste system 3300 via a waste conduit in fluid communication with the first filtration stage 2110 and the waste system 3300.

In some cases, only one of the first filtration stage 2110 and the second filtration stage 2120 may be provided with a backwashing fluid. For example, the backwashing fluid may be provided from the second filtration stage 2120 and to the waste system 3300 without being provided to the first filtration stage 2110. As an additional example, the backwashing fluid may be provided to the first filtration stage 2110 without first flowing through the second filtration stage 2120.

In some cases, the swimming pool 110 may not be used as the source of the backwashing fluid. In such cases, a source of prefiltered water or filtered water may be used to backwash the first filtration stage 2110 and the second filtration stage 2120. For example, the first filtration stage 2110 may provide a prefiltered fluid that may be utilized as a backwashing fluid when the second filtration stage 2120 is backwashed.

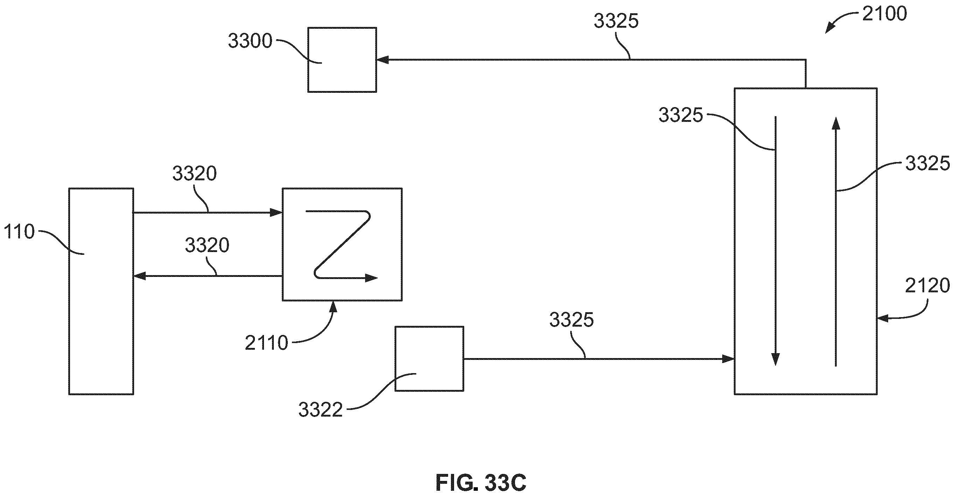

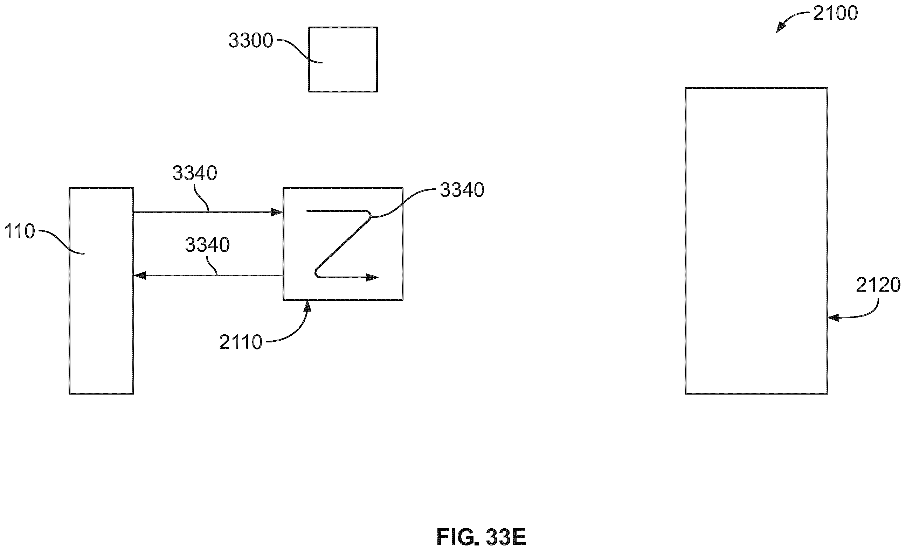

FIG. 33C illustrates an example fluid flow path associated with the swimming pool 110, the first filtration stage 2110, the second filtration stage 2120, and the waste system 3300 when the hybrid filter assembly 2100 operates in another (e.g., second) instance of the backwash mode. The central controller 150 may be designed to initiate the backwash mode. For example, the central controller 150 may direct actuation of one or more components of the hybrid filter assembly 2100 (e.g., at least one of the first automated control valve 2180 and the second automated control valve 2182) to place the hybrid filter assembly 2100 into the backwash mode. In this instance of the backwash mode, the bypass mode described with reference to FIG. 33E is utilized as a subroutine of the backwash mode such that some of the filtration capabilities of the hybrid filter assembly 2100 remain online operational while a backwash is being carried out. As provided in FIG. 33C, a fluid flow path 3320 may allow for water from the swimming pool 110 to be processed by the first filtration stage 2110. In turn, the first filtration stage 2110 may generate a prefiltered fluid which is provided back to the swimming pool 110. In addition, a source 3322 of a backwashing fluid is provided to the second filtration stage 2120 via a fluid flow path 3325. Once the backwashing fluid is provided to the second filtration stage 2120, the backwashing fluid may be utilized to backwash the one or more membrane filtration modules 2154 (see, e.g., FIG. 22) provided in the second filtration stage 2120. After the backwashing of the second filtration stage 2120 is complete, the backwashing fluid may then be provided to the waste system 3300.

In some instances, the source 3322 of the backwashing fluid may be the swimming pool 110. In other instances, the source 3322 of the backwashing fluid may be another portion of the plumbing associated with the aquatic application 100 of FIG. 1. In yet other instances, the source 3322 of the backwashing fluid may be fluid that has been filtered by the first filtration stage 2110 and/or the second filtration stage 2120. In certain cases, the backwashing fluid provided from the source 3322 may also include or be dosed with a cleaning agent (e.g., the chemical cleaning agent 1212 described with reference to FIG. 12).

FIG. 33D illustrates an example fluid flow path associated with the swimming pool 110, the chemical feed tank 1210, the first filtration stage 2110, the second filtration stage 2120, and the waste system 3300 when the hybrid filter assembly 2100 operates in a chemical cleaning mode that utilizes the bypass mode of FIG. 33E as a subroutine of the chemical cleaning mode. The central controller 150 may be designed to initiate the chemical cleaning mode and the associated bypass mode subroutine. For example, the central controller 150 may direct actuation of one or more components of the hybrid filter assembly 2100 (e.g., at least one of the first automated control valve 2180 and the second automated control valve 2182) to place the hybrid filter assembly 2100 into the chemical cleaning mode and fluidly isolate the second filtration stage 2120 from the first filtration stage 2110. As provided in FIG. 33D, a fluid flow path 3330 may allow for water from the swimming pool 110 to be processed by the first filtration stage 2110. In turn, the first filtration stage 2110 may generate a prefiltered fluid that is provided back to the swimming pool 110. In addition, the chemical feed tank 1210 may be in fluid communication with the second filtration stage 2120. When the central controller 150 of FIG. 1 initiates the chemical cleaning mode, the valve 2610 may provide the chemical cleaning agent 1212 to the second filtration stage 2120 via a fluid flow path 3335. As shown, the fluid flow path 3335 may allow for fluid to flow through the second filtration stage 2120 in the same direction as the fluid flow path 3325 described with reference to FIG. 33C. In other instances, the fluid flow path 3335 may allow for fluid to flow through the second filtration stage 2120 in the same direction as the fluid flow path 3305 described with reference to FIG. 33A. After the chemical agent is provided to the one or more membrane filtration modules 2154 (see, e.g., FIG. 22) provided in the second filtration stage 2120, the chemical cleaning agent 1212 may be flushed from the second filtration stage 2120 and provided to the waste system 3300 via the fluid flow path 3335. Optionally, some, substantially all, or all of the flushing fluid containing the chemical agent may be directed to the swimming pool 110 via a fluid flow path 3337.

In some instances of the chemical cleaning mode described with reference to FIG. 33D, the flushing fluid may be a backwashing fluid provided to the second filtration stage 2120 as described with reference to FIG. 33C. In yet other instances of the chemical cleaning mode described with reference to FIG. 33D, the flushing fluid may be a backwashing fluid provided to the second filtration stage 2120, as described with reference to FIG. 33B. In such instances, the flushing fluid, and thus the chemical cleaning agent 1212, may be provided to the first filtration stage 2110 before being provided to the waste system 3300 and/or the swimming pool 110. In yet other instances, the flushing fluid may be provided from the swimming pool 110, the first filtration stage 2110, and/or other plumbing provided with the aquatic application 100 of FIG. 1.

In certain instances of the chemical cleaning mode described with reference to FIG. 33D, the valve 2610 is omitted. In some instances of the chemical cleaning mode described with reference to FIG. 33D, a dosing mechanism or pump is provided in the fluid flow path 3335 such that the chemical cleaning agent 1212 may be metered and/or delivered to the second filtration stage 2120.

FIG. 33E illustrates an example fluid flow path associated with the swimming pool 110 and the first filtration stage 2110 when the hybrid filter assembly 2100 operates in a bypass mode. The central controller 150 may be designed to initiate the bypass mode. For example, the central controller 150 may direct actuation of one or more components of the hybrid filter assembly 2100 (e.g., at least one of the first automated control valve 2180 and the second automated control valve 2182) to place the hybrid filter assembly 2100 into the bypass mode. When the hybrid filter assembly 2100 operates in a bypass mode, water from the swimming pool 110 may be provided only to the first filtration stage 2110. For example, water from the swimming pool 110 may flow along a fluid flow path 3340 and to the first filtration stage 2110. Once the water from the swimming pool 110 is provided to the first filtration stage 2110, the water may be processed and a prefiltered water may be generated. The prefiltered water generated by the first filtration stage 2110 may then be provided to the swimming pool 110 without being provided to the second filtration stage 2120.

In other instances of the bypass mode, fluid from the swimming pool 110 may not be provided to either the first filtration stage 2110 or the second filtration stage 2120. In such instances, the water from the swimming pool 110 may instead be routed to other components of the aquatic application 100 described with reference to FIG. 1.

While the example fluid flow paths of FIGS. 33A-33E are described with reference to the hybrid filter assembly 2100, the fluid flow paths may be associated with any of the hybrid filter assemblies (and any variations thereof) described herein. Further, the central controller 150 may work in conjunction with, or independent from, one or more local controllers associated with the pool components 102 of FIG. 1 to effectuate the operational modes described with reference to FIGS. 33A-33E. Alternatively, one or more local controllers associated with the pool components 102 may work in conjunction with, or independent from, the central controller to effectuate the operational modes described with reference to FIGS. 33A-33E.

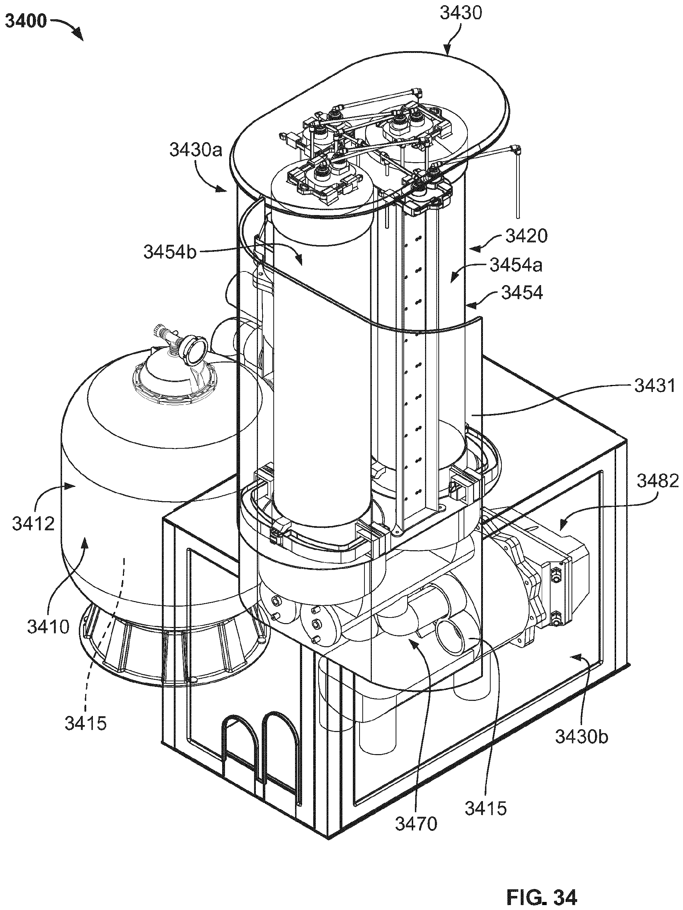

Turning to FIGS. 34-37, another instance of a hybrid filter assembly, a hybrid filter assembly 3400, is provided. In certain instances, the hybrid filter assembly 3400 may be the filter 124 of FIG. 1. The hybrid filter assembly 3400 may be imparted with substantially the same functionality and many of the same design characteristics as the hybrid filter assemblies 200, 2100. In addition, components having similar names and/or numbers in the hybrid filter assemblies 200, 2100 may have similar structure and function as the components described with reference to the hybrid filter assemblies 200, 2100. For example, the hybrid filter assembly 3400, like the hybrid filter assemblies 200, 2100, may be provided in the form of a first filtration stage (e.g., a depth filtration stage) and a second filtration stage (e.g., a membrane filtration stage). As an additional example, like the hybrid filter assemblies 200, 2100, the hybrid filter assembly 3400 may be operated in a normal operational mode (e.g., a filtration mode), a chemical cleaning mode, a backwash mode, and/or a bypass mode. However, unlike the hybrid filter assembly 200 and similar to the hybrid filter assembly 2100, in the hybrid filter assembly 3400, the first filtration stage and the second filtration stage may be provided in separate housings, vessels, and/or enclosures. Further, the components of the hybrid filter assembly 3400 may be differently arranged than the components of the hybrid filter assemblies 200, 2100.

More particularly, referring to FIGS. 34-37 together, the hybrid filter assembly 3400 may be provided in the form of a first filtration stage 3410 including a vessel 3412 that is designed to retain a granular media 3415, and a second filtration stage 3420 substantially surrounded by an enclosure 3430. The first filtration stage 3410 and the second filtration stage 3420 may be fluidly coupled to each other and the aquatic application 100 of FIG. 1. When the hybrid filter assembly 3400 operates in a filtration mode, water from the swimming pool 110 may be provided to the first filtration stage 3410 before being provided to the second filtration stage 3420. In addition, conduits 3470 may fluidly couple the first filtration stage 3410 to the second filtration stage 3420 and to components of the aquatic application 100 of FIG. 1. Further, various sensors, such as a sensor 3508, may be coupled to or otherwise associated with the conduits 3470 such that one or more parameters of the fluid flowing through the hybrid filter assembly 3400 can be monitored.

Unlike the hybrid filter assembly 2100, the enclosure 3430 of the hybrid filter assembly 3400 may be provided in the form of an upper enclosure 3430a and a lower enclosure 3430b. The upper enclosure 3430a and lower enclosure 3430b may be integrally constructed, or the upper enclosure 3430a and lower enclosure 3430b may be provided as separate components. The upper enclosure 3430a may be imparted with a substantially cylindrical shape, although the upper enclosure 3430a may also be provided in other shapes and forms. The upper enclosure 3430a may be designed to retain one or more filtration modules 3454 (here, a first filtration module 3454a and a second filtration module 3454b). The upper enclosure 3430a may also be provided with an access panel 3431 that may be selectively opened to provide more convenient access to the one or more filtration modules 3454. In some instances, the access panel 3431 is hingedly coupled to the upper enclosure 3430a.

The lower enclosure 3430b may be imparted with a substantially rectangular-prism shape, although the lower enclosure 3430b may also be provided in other shapes and forms. In some instances, the lower enclosure 3430b may support the upper enclosure 3430a. In addition, the lower enclosure 3430b may be designed to retain conduits 3470, a first automated control valve 3480, and/or a second automated control valve 3482 provided with the hybrid filter assembly 3400. In the instance of the hybrid filter assembly 3400 illustrated in FIGS. 34-37, the second automated control valve 3482 and a portion of the conduits 3470 are provided within the lower enclosure 3430b.

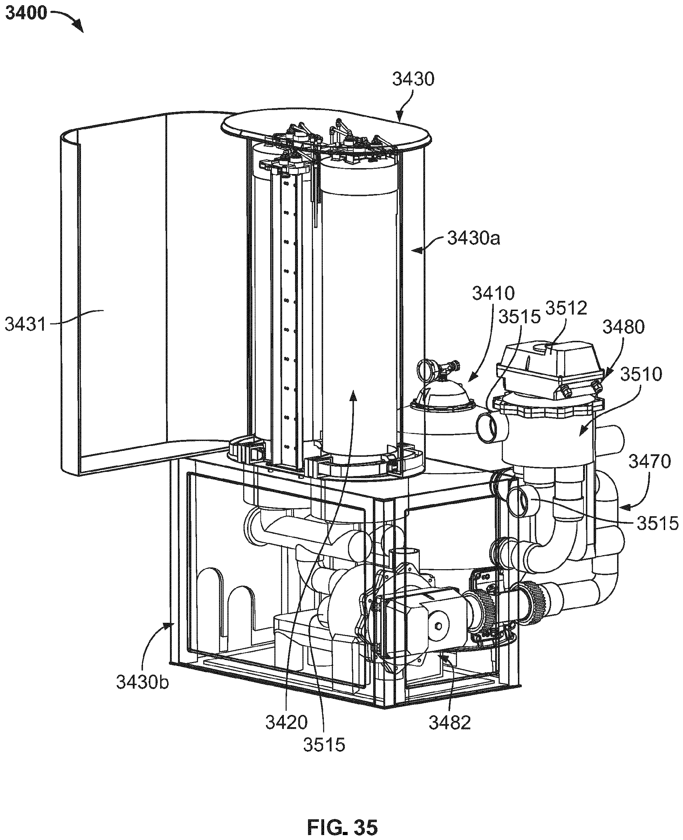

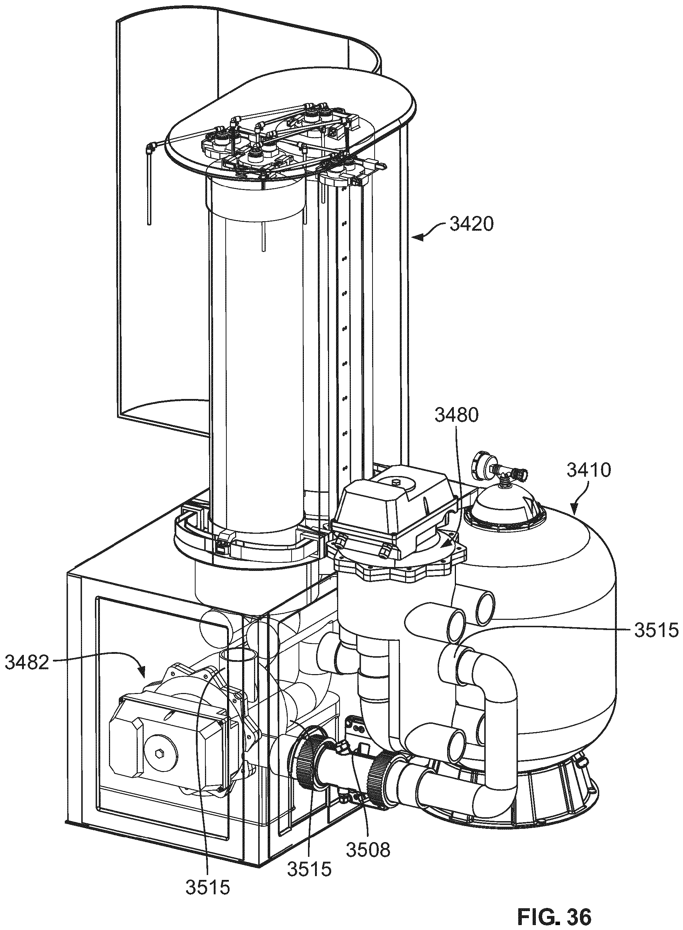

As best illustrated in FIGS. 35 and 36, the first and second automated control valves 3480, 3482, like the first and second automated control valves 2180, 2182, may each be provided in the form of a manifold 3510, an actuator 3512, and various ports 3515. Further, the first and second automated control valves 3480, 3482, like the first and second automated control valves 2180, 2182, may each help control the flow of fluid through the hybrid filter assembly 3400 and may be directed by the central controller 150 such that the hybrid filter assembly 3400 enters the filtration mode, the backwash mode, the chemical cleaning mode, and/or the bypass mode. In addition, the first and second automated control valves 3480, 3482 may be configured as six-way valves (although the first and second automated control valves 3480, 3482 may also be provided as two-way valves, three-way valves, etc.). However, compared to the first and second automated control valves 2180, 2182, each of the manifolds 3510 of the first and second automated control valves 3480, 3482 may be differently shaped and the ports 3515 may be alternatively arranged. For example, the first and second automated control valves 3480, 3482 may be provided with a substantially cylindrical body that is integrally formed with or coupled to a longitudinal protrusion extending outwardly and away from the substantially cylindrically body. In certain instances, each portion of the manifold 3510 (i.e., the substantially cylindrical body and the longitudinal protrusion) may include the ports 3515 positioned thereon. In other instances, only the cylindrical body of the manifold 3510 may include ports 3515 positioned thereon. In certain instances, the first and second automated control valves 3480, 3482 may be provided as the AQUASTAR® mp6 plc valve, manufactured by Praher Plastics Austria GmbH of Österreich, Austria.

In certain instances, the hybrid filter assembly 3400 may be operated in a backwash mode to recover the one or more membranes of the hybrid filter assembly 3400. The backwash mode utilized with the hybrid filter assembly 3400 may be any of the backwash modes, including variations thereof, discussed herein. In addition to backwashing, it can be beneficial to chemically clean the hybrid filter assembly 3400 because backwashing may not remove or neutralize all contaminants (e.g., organics, viruses, and bacteria) from the hybrid filter assembly 3400. In some instances, it can be useful to clean the one or more membrane filtration modules 3554 with one or more of a disinfectant or chemical cleaning agent such as chlorine, bromine, calcium hypochlorite, trichloroisocyanuric acid, dichloro-s-triazinetrione, other cleaning or bleaching agents, and combinations thereof. For example, the chemical cleaning agent may be selected from the group consisting of a chlorine-containing compound, a chlorine-containing solution, a bromine-containing compound, a bromine-containing solution, a bleaching agent, an acidic solution, and combinations thereof. In some such instances, the chemical cleaning agent may be selected from the group consisting of calcium hypochlorite, trichloroisocyanuric acid, dichloro-s-triazinetrione, and combinations thereof. Accordingly, FIGS. 12-20C and 26A-26C illustrate various instances of chemical cleaning systems which may be used to recover the one or more of the membranes of the hybrid filter assembly 3400. In use, the hybrid filter assembly 3400 may be subjected to one or more backwashing operations, one or more chemical cleaning processes, and/or variations of the backwashing operations and chemical cleaning processes described herein.

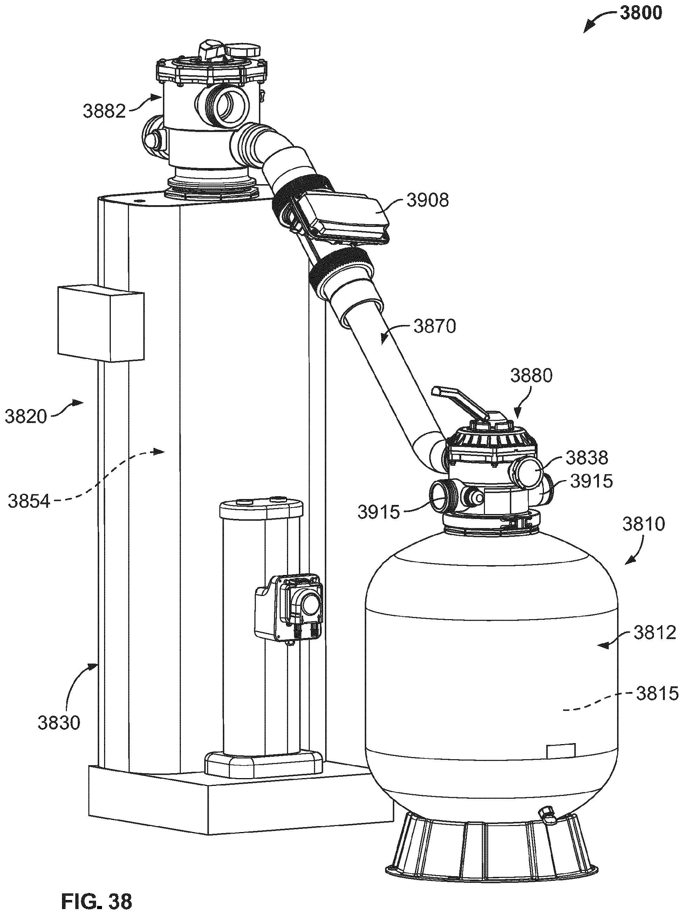

Turning to FIGS. 38-41, another instance of a hybrid filter assembly 3800 is provided. In certain instances, the hybrid filter assembly 3800 may be the filter 124 of FIG. 1. The hybrid filter assembly 3800 may be imparted with substantially the same functionality and many of the same design characteristics as the hybrid filter assemblies 200, 2100, 3400. In addition, components having similar names and/or numbers in the hybrid filter assemblies 200, 2100, 3400 may have similar structure and function as the components described with reference to the hybrid filter assembly 200. For example, the hybrid filter assembly 3800, like the hybrid filter assemblies 200, 2100, 3400, may be provided in the form of a first filtration stage (e.g., a depth filtration stage) and a second filtration stage (e.g., a membrane filtration stage). As an additional example, like the hybrid filter assemblies 200, 2100, 3400, the hybrid filter assembly 3800 may be operated in a normal operational mode (e.g., a filtration mode), a backwash mode, a chemical cleaning mode, and/or a bypass mode. However, unlike the hybrid filter assembly 200 and similar to the hybrid filter assemblies 2100, 3400, in the hybrid filter assembly 3800, the first filtration stage and the second filtration stage may be provided in separate housings, vessels, and/or enclosures. Further, the components of the hybrid filter assembly 3800 may be differently arranged than the components of the hybrid filter assemblies 200, 2100, 3800.

More particularly, referring to FIGS. 38-40 together, the hybrid filter assembly 3800 may be provided in the form of a first filtration stage 3810 including a vessel 3812 that is designed to retain a granular media 3815, and a second filtration stage 3820 substantially surrounded by an enclosure 3830. The first filtration stage 3810 and the second filtration stage 3820 may be fluidly coupled to each other and the aquatic application 100 of FIG. 1 such that, when the hybrid filter assembly 3800 operates in a filtration mode, water from the swimming pool 110 is provided to the first filtration stage 3810 before being provided to the second filtration stage 3820. In addition, conduits 3870 may fluidly couple the first filtration stage 3810 to the second filtration stage 3820 and to components of the aquatic application 100 of FIG. 1. In addition, various sensors, such as a sensor 3908, may be coupled to or otherwise associated with the conduits 3870 such that one or more parameters of the fluid flowing through the hybrid filter assembly 3800 can be monitored.

Unlike the hybrid filter assemblies 200, 2100, 3400, a first automated control valve 3880 is coupled to the vessel 3812 of the first filtration stage 3810 and a second automated control valve 3882 is coupled to the enclosure 3430 that surrounds the second filtration stage 3820. Thus, the vessel 3812 of the first filtration stage 3810 does not include side ports designed to communicate fluids to and/or from the interior of the vessel 3812. Instead, the vessel 3812 is configured as a "top mount" vessel such that the inlet and outlet ports associated with the vessel 3812 are provided within a valve (e.g., a first automated control valve 3880) coupled to a top portion of the vessel 3812. In addition, due to the arrangement of the conduits 3870, when the hybrid filter assembly 3800 operates in the filtration mode, fluid flows upwardly from the first filtration stage 3810 and towards the second automated control valve 3882 before being provided to the second filtration stage 3820. When the hybrid filter assembly 3800 operates in the filtration mode, once fluid is provided to the second automated control valve 3882, the fluid may then flow downwardly into one or more membrane filtration modules 3854 provided in the second filtration stage 3820. For example, the fluid may be provided to a top endcap of the one or more membrane filtration modules 3854 before being filtered by the one or more membrane filtration modules 3854. In comparison, when the hybrid filter assembly 3800 operates in a backwash mode, fluid may flow through the second filtration stage 3820, to the second automated control valve 3882, and downwardly through the conduits 3870 and toward the first filtration stage 3810. Fluidly coupling the first and second filtration stages 3810, 3820 in this manner may allow for a more efficient deaeration process for the one or more membrane filtration modules 3854 of the second filtration stage 3820, as the one or more membrane filtration modules 3854 need not be evacuated of water before deaeration.

In certain instances, like the first and second automated control valves 2180, 2182 of the hybrid filter assembly 2100, the first and second automated control valves 3880, 3882 may be provided in the form of a two-way valve, a three-way valve, a six-way valve, or other similar valves. For example, the first and second automated control valves 3880, 3882 may be provided as a six-way, top-mount AQUASTAR® mp6 plc valve, manufactured by Praher Plastics Austria GmbH of Österreich, Austria.

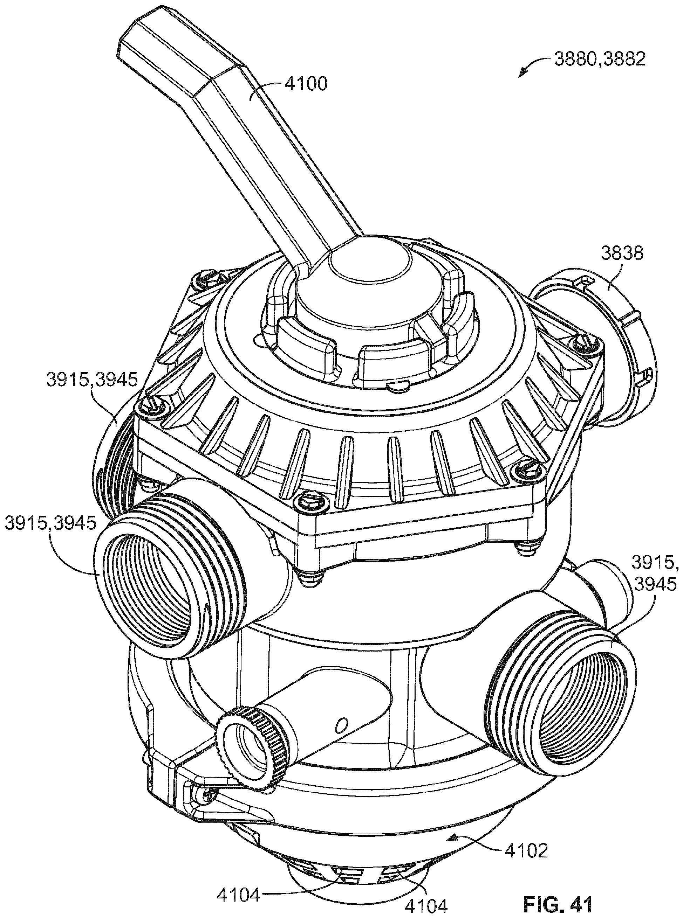

As best illustrated in FIG. 41, the first and second automated control valves 3880, 3882 of the hybrid filter assembly 3800 may be differently shaped and provided with different components in comparison to the automated control valves of the hybrid filter assemblies 200, 2100, 3400. For example, the first and second automated control valves 3880, 3882 may be provided in the form of a manifold 3910, one or more ports (e.g., ports 3915 or ports 3945), a handle 4100, and a diffuser assembly 4102. In some instances, the manifold 3910 may be imparted with a substantially cylindrical shape, although the manifold 3910 may also be provided in other shapes and forms. In addition, the manifold 3910 of the first automated control valve 3880 may include the one or more ports 3915 and the manifold 3910 of the second automated control valve 3882 may include one or more ports 3945. In certain instances, one or more of the ports 3915, 3945 may be provided with or coupled to a pressure gauge 3838. In such instances, the pressure gauge 3838 may be configured to monitor a pressure of the fluid flowing through the hybrid filter assembly 3800 and/or a fluid pressure within the first and second automated control valves 3880, 3882 (and thus the component of the hybrid filter assembly 3800 the first and second automated control valves 3880, 3882 is coupled to).

In some instances, the first and second automated control valves 3880, 3882 may further include the handle 4100. In some such instances, the handle 4100 may be designed to allow a user to manually switch the hybrid filter assembly 3800 between operational modes (e.g., the filtration mode, the backwash mode, the chemical cleaning mode, the bypass mode). In certain cases, the handle 4100 may also be designed to assist a user in opening and accessing an interior portion of the first and second automated control valves 3880, 3882. In yet other cases, the handle 4100 may be omitted.

In certain instances, the manifold 3910 of the first and second automated control valves 3880, 3882 may be integrally formed with or coupled to the diffuser assembly 4102. The diffuser assembly 4102 may be provided with one or more apertures 4104 through which a fluid can flow into and/or out of the diffuser assembly 4102. When the hybrid filter assembly 3800 operates in the filtration mode, water (e.g., from the swimming pool 110 of FIG. 1) may be provided to and dispersed by the diffuser assembly 4102. In some such cases, the dispersal of the water may help evenly distribute the water over the granular media 3815 of the first filtration stage 3810. In other instances, the diffuser assembly 4102 may be omitted.

In certain instances, the hybrid filter assembly 3800 may be operated in a backwash mode to recover the one or more membranes of the hybrid filter assembly 3800. The backwash mode utilized with the hybrid filter assembly 3800 may be any of the backwash modes, including variations thereof, discussed herein. In addition to backwashing, it can be beneficial to chemically clean the hybrid filter assembly 3800 because backwashing may not remove or neutralize all contaminants (e.g., organics, viruses, and bacteria) from the hybrid filter assembly 3800. In some instances, it can be useful to clean the one or more membrane filtration modules 3854 with one or more of a disinfectant or chemical cleaning agent such as chlorine, bromine, calcium hypochlorite, trichloroisocyanuric acid, dichloro-s-triazinetrione, other cleaning or bleaching agents, and combinations thereof. For example, the chemical cleaning agent may be selected from the group consisting of a chlorine-containing compound, a chlorine-containing solution, a bromine-containing compound, a bromine-containing solution, a bleaching agent, an acidic solution, and combinations thereof. In some such instances, the chemical cleaning agent may be selected from the group consisting of calcium hypochlorite, trichloroisocyanuric acid, dichloro-s-triazinetrione, and combinations thereof. Accordingly, FIGS. 12-20C and 26A-26C illustrate various instances of chemical cleaning systems which may be used to recover one or more of the membranes of the hybrid filter assembly 3800. In use, the hybrid filter assembly 3800 may be subjected to one or more backwashing operations, one or more chemical cleaning processes, and/or variations of the backwashing operations and chemical cleaning processes described herein.

In yet another example, one or more of the valves and/or components of the above-described hybrid filter assemblies 200, 2100, 3400, 3800 can be communicatively coupled to the central controller 150 of FIG. 1. The central controller 150 can implement a number of different methods and processes to effectuate different operational conditions and functions of the hybrid filter assemblies 200, 2100, 3400, 3800 (e.g., a filtration mode, a backwash mode, a chemical cleaning mode, a bypass mode) described with reference to FIGS. 12-20, 33A-33E, and 42-54. For example, the chemical cleaning systems 1200-2000 of FIGS. 12-20 the chemical cleaning systems 2600, 2620, 2640 of FIGS. 26A-26C, respectively, can be automated. As an additional example, the central controller may effectuate the operational conditions (e.g., the flow paths) described with reference to FIGS. 33A-33E. The central controller 150 may work in conjunction with, or independent from, one or more local controllers associated with the pool components 102 disclosed herein. For conciseness, the methods of FIGS. 42-54 reference a central controller (i.e., the central controller 150), although the one or more functions described in the methods may also be performed by one or more of the central controller 150 and one or more local controllers associated with the device(s) described herein (e.g., the hybrid filter assembly, the chemical dispenser, etc.). Alternatively, one or more local controllers associated with the pool components 102 may work in conjunction with, or independent from, the central controller 150 to effectuate the operational modes and other methods described with reference to FIGS. 12-20, 33A-33E, and 42-54.

A benefit of automating the chemical cleaning system is that it can be easier to operate and clean the filtration system and the hybrid filter assembly included therein. Accordingly, various methods for operating and cleaning a hybrid filter assembly (e.g., the hybrid filter assemblies 200, 2100, 3400, 3800 and variations thereof) are disclosed herein. For example, any reference to a hybrid filter assembly in the methods of FIGS. 42-54 as discussed below may be utilized with any of the hybrid filter assemblies 200, 2100, 3400, 3800, any of the chemical cleaning systems 1200-2000, 2600, 2620, 2640, and any variations thereof disclosed herein.

Further, automating the various cleaning modes, cleaning processes, and cleaning procedures described herein (e.g., the chemical cleaning mode and/or the backwash mode) may help maintain the operational efficiency of the hybrid filter assemblies 200, 2100, 3400, 3800. In some instances, the operational efficiency of the hybrid filter assemblies 200, 2100, 3400, 3800 may be determined by initiating a permeability check of one or more components of the hybrid filter assemblies 200, 2100, 3400, 3800 (e.g., a first filtration module, a second filtration module) and/or by initiating a permeability check of the hybrid filter assemblies 200, 2100, 3400, 3800 as a whole. In other instances, the operational efficiency of the hybrid filter assemblies 200, 2100, 3400, 3800 may be determined by monitoring one or more parameters of the hybrid filter assemblies 200, 2100, 3400, 3800 (e.g., permeability values, media headloss values).

It is to be understood that one or more of the values associated with the methods of FIGS. 42-54 (e.g., a first permeability value, a second permeability value, a media headloss value, etc.) may be measured at different time intervals. The one or more values described with reference to methods of FIGS. 42-54 may be measured on demand, manually implemented, or at predetermined time intervals (e.g., continuously, once a second, once a minute, once a day, once a week, once a month, etc.). Further, it is to be understood that the one or more of the values associated with the methods of FIGS. 42-54 may be measured more than once. For example, a first measurement of the one or more values may be carried out at a first time period followed by a second measurement carried out at a second time period, where the amount of time that elapses between the first time period and the second time period is determined by the predetermined time interval or another predetermined operational condition. In each instance, such measurements may be carried out by one or more systems provided with the aquatic application 100 and then received and stored by a controller (e.g., the central controller 150 of FIG. 1 and/or the local controllers of the pool components 102 of FIG. 1).

In addition, the predetermined values, thresholds, ranges, and other information described with reference to the methods of FIGS. 42-54 may be manually implemented or otherwise input into the system. For example, the predetermined values and predetermined ranges may be manually input into a user interface of a controller (e.g., the central controller 150 and/or the local controllers of the pool components 102), provided to the controller via a user device (e.g., the user device 160 of FIG. 1) or otherwise associated with and retained by the controller.

In some instances, a lookup table of predetermined values, thresholds, ranges, and other information may be stored by a controller (e.g., the central controller 150 and/or the local controllers of the pool components 102), and the controller may determine an appropriate action based on one or more of the variables discussed herein. In addition, the controller may include prestored lookup tables. Furthermore, the controller may be in communication with a network (e.g., the network 170 of FIG. 1) and may be capable of downloading lookup tables. The controller may select threshold values (e.g., a threshold permeability value, a threshold temperature value) from the lookup tables based on a number of factors including a determined pressure, flow rate, temperature, pH, turbidity, free chlorine content, ORP value, and/or other parameters.

Referring first to FIG. 42, a method 4200 for operating a hybrid filter system is illustrated. At a first step 4210, a system including a hybrid filter assembly, such as the aquatic application 100 of FIG. 1, is operated in a filtration mode. During the filtration mode, water from the swimming pool 110 can flow through the hybrid filter assembly as described in FIGS. 8A, 8B, and 33A. Thus, the filtration mode can be the default or normal operational mode for the system.

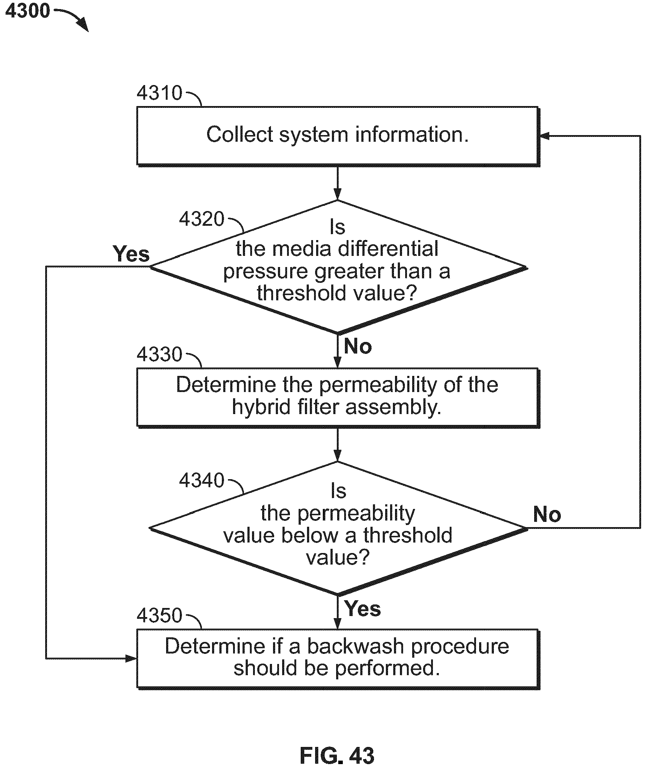

At step 4220, a controller, such as the central controller 150 of FIG. 1, can perform a first permeability check. See FIG. 43 for a detailed discussion of the procedure for the permeability check. The permeability check can determine the permeability of one or more membranes (e.g., the four membrane filtration modules 510a-510d of the second filtration stage 320 of FIG. 5A, the one or more membrane filtration modules 2154 of the second filtration stage 2120 of FIG. 21) of the hybrid filter. Thus, the first permeability check can determine whether the hybrid filter assembly has become fouled and should be cleaned. The central controller 150 can be designed to perform the first permeability check at a predetermined time or interval of time. For instance, the central controller 150 can be designed to perform the first permeability check once an hour, once a day, once a week, etc. In some embodiments, a user can manually prompt the central controller 150 to initiate the first permeability check.

The central controller 150 can be configured to analyze the results of the first permeability check to determine whether the hybrid filter assembly should be cleaned. In some embodiments, the central controller 150 can be designed to determine whether the first analyzed permeability value is above or below a first threshold permeability value. The first threshold permeability value can be a predetermined value for the system. In some instances, the first threshold permeability value can be set at a value between about 150 to about 350 (or between 150 to 300), although the first threshold permeability value may be somewhat less or even greater than these values. For example, the first threshold permeability value may be imparted with a value of at least about 100, or at least about 125, or at least about 150, or at least about 175, or at least about 200, or at least about 225, or at least about 250, or at least about 275, or at least about 300, or at least about 325, or at least about 350. As an additional example, the first threshold permeability value may be imparted with a value of at least 100, or at least 125, or at least 150, or at least 175, or at least 200, or at least 225, or at least 250, or at least 275, or at least 300, or at least 325, or at least 350. In some instances, the first threshold permeability value may fall within a range bounded by any minimum value and any maximum value as described above. In other instances, instead of using a single threshold permeability value, the central controller 150 may utilize a first threshold permeability range that may be bounded by any minimum value and any maximum value as described above.

If the analyzed first permeability value is above the first threshold permeability value or above the first threshold permeability range, then the central controller 150 can maintain the hybrid filter assembly in the filtration mode. However, if the analyzed first permeability value is below the first threshold permeability value or below the first threshold permeability range, then at step 4230, the controller can perform a check to determine if a backwash procedure was recently performed.

At step 4230, the central controller 150 can access a maintenance log or historical data of the hybrid filter assembly to determine when the last backwash procedure was performed. If the most recent backwash procedure was performed within a threshold time period, the central controller 150 can be designed to maintain the system in the filtration mode. The threshold time period can be provided as a predetermined period of time, such as one day, one week, etc. In some instances, the predetermined period of time is 24 hours. However, if the previous backwash procedure was not performed within the threshold time period, the method can proceed to step 4240.

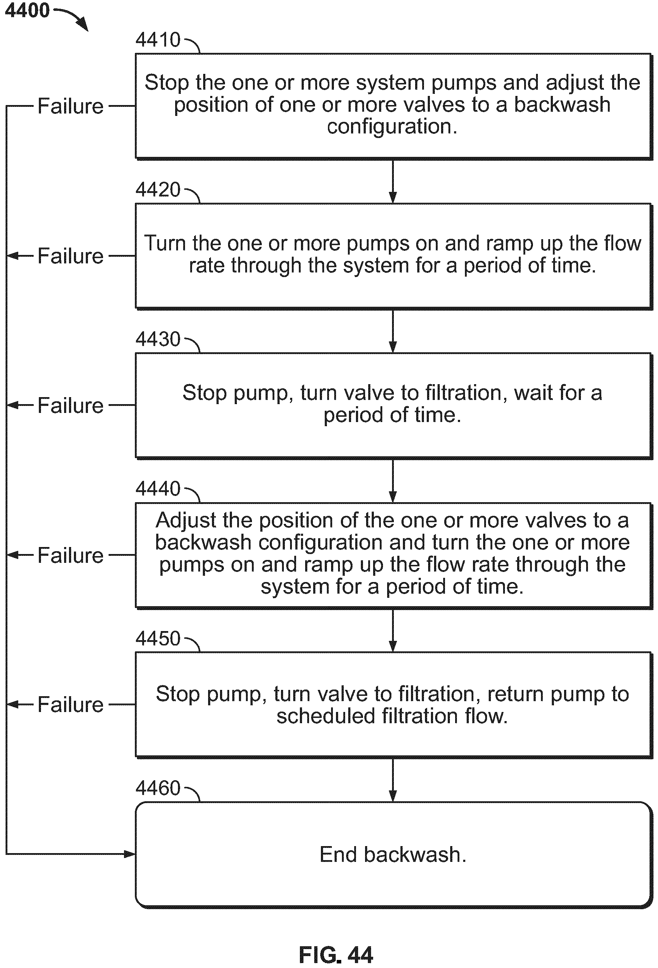

At step 4240, the central controller 150 can be designed to initiate a backwash procedure. During the backwash procedure, the water flow through the system can be reversed. Thus, water flow through the hybrid filter assembly can be reversed, as described above in FIGS. 10, 11, and 33B and in FIG. 44 discussed in more detail hereinbelow. The backwash procedure can remove particulates from the system and help improve the permeability of the membranes of the hybrid filter assembly.

Thus, at step 4250, the central controller 150 can be configured to perform a second permeability check after the backwash procedure is complete to determine the effectiveness of the backwash procedure. The central controller 150 can analyze the second permeability check to determine if the second analyzed permeability value is above or below a second threshold permeability value. In some embodiments, the second threshold permeability value can be the same as the first threshold permeability value. In some embodiments, the second threshold permeability value can be different than the first threshold permeability value. For instance, the second threshold permeability value can be greater than the first threshold permeability value because a backwash procedure may not restore the membrane filter permeability to the original permeability. However, it may not be necessary to perform additional cleaning procedures if the membrane permeability is still below an upper threshold value. In some instances, the second threshold permeability value can be imparted with a value between about 250 and about 375 (or between 250 and 375), although the second threshold permeability value may be less or greater than these values. For example, the second threshold permeability value can be imparted with a value of between about 300 and about 350 (or between 300 and 350). As an additional example, the second threshold permeability value can be imparted with a value of at least about 225, or at least about 250, or at least about 275, or at least about 300, or at least about 310, or at least about 320, or at least about 330, or at least about 340, or at least about 350, or at least about 360, or at least about 370, or at least about 375. As yet another example, the second threshold permeability value can be imparted with a value of at least 225, or at least 250, or at least 275, or at least 300, or at least 310, or at least 320, or at least 330, or at least 340, or at least 350, or at least 360, or at least 370, or at least 375. In some instances, the second threshold permeability value may fall within a range bounded by any minimum value and any maximum value as described above. In other instances, instead of using a single threshold permeability value, the central controller 150 may utilize a second threshold permeability range that may be bounded by any minimum value and any maximum value as described above.

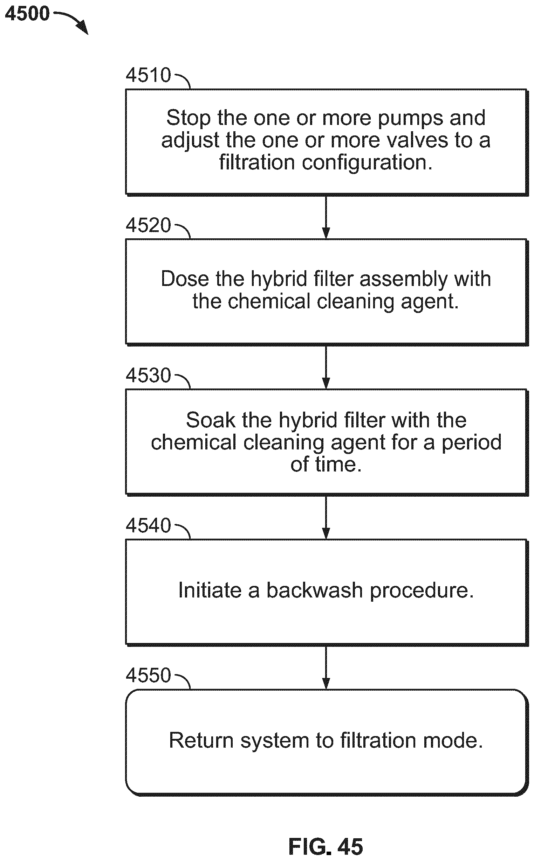

If the analyzed second permeability value is below the second threshold value or below the second threshold permeability range, then the central controller 150 can maintain the system in the filtration mode. However, if the analyzed second permeability value is above the second threshold permeability value or above the second threshold permeability range, then at step 4260, the central controller 150 can initiate a chemical cleaning procedure, which is described in more detail with respect to FIG. 45 hereinbelow. After the chemical cleaning procedure is completed, the hybrid filter assembly resumes normal operation in the filtration mode.

Now, referring to FIG. 43, a method 4300 for performing a permeability check is illustrated in more detail. The method 4300 can be performed at steps 4220 and 4250 of the method 4200 of FIG. 42.

At step 4310, the central controller 150 can be designed to collect various details about the system in the form of system information. The system information can include one or more of a flow rate, an inlet pressure of the hybrid filter assembly, an outlet pressure of the hybrid filter assembly, an inlet pressure of the second filtration stage, a temperature of the water passing through the system, or combinations thereof. Thus, the system can include one or more sensors designed to monitor these parameters (e.g., flow meter, pressure transducer, temperature sensor, etc.) whereby the sensor(s) are in communication with the conduit, fluid, and the like.

At step 4320, the central controller 150 can determine the media differential pressure (i.e., the media headloss). The controller can determine the media headloss according to Formula I.

$$\mathrm{Media\_Headloss \ = \ Inlet\_Pressue - Module\_Pressure}$$

$$\mathrm{Formula \ I}$$

Further, the module headloss can be determined according to Formula II.

$$\mathrm{Module\_Headloss \ = \ Module\_Pressure - Outlet\_Pressure}$$

$$\mathrm{Formula \ II}$$

The central controller 150 can then determine if the media headloss is greater than or less than a media headloss threshold value. If the media headloss value is greater than the media headloss threshold value, then the method can proceed to step 4350 and determine if a backwash procedure should be performed (i.e., step 4230 and/or step 4260 of FIG. 42). However, if the media headloss value is less than the media headloss threshold value, the method can proceed to step 4330. In some embodiments, the media headloss threshold value is a predetermined value. For instance, the media headloss threshold value can be approximately 11 pounds per square inch (PSI). In other instances, the media headloss threshold value can be a value between about 4 PSI to about 20 PSI. In further instances, the media headloss threshold value can be a value between about 8 PSI to about 15 PSI.

At step 4330, the central controller 150 can be designed to determine the permeability of the hybrid filter assembly. In some embodiments, the permeability of the hybrid filter assembly can be determined according to Formula III below.

$$\mathrm{System \ Permeability \ = ((Flux)/((TMP) * 100000) * 100000 * (Viscosity/0.001))}$$

$$\mathrm{Formula \ III}$$

The Flux can be defined by Formula IV.

$$\mathrm{Flux \ = \ (System \ Flow) * 227.125707/(membrane \ surface \ area)}$$

$$\mathrm{Formula \ IV}$$

TMP can represent the Transmembrane Pressure and be described by Formula V.

$$\mathrm{TMP \ = \ (Filter \ Headloss) * 0.06894757}$$

$$\mathrm{Formula \ V}$$

Wherein the Filter Headloss of Formula V can be determined by Formula VI.

$$\text{Filter Headloss} = \text{Inlet Pressure} - \text{Outlet Pressure}$$

$$\text{Formula VI}$$

Referring back to Formula III, the Viscosity can be calculated according to Formula VII.

Viscosity = ((1.855 - 0.05596 * ((Water Temperature - 32) * 5/9) + 0.0006533 * ((Water Temperature - 32) * 5/9)^2)/0.99712)/1000

Formula VII

As discussed above, some hybrid filter systems can include one or more bypass lines (e.g., the chemical cleaning systems 1500-1800 of FIGS. 15-18, respectively). Thus, the central controller 150 can be designed to determine an adjusted permeability value that accounts for the changes in flow caused by the bypass line. In some embodiments, the adjusted permeability value can be determined according to Formula VIII.

$$\text{Adjusted\_Permeability}$$
$$= ((\text{System Flow} - \text{Bypass Flow})$$
$$* \, 227.125707/(\text{membrane surface area})/((\text{Module Pressure}$$
$$- \text{Outlet Pressure}) * 0.06894757 * 100000) * 100000 * (\frac{\text{Viscosity}}{0.001})$$

$$\text{Formula VIII}$$

The bypass flow can be defined by Formula IX.

$$\text{Bypass\_flow} = (((( \text{Filter\_Headloss}/2.31) * 100/((\text{bypass length})/12))$$
$$* (\text{pipe diameter of bypass})^{\wedge}4.8655)/0.098303)^{\wedge}(\frac{1}{1.852})$$

$$\text{Formula IX}$$

The central controller 150 can also be designed to determine the resistance of the hybrid filter assembly. In some embodiments, the resistance can be determined using the calculated permeability according to Formula X.

$$\text{Resistance} = (1/\text{Permeablity}) * 358,000,000,000,000$$

$$\text{Formula X}$$

In some embodiments, the filter resistance can be determined according to Formula XI.

$$\text{Resistance} = (\text{TMP} * 100000)/(\frac{\text{Flux}}{3600000} * \text{Viscosity})$$

$$\text{Formula XI}$$

Table 1 summarizes the units of measure for the parameters used in Formulas I-XI.

Table 1:

| Parameter | Unit |
|---|---|
| Inlet Pressure | Psi (pounds per square inch) |

(continued)

| Parameter | Unit |
|---|---|
| Outlet Pressure | Psi |
| Module Pressure | Psi |
| Filter Headloss | Psi |
| Module Headloss | Psi |
| Media Headloss | Psi |
| TMP | bar |
| System Flow | GPM (gallons per minute) |
| Flux | L/m$^2$h (liters per square meter per hour) |
| Water Temp | Fahrenheit |
| Viscosity | N-s/m$^2$ (newton-second per square meter) |
| System Permeability | N/A |
| Bypass Flow | GPM (gallons per minute) |
| Adjusted Permeability | N/A |
| Membrane Surface Area | m$^2$ (square meters) |
| Bypass Length | feet |
| Pipe Diameter of Bypass | inches |

Still referring to FIG. 43, at step 4340, the central controller 150 can determine if the permeability of the hybrid filter assembly is above or below a permeability threshold value. The permeability threshold value can be the first permeability threshold value and/or the second permeability threshold value from the method 4200 of FIG. 42. Thus, if the permeability value is above the threshold permeability value, then the central controller 150 can maintain the system in a filtration mode and continue to monitor and collect the system information. However, if the permeability is below the threshold permeability value, the central controller 150 can proceed to step 4350 and determine if a backwash procedure should be performed (i.e., step 4230 and/or step 4260 of FIG. 42). In some instances, the central controller 150 can be designed to confirm that the permeability of the hybrid filter assembly is below the threshold permeability value for a threshold period of time. In some embodiments, the threshold period of time can be at least about 10 seconds. In some embodiments, the threshold period of time can be at least about 20 seconds. In other embodiments, the threshold period of time can be no more than about 60 seconds. In yet other embodiments, the threshold period of time can be no more than about 30 seconds. In some embodiments, the threshold period of time can be at least 10 seconds. In some embodiments, the threshold period of time can be at least 20 seconds. In other embodiments, the threshold period of time can be no more than 60 seconds. In yet other embodiments, the threshold period of time can be no more than 30 seconds.

Now, turning to FIG. 44, a method 4400 for performing a backwash procedure is illustrated. The method 4400 can be performed at steps 4240 and/or part of the chemical cleaning procedure performed at step 4260 of the method 4200 of FIG. 42.

At step 4410, the position of one or more valves for the system can be reversed so that the flow of the water through the hybrid filter assembly is reversed. Thus, the one or more pumps included in the system (e.g., the variable speed pump 122 and/or the booster pump 123 of FIG. 1) can be stopped to adjust the valving. After the valving is adjusted, it can be beneficial to wait for a period of time (e.g., approximately 30 seconds) to allow the pressure and flow in the system to adjust.

At step 4420, the one or more pumps can be turned back on, and the hybrid filter assembly can be backwashed. The fluid flow rate through the system can be increased to a desired flow rate. In some instances, the fluid flow rate can be increased to a flow rate of between about 50 GPM to about 90 GPM (about 190 liters per minute (LPM) to about 340 LPM). In other instances, the fluid flow rate can be increased to a flow rate of between about 65 GPM to about 75 GPM (about 250 LPM to about 285 LPM). In further instances, the fluid flow rate can be increased to a flow rate of about 70 GPM (265 LPM). In some instances, the fluid flow rate can be increased to a flow rate of between 50 GPM to 90 GPM (190 liters per minute (LPM) to 340 LPM). In other instances, the fluid flow rate can be increased to a flow rate of between 65 GPM to 75 GPM (250 LPM to 285 LPM). In further instances, the fluid flow rate can be increased to a flow rate of 70 GPM (265 LPM). In yet further instances, the fluid flow rate may fall within a range bounded by any minimum value and any maximum value as described above.

The backwash can be maintained for a predetermined period of time. However, when backwashing there is a possibility that some media from the first filtration stage can become entrained in the backwashing fluid and be carried out of the hybrid filter assembly. Thus, the backwash time period can be adjusted so that the amount of media that may be washed out of the hybrid filter assembly is reduced or minimized. Accordingly, in some instances, the backwash is maintained for the predetermined period of time of between about 10 seconds to about 60 seconds. In further instances, the backwash is maintained for the predetermined period of time of between about 20 seconds to about 40 seconds. In some instances, the backwash is maintained for the predetermined period of time of at least approximately 30 seconds. In yet other instances, the backwash is maintained for the predetermined period of time of between 10 seconds to 60 seconds. In further instances, the backwash is maintained for the predetermined period of time of between 20 seconds to 40 seconds. In yet further instances, the backwash is maintained for the predetermined period of time of at least 30 seconds. In further instances, the backwash may also be maintained for predetermined periods of time that are somewhat less or even greater than the predetermined periods of time recited herein. In some instances, the backwash may be maintained for predetermined periods of time that fall within a range bounded by any minimum value and any maximum value as described above. In other instances, instead of using a single predetermined period of time, the central controller 150 may maintain the backwash for a predetermined range of times that may be bounded by any minimum value and any maximum value as described above.

At step 4430, the one or more pumps can be stopped, and the valving can be adjusted back to the filtration mode position(s). At this point, a rinse operation can be performed to flush the contaminants removed from the hybrid filter from the system's conduit lines. In some instances, the rinse operation can be maintained for at least about 1 minute. In other instances, the rinse operation can be maintained for at least 1 minute. In yet other instances, the flush operation can be maintained for at least about 1 minute to no more than about 15 minutes (or at least about 1 minute to no more than 15 minutes), although the flush operation may be maintained for longer or shorter time periods than those recited herein.

At step 4440, a second optional backwash can be performed. Thus, the pump can be stopped again, and the valve position(s) can be adjusted to the backwash configuration. Similar to the first backwash, the one or more pumps can be increased to a desired flow rate, which can be maintained for a predetermined time period.

At step 4450, the pump can be stopped, and the valves can be adjusted back to the filtration orientation. The pump can then be turned back on so that the system is operating in the filtration mode. Thus, the backwash method ends at 2360.

As discussed above, one or more components of the system (e.g., the valves and the pumps) can be automated. Therefore, the central controller 150 can be designed to perform the above steps. However, if the central controller 150 fails to perform a step, the backwash procedure can end, and the hybrid filter assembly can be maintained or returned to the filtration mode. Additionally, in some embodiments, the above steps can be manually performed.

Now referring to FIG. 45, a method 4500 for chemically cleaning the hybrid filter assembly is illustrated. The method 4500 can be performed at step 4260 of the method 4200 of FIG. 42.

At step 4510, the one or more pumps of the system can be turned off or maintained off. For example, in the method 4200 of FIG. 42, the chemical cleaning procedure can be performed after a backwash procedure. In some instances, the method 4400 of FIG. 44 is performed prior to, or as the first step of the method 4500. Thus, after the backwash procedure is completed the one or more pumps may already be turned off. However, the one or more valves in the system can be switched back to the filtration mode orientation or maintained in the filtration mode orientation.

At step 4520, the chemical cleaning agent 1212 can be introduced into the hybrid filter assembly. As discussed in FIGS. 12-20 and 26A-26C, the hybrid filter assembly can include one or more valves or components, such as pumps, that can control the flow of the chemical cleaning agent 1212. Accordingly, depending on the embodiment, the one or more valves or components may need to be adjusted to permit the delivery of the chemical cleaning agent 1212 to the hybrid filter assembly. The amount of the chemical cleaning agent 1212 delivered to the hybrid filter assembly can depend on the size of the filter and/or the level of fouling of the filter. In some instances, the hybrid filter assembly can be dosed with between about 200 milliliters of liquid chlorine to about 450 milliliters of liquid chlorine (or 200 milliliters to 450 milliliters of liquid chlorine), although the hybrid filter assembly may be dosed with somewhat less or even more liquid chlorine than these values. In further instances, the hybrid filter assembly can be dosed with between about 275 milliliters of liquid chlorine to about 400 milliliters of liquid chlorine. In further instances, the hybrid filter assembly can be dosed with between 275 milliliters of liquid chlorine to 400 milliliters of liquid chlorine. In other cases, the hybrid filter assembly can be dosed with at least about 100 milliliters of liquid chlorine, or at least about 150 milliliters of liquid chlorine, or at least about 200 milliliters of liquid chlorine, or at least about 225 milliliters of liquid chlorine, or at least about 250 milliliters of liquid chlorine, or at least about 275 milliliters of liquid chlorine, or at least about 300 milliliters of liquid chlorine, or at least about 325 milliliters of liquid chlorine, or at least about 350 milliliters of liquid chlorine, or at least about 375 milliliters of liquid chlorine, or at least about 400 milliliters of liquid chlorine, or at least about 450 milliliters of liquid chlorine, or at least about 500 milliliters of liquid chlorine. In yet other cases, the hybrid filter assembly can be dosed with at least 100 milliliters of liquid chlorine, or at least 150 milliliters of liquid chlorine, or at least 200 milliliters of liquid chlorine, or at least 225 milliliters of liquid chlorine, or at least 250 milliliters of liquid chlorine, or at least 275 milliliters of liquid chlorine, or at least 300 milliliters of liquid chlorine, or at least 325 milliliters of liquid chlorine, or at least 350 milliliters of liquid chlorine, or at least 375 milliliters of liquid chlorine, or at least 400 milliliters of liquid chlorine, or at least 450 milliliters of liquid chlorine, or at least 500 milliliters of liquid chlorine. In some instances, the dose of the liquid chlorine provided to the hybrid filter assembly may fall within a range bounded by any minimum value and any maximum value as described above. In other instances, the dose of liquid chlorine may be provided as a dose range that may be bounded by any minimum value and any maximum value as described above.

In some instances of the step 4520, the chemical cleaning agent 1212 may be selected from the group consisting of a chlorine-containing compound, a chlorine-containing solution, a bromine-containing compound, a bromine-containing solution, a bleaching agent, an acidic solution, and combinations thereof. In some such instances, the chemical cleaning agent may be selected from the group consisting of calcium hypochlorite, trichloroisocyanuric acid, dichloro-s-triazinetrione, and combinations thereof. In each of the various instances, the hybrid filter assembly may be dosed with between about 100 milliliters to about 500 milliliters of the chemical cleaning agent 1212, although the amount of the chemical cleaning agent 1212 provided to the hybrid filter assembly may be somewhat less than or even greater than these values. For example, the hybrid filter assembly can be dosed with at least about 100 milliliters of the chemical cleaning agent 1212, or at least about 150 milliliters of the chemical cleaning agent 1212, or at least about 200 milliliters of the chemical cleaning agent 1212, or at least about 225 milliliters of the chemical cleaning agent 1212, or at least about 250 milliliters of the chemical cleaning agent 1212, or at least about 275 milliliters of the chemical cleaning agent 1212, or at least about 300 milliliters of the chemical cleaning agent 1212, or at least about 325 milliliters of the chemical cleaning agent 1212, or at least about 350 milliliters of the chemical cleaning agent 1212, or at least about 375 milliliters of the chemical cleaning agent 1212, or at least about 400 milliliters of the chemical cleaning agent 1212, or at least about 450 milliliters of the chemical cleaning agent 1212, or at least about 500 milliliters of the chemical cleaning agent 1212. As an additional example, the hybrid filter assembly can be dosed with at least 100 milliliters of the chemical cleaning agent 1212, or at least 150 milliliters of the chemical cleaning agent 1212, or at least 200 milliliters of the chemical cleaning agent 1212, or at least 225 milliliters of the chemical cleaning agent 1212, or at least 250 milliliters of the chemical cleaning agent 1212, or at least 275 milliliters of the chemical cleaning agent 1212, or at least 300 milliliters of the chemical cleaning agent 1212, or at least 325 milliliters of the chemical cleaning agent 1212, or at least 350 milliliters of the chemical cleaning agent 1212, or at least 375 milliliters of the chemical cleaning agent 1212, or at least 400 milliliters of the chemical cleaning agent 1212, or at least 450 milliliters of the chemical cleaning agent 1212, or at least 500 milliliters of the chemical cleaning agent 1212. In some instances, the dose of the chemical cleaning agent 1212 provided to the hybrid filter assembly may fall within a range bounded by any minimum value and any maximum value as described above. In other instances, the dose of the chemical cleaning agent 1212 may be provided as a dose range that may be bounded by any minimum value and any maximum value as described above.

At step 4530, the flow of the chemical cleaning agent 1212 to the hybrid filter assembly can be stopped, and one or more components of the hybrid filter assembly (e.g., the four membrane filtration modules 510a-510d of the second filtration stage 320) can be soaked with the chemical cleaning agent 1212 for a predetermined period of time. A benefit of soaking the hybrid filter assembly with the chemical cleaning agent is that it can give the chemical cleaning agent 1212 time to neutralize contaminants. In some embodiments, the hybrid filter assembly can be soaked between about 1 hour to about 24 hours (or 1 hour to 24 hours), although the hybrid filter assembly may also be soaked for less time or more time than described herein. For example, the hybrid filter assembly can be soaked between about 2 hours to about 4 hours (or between 2 hours to 4 hours). As yet another example, the hybrid filter assembly can be soaked for about 3 hours to about 6 hours (or for 3 hours to 6 hours). For example, the hybrid filter assembly can be soaked between 1 hour to 5 hours (or between 1 hour to 5 hours). In further cases, the hybrid filter assembly can be soaked for at least about 30 minutes, or at least about 1 hour, or at least about 2 hours, or at least about 3 hours, or at least about 4 hours, or at least about 5 hours, or at least about 6 hours, or at least about 7 hours, or at least about 8 hours, or at least about 9 hours, or at least about 10 hours, or at least about 11 hours, or at least about 12 hours, or at least about 13 hours, or at least about 14 hours, or at least about 15 hours, or at least about 16 hours, or at least about 17 hours, or at least about 18 hours, or at least about 19 hours, or at least about 20 hours, or at least about 21 hours, or at least about 22 hours, or at least about 23 hours, or at least about 24 hours. In other cases, the hybrid filter assembly can be soaked for at least 30 minutes, or at least 1 hour, or at least 2 hours, or at least 3 hours, or at least 4 hours, or at least 5 hours, or at least 6 hours, or at least 7 hours, or at least 8 hours, or at least 9 hours, or at least 10 hours, or at least 11 hours, or at least 12 hours, or at least 13 hours, or at least 14 hours, or at least 15 hours, or at least 16 hours, or at least 17 hours, or at least 18 hours, or at least 19 hours, or at least 20 hours, or at least 21 hours, or at least 22 hours, or at least 23 hours, or at least 24 hours. In some instances, the predetermined time that one or more components of the hybrid filter assembly may be soaked with the chemical cleaning agent may fall within a range bounded by any minimum value and any maximum value as described above. In other instances, instead of using a single predetermined time, the central controller 150 may utilize a predetermined range of times that may be bounded by any minimum value and any maximum value as described above.

At step 4540, a backwash procedure can be initiated after the hybrid filter assembly has been soaked for the predetermined time or the predetermined range of times. The backwash procedure can be performed according to the method 4400 of FIG. 44. A benefit of backwashing the hybrid filter assembly after the chemical cleaning procedure is that the chemical cleaning agent 1212 and contaminants can be flushed from the system.

Thus, at step 4550, after the backwash procedure is completed, the hybrid filter assembly can be returned to the filtration mode.

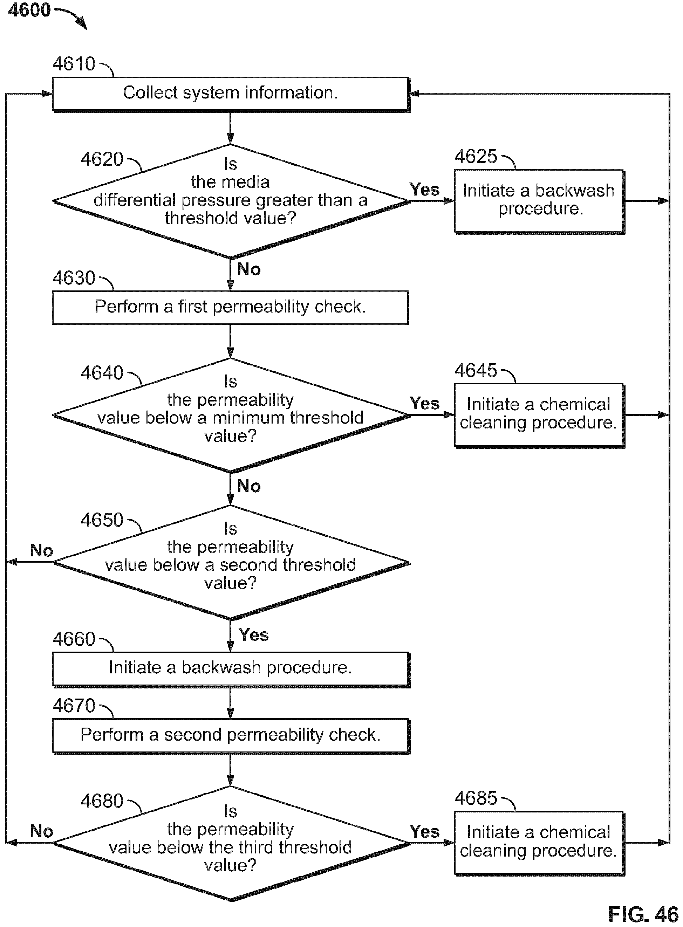

Now referring to FIG. 46, an alternative method 4600 for operating a hybrid filter assembly is illustrated. The method 4600 is similar to the method 4200 of FIG. 42. However, here, the backwash and/or the chemical cleaning procedures can differ. At a first step 4610, the central controller 150 can be designed to collect various details about the system in the form of system information. The system information can include one or more of a flow rate, an inlet pressure of the hybrid filter assembly, an outlet pressure of the hybrid filter assembly, an inlet pressure of the second filtration stage, a temperature of the water passing through the system, or combinations thereof. Thus, the system can include one or more sensors designed to monitor these parameters (e.g., flow meter, pressure transducer, temperature sensor, etc.).

At step 4620, the central controller 150 can determine the media differential pressure (i.e., the media headloss). In some embodiments, the media differential pressure can be determined according to Formula I above. The central controller 150 can then determine if the media headloss is greater than or less than a media headloss threshold value. If the media headloss value is greater than the media headloss threshold value, then the method can proceed to step 4625 and initiate a backwash procedure. The backwash procedure can be performed according to the method 4400 of FIG. 44. Once the backwash procedure is completed, the method can return to step 4610 and the central controller 150 can continue to monitor the system. However, if the media headloss is less than the media headloss threshold value, the method can proceed to step 4630. In some embodiments, the media headloss threshold value is a predetermined value. For instance, the media headloss threshold value can be approximately 11 PSI (approximately 76,000 Pa). In other instances, the media headloss threshold value can be a value between about 4 PSI to about 20 PSI (about 28,000 Pa to about 138,000 Pa). In further instances, the media headloss threshold value can be a value between about 8 PSI to about 15 PSI (about 55,000 Pa to about 103,000 Pa). In yet other instances, the media headloss threshold value can be 11 PSI (76,000 Pa). In other instances, the media headloss threshold value can be a value between 4 PSI to 20 PSI (28,000 Pa to 138,000 Pa). In further instances, the media headloss threshold value can be a value between 8 PSI to 15 PSI (55,000 Pa to 103,000 Pa). In some instances, the media headloss threshold value may fall within a range bounded by any minimum value and any maximum value as described above. In other instances, instead of using a single media headloss threshold value, the central controller 150 may utilize a media headloss threshold range that may be bounded by any minimum value and any maximum value as described above.

At step 4630, the central controller 150 can be designed to determine the permeability of the hybrid filter assembly during a first permeability check operation. In some embodiments, the permeability of the hybrid filter assembly can be determined according to Formula III above.

At step 4640, the central controller 150 can determine if the permeability of the hybrid filter assembly is above or below a minimum permeability threshold value. The minimum threshold permeability value can be a predetermined value for the system. In some instances, the minimum threshold permeability value can be set at a value of between about 75 to about 225 (or a value of 75 to 225). In other instances, the minimum threshold permeability value can be set at a value of approximately 150 (or a value of 150). In other examples, the minimum threshold permeability value can be set at a value of approximately 100 (or a value of 100). In still further instances, the minimum threshold permeability value can be set at a value of approximately 200 (or a value of 200). In some instances, the minimum threshold permeability value may fall within a range bounded by any minimum value and any maximum value as described above. In other instances, instead of using a minimum threshold permeability value, the central controller 150 may utilize a minimum threshold permeability range that may be bounded by any minimum value and any maximum value as described above.

If the analyzed first permeability value is below the minimum permeability threshold value or a minimum permeability threshold range, then the central controller 150 can be designed to initiate a chemical cleaning procedure at step 4645. In some instances, step 4645 can be performed immediately or shortly after step 4640. A benefit of proceeding directly to a chemical cleaning procedure may be that the chemical cleaning procedure can be more effective at cleaning the hybrid filter assembly as compared to the backwash procedure alone.

However, if the analyzed first permeability value is above the minimum permeability threshold value, then at step 4650, the central controller 150 can further determine if the analyzed first permeability value is above or below a second threshold permeability value. The second threshold permeability value can be a predetermined value for the system. In some instances, the second threshold permeability value can be set to a value greater than the minimum threshold permeability value. For example, the second threshold permeability value can be set to a value of between about 150 to about 350 (or between 150 to 350). In other instances, the second threshold permeability value can be set at a value of approximately 300 (or a value of 300). For example, the second threshold permeability value may be imparted with a value of at least about 100, or at least about 125, or at least about 150, or at least about 175, or at least about 200, or at least about 225, or at least about 250, or at least about 275, or at least about 300, or at least about 325, or at least about 350, or at least about 375. As an additional example, the first threshold permeability value may be imparted with a value of at least 100, or at least 125, or at least 150, or at least 175, or at least 200, or at least 225, or at least 250, or at least 275, or at least 300, or at least 325, or at least 350, or at least 375. In some instances, the second threshold permeability value may fall within a range bounded by any minimum value and any maximum value as described above. In other instances, instead of using a single second threshold permeability value, the central controller 150 may utilize a second threshold permeability range that may be bounded by any minimum value and any maximum value as described above.

If the analyzed first permeability value is above the second threshold permeability value or the second threshold permeability range, then the central controller 150 can maintain the system in the filtration mode and continue to monitor the system. However, if the analyzed first permeability value is below the second threshold permeability value or the second threshold permeability range, then at step 4660, the central controller 150 can initiate a backwash procedure.

At step 4660, the backwash procedure can be performed according to the method 4400 of FIG. 44.

Then, at step 4670, the central controller can be designed to perform a second permeability check to determine the effectiveness of the backwash procedure. Similar to the first permeability check, the permeability of the hybrid filter assembly can be determined according to Formula III above.

At step 4680, the central controller 150 can analyze the second permeability check to determine if the second analyzed permeability value is above or below a third threshold permeability value. In some embodiments, the third threshold permeability value can be the same as the second threshold permeability value. In some embodiments, the third threshold permeability value can be different than the second threshold permeability value. For instance, the third threshold permeability value can be greater than the second threshold permeability value because a backwash procedure may not restore the membrane filter permeability to the original permeability. However, it may not be necessary to perform additional cleaning procedures if the membrane permeability is still below an upper threshold value. In some instances, the third threshold permeability value can be equal to an upper threshold value. In some embodiments, the third threshold permeability value can be imparted with a value of about 250 to about 375 (or 250 to 375), although the third threshold permeability value may be imparted with a value that is somewhat less or greater than the aforementioned values. For example, the third threshold permeability value may be imparted with a value of or at least about 225, or at least about 250, or at least about 275, or at least about 300, or at least about 325, or at least about 350, or at least about 375, or at least about 400. As an additional example, the first threshold permeability value may be imparted with a value of at least 100, or at least 125, or at least 150, or at least 175, or at least 200, or at least 225, or at least 250, or at least 275, or at least 300, or at least 325, or at least 350, or at least 375, or at least 400. In some instances, the third threshold permeability value may fall within a range bounded by any minimum value and any maximum value as described above. In other instances, instead of using a single third threshold permeability value, the central controller 150 may utilize a third threshold permeability range that may be bounded by any minimum value and any maximum value as described above.

However, if the analyzed second permeability value is below the third threshold permeability value or the third threshold permeability range, at step 4685, the central controller 150 can be designed to initiate a chemical cleaning procedure. In some instances, the chemical cleaning procedure can be performed immediately or shortly after step 4680. However, the chemical cleaning procedure may also be delayed. It can be beneficial to delay a cleaning procedure, such as the backwash and/or chemical cleaning procedure because it may be not ideal to swim in the swimming pool 110 while the hybrid filter assembly is being cleaned. Thus, the following embodiments discuss methods for delaying (e.g., scheduling) one or more cleaning procedures.

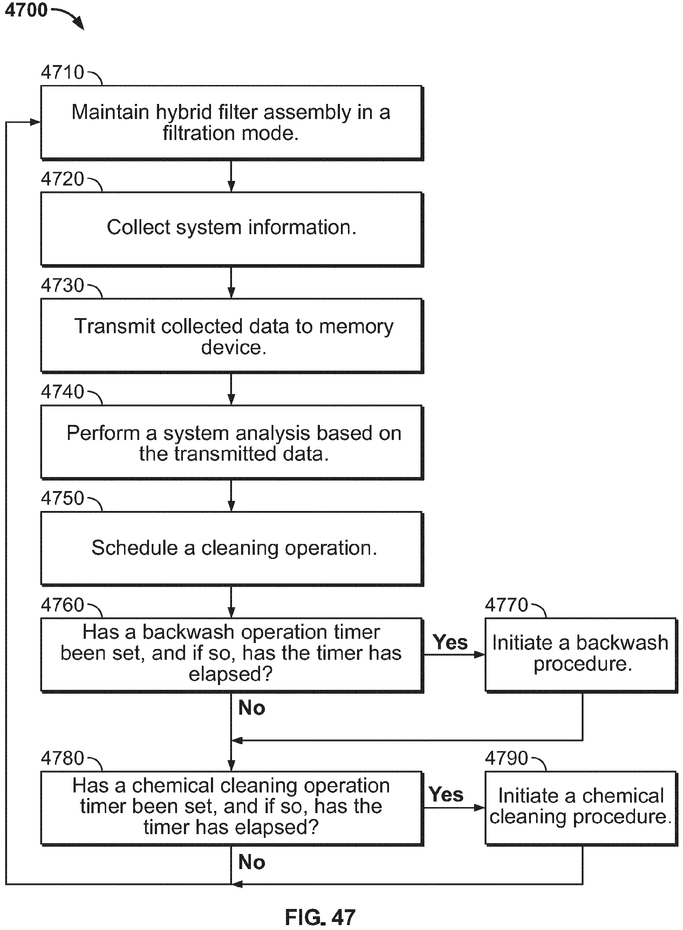

Turning to FIG. 47, a first method 4700 for scheduling a backwash cleaning operation and a chemical cleaning operation is illustrated. The method 4700 can be used in conjunction with the methods 4200-4600 of FIGS. 42-46.

At a first step 4710, the system including the hybrid filter assembly is operated in a filtration mode. As discussed above, during the filtration mode, water from the swimming pool 110 can flow through the hybrid filter assembly as described in FIGS. 8A, 8B, and 33A. Thus, the filtration mode can be the default or normal operational mode for the system.

At step 4720, the central controller 150 can be designed to collect various details about the system in the form of system information. Similar to step 4310, here the system information can include one or more of a flow rate, an inlet pressure of the hybrid filter assembly, an outlet pressure of the hybrid filter assembly, an inlet pressure of the second filtration stage, a temperature of the water passing through the system, or combinations thereof. Thus, the system can include one or more sensors designed to monitor these parameters (e.g., flow meter, pressure transducer, temperature sensor, etc.), whereby the sensors are disposed in the appropriate location for measurement and in communication with the conduit, housing, fluid and the like.

At step 4730, the central controller 150 can transmit the collected data to a memory device. Referring back to FIG. 1, the memory device can be communicatively coupled to the central controller 150 via the network 170.

At step 4740, the central controller can be designed to perform a system analysis based on the transmitted data. The system analysis can include at least one of a permeability check, a check to determine when the most recent backwash procedure was performed, a check to determine when the most recent chemical cleaning procedure was performed, an analysis to determine a media differential pressure (i.e., a media headloss), and any other analysis of a system operational parameter such as a flow rate, an inlet pressure of the hybrid filter assembly, an outlet pressure of the hybrid filter assembly, an inlet pressure of the second filtration stage, and a temperature of the water passing through the system. The transmitted data can include historical data. Thus, in some instances, the system analysis can be based on current data. In other instances, the system analysis can be performed on historical data. Further, in some instances, the system analysis can be based on both current and historical data. Utilizing both current and historical data can be beneficial because not all system parameters may be monitored at the same frequency. However, it can be desirable to perform a system analysis without having to collect updated information.

At step 4750, the central controller can schedule a cleaning operation based on the analyzed system data. In some instances, the cleaning operation can be scheduled to be initiated immediately or in the near future. For example, it can be beneficial to perform a cleaning operation immediately if the system analysis determines that the permeability of the hybrid filter assembly is below a minimum permeability threshold. In other instances, the cleaning operation can be scheduled for a later time period. It can be desirable to delay a cleaning operation if the aquatic application 100 is currently in use. Thus, in some instances, the cleaning operation can be delayed by a set period of time (e.g., one hour, four hours, etc.). In other instances, the cleaning operation can be delayed until a predetermined time (e.g., a specific time of day). The predetermined time can be a time when the aquatic application 100 is not typically being used by swimmers, for example, at nighttime. A benefit of scheduling the cleaning operation for a time when the aquatic application 100 is unlikely to be in use is that the cleaning operation may not interrupt swimmers from enjoying the aquatic application 100. The cleaning operation can include at least one of a backwash operation and a chemical cleaning operation. Thus, the below steps illustrate a portion of a scheduling operation.

At step 4760, the central controller 150 can determine if a backwash operation timer has been set. In some instances, the central controller 150 can automatically set the backwash operation timer. For example, following a backwash procedure, the central controller 150 can start a backwash operation timer to indicate when a subsequent backwash procedure may need to be performed. Thus, the backwash timer can be set for a specific time period so that a backwash cleaning operation is performed on a routine basis. In some instances, the backwash operation time period can be manually selected by a user and input into the aquatic application 100 via the user device 160 or another user interface. In other instances, the central controller 150 can determine an optimal backwash operation time period based on the analyzed system data. For instance, the analyzed data may show that the hybrid filter assembly tends to experience the most fouling over weekends. Therefore, the central controller 150 can determine that an optimal time period to clean the hybrid filter assembly is before, during, and/or after the weekend.

The central controller 150 can further determine whether the backwash operation timer has elapsed. If the backwash operation timer has elapsed, then at step 4770, the central controller 150 can initiate a backwash procedure. The backwash procedure can be performed according to the method 4400 of FIG. 44. Once the backwash procedure is completed, the method can proceed to step 4780 to determine if a chemical cleaning operation timer has been set. However, if the backwash operation timer has not elapsed, then the method can proceed directly to step 4780.

At step 4780, the central controller 150 can determine if a chemical cleaning operation timer has been set. Similar to the backwash operation timer, the chemical cleaning timer can be set by the user or the central controller 150. If the chemical cleaning operation timer has elapsed, then at step 4790, the central controller 150 can initiate a chemical cleaning procedure. The chemical cleaning procedure can be performed according to the method 4500 of FIG. 45. Once the chemical cleaning procedure is completed, the central controller can return the system to a filtration mode. However, if the chemical cleaning operation timer has not elapsed, then the central controller 150 can return the system to the filtration mode after the backwash procedure is completed.

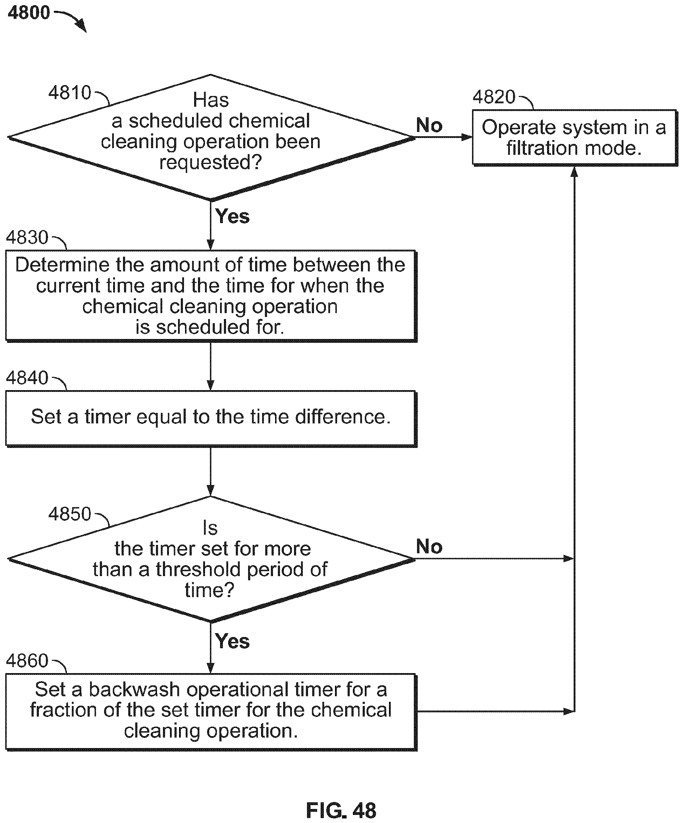

Now turning to FIG. 48, a second method 4800 for scheduling a backwash cleaning operation and/or a chemical cleaning operation is illustrated. The method 4800 can be used in conjunction with the methods 4200-4600 of FIGS. 42-46.

At step 4810, the central controller 150 can determine if a scheduled cleaning operation has been requested. If the central controller 150 determines that no request for a chemical cleaning procedure has been made, then the central controller 150 can maintain or return the system to the filtration mode at step 4820. However, if the central controller 150 determines that a request for a chemical cleaning procedure has been made, then the central controller 150 can proceed to step 4830. Thus, the method 4800 can be initiated after a cleaning operation has been scheduled. Therefore, although not shown, the method 4800 can include steps 4710-4750 of the method 4700 of FIG. 47. In some instances, the method 4800 can be performed at step 4750 of method 4700 of FIG. 47 (e.g., to schedule the timer).

At step 4830, the central controller 150 can determine the amount of time between the current time and the time for when the scheduled chemical cleaning operation has been requested. In some instances, the central controller 150 can determine when the chemical cleaning operation is scheduled by analyzing data stored in the memory, which is communicatively coupled to the central controller 150.

At step 4840, the central controller 150 can set a timer approximately equal to the time difference determined at step 4830.

Then, at step 4850, the central controller 150 can determine if the set timer is more than or less than a threshold period of time. The threshold period of time can be a predetermined period of time. In some instances, the threshold period of time is about one day, although the threshold period of time can be even greater than one day. In other instances, the threshold period of time is approximately half a day. In other examples, the predetermined period of time is at least about 10 hours. In still further instances, the predetermined period of time can be set to about at least about 8 hours, or at least about 6 hours, or at least about 4 hours, or at least about 2 hours, or for smaller increments of time. In yet other instances, the threshold period of time is no more than one day. In other instances, the threshold period of time is no more than half a day. In other examples, the predetermined period of time is at least 10 hours. In still further instances, the predetermined period of time can be set to at least 8 hours or at least 6 hours, or at least 4 hours, or at least 2 hours, or for smaller increments of time. In some embodiments, the threshold period of time can be set by a user and input into the aquatic application 100 via the user device 160 or another user interface. In some instances, the threshold period of time may fall within a range bounded by any minimum value and any maximum value as described above. In other instances, instead of using a single value for the threshold period of time, the central controller 150 may utilize a threshold time range that may be bounded by any minimum value and any maximum value as described above. In some embodiments, the central controller 150 can determine an optimal threshold period of time based on system information (e.g., the system information discussed with reference to FIG. 43).

If the set timer is less than the threshold period of time or the threshold time range, then the central controller 150 can be designed to maintain or return the system to the filtration mode until the timer elapses and the cleaning operation is initiated. However, if the set timer is greater than the threshold period of time, then at step 4860, the controller can set a backwash operational timer.

At step 4860, the central controller 150 can set the backwash operational timer for a timer period that is a fraction of (i.e., less than) the time set for the chemical cleaning operation. In some instances, the backwash operational timer is set for approximately half the time as the chemical cleaning operational timer. In other instances, the backwash operational timer is set for approximately one-third the time as the chemical cleaning operational timer. In yet other instances, the backwash operational timer is set for no more than about half the time as the chemical cleaning operational timer. In some other instances, the backwash operational timer is set for no more than about one-third the time as the chemical cleaning operational timer. In yet other instances, the backwash operational timer is set for no more than half the time as the chemical cleaning operational timer. In some other instances, the backwash operational timer is set for no more than one-third the time as the chemical cleaning operational timer. The backwash operational timer may be set for time periods that are even smaller fractions of the chemical cleaning operational timer than those previously recited. Thus, a backwash operational procedure can be performed prior to the chemical operational procedure. Because the backwash operational procedure may not be scheduled to be immediately performed, the central controller 150 can be designed to maintain or return the system to the filtration mode until it the backwash operational timer elapses and the system is transitioned to the backwash operational mode.

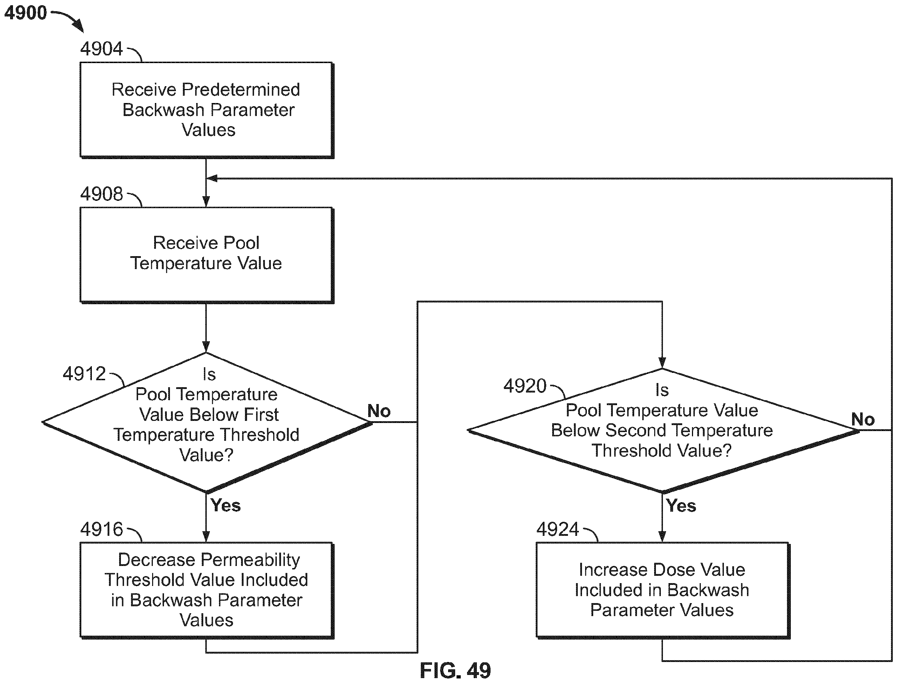

FIG. 49 illustrates a method 4900 for updating backwash parameter values based on pool water temperature. In certain instances, the method 4900 may be implemented by a controller (e.g., the central controller 150 of FIG. 1). The method 4900 can be utilized in a pool automation system or in an aquatic environment (e.g., aquatic application 100 of FIG. 1) that includes any of the hybrid filter assemblies described herein. For example, the hybrid filter assembly may be provided in the form of a first filtration stage and a second filtration stage (e.g., a prefilter and one or more membrane filters). In some instances, the first filtration stage can be a granular-bed depth-type filter, such as a sand filter or a glass filter (e.g., an activated glass filter). In some instances, the depth-type filter can include a pre-coat type media, such as diatomaceous earth. In some instances, the method 4900 can be implemented as computer readable instructions on a non-transitory medium (e.g., a random access memory, a hard drive, etc.) and executed by a processor (e.g., a CPU, a GPU, etc.).

At a step 4904, the central controller 150 can receive one or more predetermined backwash parameter values. The one or more predetermined backwash parameter values can include values for one or more backwash parameters. In some instances, the one or more predetermined backwash parameter values can include a permeability threshold value and/or a dose value. The permeability threshold value can be associated with one or more filters such as membrane filters. The permeability threshold value can represent a threshold value at which the one or more membrane filters may require a chemical soak and/or a backwash process in order to maintain filter performance. The one or more predetermined backwash parameter values can include one or more temperature threshold values.

In some instances, the dose value can be an amount or quantity of a chemical cleaning agent provided to the one or more membrane filters during a soak cycle prior to backwashing the one or more membrane filters. The soaking cycle may provide the chemical cleaning agent with time to neutralize contaminants within the one or more membrane filters and may facilitate a more effective cleaning process as compared to simply backwashing the one or more membrane filters without previously executing a soak cycle. In some instances, the chemical cleaning agent may be selected from the group consisting of a chlorine-containing compound, a chlorine-containing solution, a bromine-containing compound, a bromine-containing solution, a bleaching agent, an acidic solution, and combinations thereof. In some such instances, the chemical cleaning agent may be selected from the group consisting of calcium hypochlorite, trichloroisocyanuric acid, dichloro-s-triazinetrione, and combinations thereof. In yet other instances, the chemical cleaning agent can be chlorine.

In some instances, the predetermined backwash parameter values can be default and/or factory values (e.g., the preset values of an automation controller as shipped from a production facility). In some instances, the predetermined backwash parameter values can be provided by a user. In other instances, the predetermined backwash parameter values may be determined by the central controller 150 after the hybrid filter assembly is initialized for the first time and the controller receives performance information from the hybrid filter assembly.

At a step 4908, the central controller 150 can receive a pool water temperature value. The central controller 150 can receive the pool temperature value from a temperature sensor located within, proximate to, or adjacent to the pool. For example, the temperature sensor can be in fluid communication with the pool. In certain instances, the temperature sensor may be fluidly coupled to the plumbing or conduits forming a closed loop fluid circuit associated with the pool components of the pool (e.g., the pool components 102 designed for use with the swimming pool 110 of FIG. 1).

At a step 4912, the central controller 150 can determine whether the pool water temperature value is below a first temperature threshold value. The first temperature threshold value may be a predetermined temperature threshold value at which the effectiveness of the one or more membrane filters may be impacted if the one or more membrane filters are not backwashed. For example, at lower pool water temperatures, the one or more membrane filters may require more frequent backwashing.

In certain instances, the first temperature threshold may be imparted with a value of about 10 degrees Celsius to about 40 degrees Celsius (or 10 degrees Celsius to 40 degrees Celsius), although the first temperature threshold may be somewhat less or somewhat greater than these values. For example, the first temperature threshold may be imparted with a value of about 10 to 15 degrees Celsius (or 10 to 15 degrees Celsius). As an additional example, the first temperature threshold may be imparted with a value of about 25 to 28 degrees Celsius (or 25 to 28 degrees Celsius). As yet another example, the first temperature threshold may be imparted with a value of about 28 to 31 degrees Celsius (or 28 to 31 degrees Celsius). For example, the first temperature threshold may be imparted with a value of about 35 to 40 degrees Celsius (or 35 to 40 degrees Celsius). In certain instances, the first temperature threshold value may be imparted with a value of at least about 15 degrees Celsius, or a value of at least about 20 degrees Celsius, or a value of at least about 21 degrees Celsius, or a value of at least about 22 degrees Celsius, or a value of at least about 23 degrees Celsius, or a value of at least about 24 degrees Celsius, or a value of at least about 25 degrees Celsius, or a value of at least about 26 degrees Celsius, or a value of at least about 27 degrees Celsius, or a value of at least about 28 degrees Celsius, or a value of at least about 29 degrees Celsius, or a value of at least about 30 degrees Celsius, or a value of at least about 31 degrees Celsius, or a value of at least about 32 degrees Celsius, or a value of at least about 33 degrees Celsius, or a value of at least about 34 degrees Celsius, or a value of at least about 35 degrees Celsius, or a value of at least about 36 degrees Celsius, or a value of at least about 37 degrees Celsius, or a value of at least about 38 degrees Celsius, or a value of at least about 39 degrees Celsius, or a value of at least about 40 degrees Celsius. As a further example, the first temperature threshold value may be imparted with a value of at least 15 degrees Celsius, or a value of at least 20 degrees Celsius, or a value of at least 21 degrees Celsius, or a value of at least 22 degrees Celsius, or a value of at least 23 degrees Celsius, or a value of at least 24 degrees Celsius, or a value of at least 25 degrees Celsius, or a value of at least 26 degrees Celsius, or a value of at least 27 degrees Celsius, or a value of at least 28 degrees Celsius, or a value of at least 29 degrees Celsius, or a value of at least 30 degrees Celsius, or a value of at least 31 degrees Celsius, or a value of at least 32 degrees Celsius, or a value of at least 33 degrees Celsius, or a value of at least 34 degrees Celsius, or a value of at least 35 degrees Celsius, or a value of at least 36 degrees Celsius, or a value of at least 37 degrees Celsius, or a value of at least 38 degrees Celsius, or a value of at least 39 degrees Celsius, or a value of at least 40 degrees Celsius. In some instances, the first temperature threshold value may fall within a range bounded by any minimum value and any maximum value as described above. In other instances, instead of using a single first temperature threshold value, the central controller 150 may utilize a first temperature threshold range that may be bounded by any minimum value and any maximum value as described above.

In some instances, the one or more predetermined backwash parameter values can include the first temperature threshold value. If the pool water temperature value is below the first temperature threshold value or the first temperature threshold range (i.e., "YES" at the step 4912), the central controller 150 can proceed to a step 4916. If the pool water temperature value is not below the first temperature threshold value (i.e., "NO" at the step 4912), the central controller 150 can proceed to a step 4920.

At the step 4916, the central controller 150 can decrease a permeability threshold value included in the backwash parameter values in response to determining that the pool water temperature value is below the first temperature threshold value. The permeability threshold value can be a value at which the membrane filters should be backwashed. In some instances, the central controller 150 can decrease the permeability threshold value by a predetermined amount (e.g., ten lmh/b) and/or a percentage (e.g., ten percent). For example, the predetermined amount that the central controller 150 decreases the permeability threshold value may be at least about 10 lmh/b, or at least about 20 lmh/b, or at least about 30 lmh/b, or at least about 40 lmh/b, or at least about 50 lmh/b, or at least about 60 lmh/b, or at least about 70 lmh/b, or at least about 80 lmh/b, or at least about 90 lmh/b, or at least about 100 lmh/b, or at least about 110 lmh/b, or at least about 120 lmh/b, or at least about 130 lmh/b, or at least about 140 lmh/b, or at least about 150 lmh/b, or at least about 160 lmh/b, or at least about 170 lmh/b, or at least about 180 lmh/b, or at least about 190 lmh/b, or at least about 200 lmh/b. As an additional example, the predetermined amount that the central controller 150 decreases the permeability threshold value may be at least 10 lmh/b, or at least 20 lmh/b, or at least 30 lmh/b, or at least 40 lmh/b, or at least 50 lmh/b, or at least 60 lmh/b, or at least 70 lmh/b, or at least 80 lmh/b, or at least 90 lmh/b, or at least 100 lmh/b, or at least 110 lmh/b, or at least 120 lmh/b, or at least 130 lmh/b, or at least 140 lmh/b, or at least 150 lmh/b, or at least 160 lmh/b, or at least 170 lmh/b, or at least 180 lmh/b, or at least 190 lmh/b, or at least 200 lmh/b. As another example, the predetermined amount that the central controller 150 decreases the permeability threshold value may be at least about 5 percent, or at least about 10 percent, or at least about 15 percent, or at least about 20 percent, or at least about 25 percent, or at least about 30 percent, or at least about 35 percent, or at least about 40 percent, or at least about 45 percent, or at least about 50 percent. As an additional example, the predetermined amount that the central controller 150 decreases the permeability threshold value may be at least 5 percent, or at least 10 percent, or at least 15 percent, or at least 20 percent, or at least 25 percent, or at least 30 percent, or at least 35 percent, or at least 40 percent, or at least 45 percent, or at least 50 percent. In certain instances, the predetermined amount that the central controller 150 decreases the permeability threshold value may be somewhat less or even greater than the values recited herein. In some instances, the predetermined value may fall within a range bounded by any minimum value and any maximum value as described above. In other instances, instead of using a single predetermined value, the central controller 150 may utilize a predetermined range that may be bounded by any minimum value and any maximum value as described above.

At the step 4920, the central controller 150 can determine whether the pool water temperature value is below a second temperature threshold value. The second temperature threshold value can be a predetermined temperature threshold value (e.g., 20 degrees Celsius) at which the effectiveness of a chemical cleaning agent used in a chemical soak may be affected. Lower pool water temperatures may require a higher dose of chemical cleaning agent to provide an effective chemical soak as compared to instances in which the pool water temperature is higher. In some instances, the second temperature threshold value may be the same as the first temperature threshold value. In some instances, the second temperature threshold value may be different than the first temperature threshold value. In certain instances, the second temperature threshold value may be between about 10 degrees Celsius and about 25 degrees Celsius (or between 10 degrees Celsius and 25 degrees Celsius), although the second temperature threshold value may be greater than or less than these values. For example, the second temperature threshold value may be no more than about 25 degrees Celsius, or no more than about 24 degrees Celsius, or no more than about 23 degrees Celsius, or no more than about 22 degrees Celsius, or no more than about 21 degrees Celsius, or no more than about 20 degrees Celsius, or no more than about 19 degrees Celsius, or no more than about 18 degrees Celsius, or no more than about 17 degrees Celsius, or no more than about 16 degrees Celsius, or no more than about 15 degrees Celsius, or no more than about 14 degrees Celsius, or no more than about 13 degrees Celsius, or no more than about 12 degrees Celsius, or no more than about 11 degrees Celsius, or no more than about 10 degrees Celsius. As an additional example, the second temperature threshold value may be no more than 25 degrees Celsius, or no more than 24 degrees Celsius, or no more than 23 degrees Celsius, or no more than 22 degrees Celsius, or no more than 21 degrees Celsius, or no more than 20 degrees Celsius, or no more than 19 degrees Celsius, or no more than 18 degrees Celsius, or no more than 17 degrees Celsius, or no more than 16 degrees Celsius, or no more than 15 degrees Celsius, or no more than 14 degrees Celsius, or no more than 13 degrees Celsius, or no more than 12 degrees Celsius, or no more than 11 degrees Celsius, or no more than 10 degrees Celsius. In some instances, the second temperature threshold value may fall within a range bounded by any minimum value and any maximum value as described above. In other instances, instead of using a single second temperature threshold value, the central controller 150 may utilize a second temperature threshold range that may be bounded by any minimum value and any maximum value as described above. In some instances, the one or more predetermined backwash parameter values can include the second temperature threshold value.

If the pool water temperature value is below the second temperature threshold value (i.e., "YES" at the step 4920), the central controller 150 can proceed to a step 4924. If the pool water temperature value is not below the first temperature threshold value (i.e., "NO" at the step 4912), the central controller 150 can proceed to the step 4908.

At the step 4924, the central controller 150 can increase the dose value included in the backwash parameter values in response to determining that the pool water temperature value is below the second temperature threshold value. In some instances, the central controller 150 can increase the dose value a predetermined amount (e.g., twenty ml) and/or a percentage (e.g., ten percent). For example, the central controller 150 can increase the dose value by at least about 1 ml, or at least about 5 ml, or at least about 10 ml, or at least about 15 ml, or at least about 20 ml, or at least about 25 ml, or at least about 30 ml, or at least about 35 ml, or at least about 40 ml, or at least about 45 ml, or at least about 50 ml, or at least about 60 ml, or at least about 70 ml, or at least about 80 ml, or at least about 90 ml, or at least about 100 ml, or at least about 125 ml, or at least about 150 ml, or at least about 175 ml, or at least about 200 ml, or at least about 250 ml, or at least about 300 ml, or at least about 350 ml, or at least about 400 ml, or at least about 450 ml, or at least about 500 ml, or at least about 600 ml, or at least about 700 ml, or at least about 800 ml, or at least about 900 ml, or at least about 1000 ml. As another example, the central controller 150 can increase the dose value by at least 1 ml, or at least 5 ml, or at least 10 ml, or at least 15 ml, or at least 20 ml, or at least 25 ml, or at least 30 ml, or at least 35 ml, or at least 40 ml, or at least 45 ml, or at least 50 ml, or at least 60 ml, or at least 70 ml, or at least 80 ml, or at least 90 ml, or at least 100 ml, or at least 125 ml, or at least 150 ml, or at least 175 ml, or at least 200 ml, or at least 250 ml, or at least 300 ml, or at least 350 ml, or at least 400 ml, or at least 450 ml, or at least 500 ml, or at least 600 ml, or at least 700 ml, or at least 800 ml, or at least 900 ml, or at least 1000 ml. As an additional example, the central controller 150 can increase the dose value by at least about 5 percent, or at least about 10 percent, or at least about 15 percent, or at least about 20 percent, or at least about 25 percent, or at least about 30 percent, or at least about 35 percent, or at least about 40 percent, or at least about 45 percent, or at least about 50 percent, or at least about 60 percent, or at least about 70 percent, or at least about 80 percent, or at least about 90 percent, or at least about 100 percent. As another example, the central controller 150 can increase the dose value by at least 5 percent, or at least 10 percent, or at least 15 percent, or at least 20 percent, or at least 25 percent, or at least 30 percent, or at least 35 percent, or at least 40 percent, or at least 45 percent, or at least 50 percent, or at least 60 percent, or at least 70 percent, or at least 80 percent, or at least 90 percent, or at least 100 percent. In certain instances, the predetermined amount that the central controller 150 increases the dose value may be somewhat less or even greater than the values recited herein. In some instances, the increase of the dose value may fall within a range bounded by any minimum value and any maximum value as described above. In other instances, instead of using a single value for the amount the dose is increased by, the central controller 150 may utilize a predetermined range that may be bounded by any minimum value and any maximum value as described above.

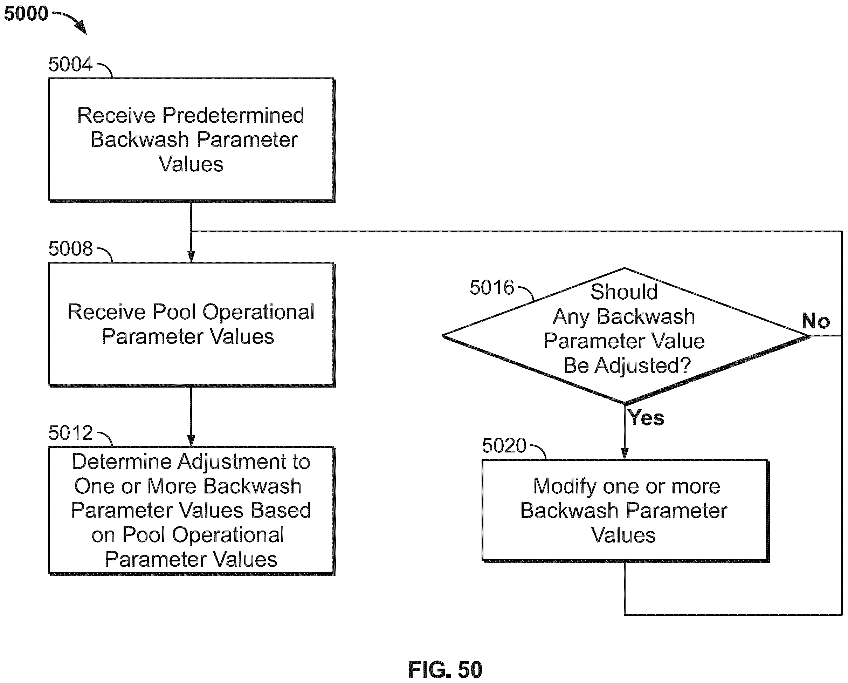

Turning now to FIG. 50, a method 5000 for updating one or more backwash parameter values based on one or more pool operational parameter values is shown. The method 5000 can be utilized in a pool automation system or in an aquatic environment (e.g., aquatic application 100 of FIG. 1) that includes any of the hybrid filter assemblies described herein. For example, the hybrid filter assembly may be provided in the form of a first filtration stage and a second filtration stage (e.g., a prefilter and one or more membrane filters). In some instances, the first filtration stage can be a granular-bed depth-type filter, such as a sand filter or a glass filter (e.g., an activated glass filter). In some instances, the depth-type filter can include a pre-coat type media, such as diatomaceous earth. In some instances, the method 5000 can be implemented as computer readable instructions on a non-transitory medium (e.g., a random access memory, a hard drive, etc.) and executed by a processor (e.g., a CPU, a GPU, etc.).

At a step 5004, the central controller 150 can receive one or more predetermined backwash parameter values. In some instances, the predetermined backwash parameter values can be similar to or the same as the one or more predetermined backwash parameter values described above in conjunction with the method 4900 in FIG. 49.

In some instances, the one or more predetermined backwash parameter values can include a permeability threshold value, a dose value, a soak time value, a flux rate threshold value, an oxidation-reduction potential (ORP) threshold value, a run time value, and/or a usage value. The one or more predetermined backwash parameter values can include one or more temperature threshold values.

The permeability threshold value can be associated with one or more filters such as membrane filters. The permeability threshold value can represent a threshold at which the one or more membrane filters may require a chemical soak and/or backwash process in order to maintain suitable filter performance.

The dose value can be an amount of a chemical that is applied to one or more membrane filters during a soak cycle prior to backwashing the one or more membrane filters. The soaking cycle can allow the chemical to better prepare the one or more membrane filters for cleaning as compared to simply backwashing the one or more membrane filters without previously executing a soak cycle. In some instances, the chemical cleaning agent may be selected from the group consisting of a chlorine-containing compound, a chlorine-containing solution, a bromine-containing compound, a bromine-containing solution, a bleaching agent, an acidic solution, and combinations thereof. In some such instances, the chemical cleaning agent may be selected from the group consisting of calcium hypochlorite, trichloroisocyanuric acid, dichloro-s-triazinetrione, and combinations thereof. In yet other instances, the chemical cleaning agent can be chlorine.

The soak time value can be a length of time that the chemical cleaning agent is applied to a membrane before flushing. In some instances, the soak time can be about 1 hour to about 24 hours (or 1 hour to 24 hours), although the soak time may be imparted with a value that is less than or greater than the times described herein. For example, the soak time may be imparted with a value of at least about 30 minutes, or at least about 1 hour, or at least about 2 hours, or at least about 3 hours, or at least about 4 hours, or at least about 5 hours, or at least about 6 hours, or at least about 7 hours, or at least about 8 hours, or at least about 9 hours, or at least about 10 hours, or at least about 11 hours, or at least about 12 hours, or at least about 13 hours, or at least about 14 hours, or at least about 15 hours, or at least about 16 hours, or at least about 17 hours, or at least about 18 hours, or at least about 19 hours, or at least about 20 hours, or at least about 21 hours, or at least about 22 hours, or at least about 23 hours, or at least about 24 hours. As an additional example, the soak time may be imparted with a value of at least 30 minutes, or at least 1 hour, or at least 2 hours, or at least 3 hours, or at least 4 hours, or at least 5 hours, or at least 6 hours, or at least 7 hours, or at least 8 hours, or at least 9 hours, or at least 10 hours, or at least 11 hours, or at least 12 hours, or at least 13 hours, or at least 14 hours, or at least 15 hours, or at least 16 hours, or at least 17 hours, or at least 18 hours, or at least 19 hours, or at least 20 hours, or at least 21 hours, or at least 22 hours, or at least 23 hours, or at least 24 hours.

In some instances, the flux rate threshold value can represent a threshold at which debris may be present in the filter. In some instances, flux rate threshold value can represent a threshold at which fluid may be flowing through the one or more membrane filters or the hybrid filter assembly at a rate that reduced the need to backwash the one or more membrane filters or the hybrid filter assembly. In some instances, the flux rate threshold value may be imparted with a value of about 100 to about 300 (or a value of 100 to 300), although the flux rate threshold value may be somewhat less or even greater than these values. For example, the flux rate threshold value may be imparted with a value of at least about 100 lmh/b, or at least about 125 lmh/b, or at least about 150 lmh/b, or at least about 175 lmh/b, or at least about 200 lmh/b, or at least about 225 lmh/b, or at least about 250 lmh/b, or at least about 275 lmh/b or at least about 300 lmh/b. As an additional example, the flux rate threshold value may be imparted with a value of at least 100 lmh/b, or at least 125 lmh/b, or at least 150 lmh/b, or at least 175 lmh/b, or at least 200 lmh/b, or at least 225 lmh/b, or at least 250 lmh/b, or at least 275 lmh/b or at least 300 lmh/b. In some instances, the flux rate threshold value may fall within a range bounded by any minimum value and any maximum value as described above. In other instances, instead of using a single flux rate threshold value, the central controller 150 may utilize a flux rate threshold range that may be bounded by any minimum value and any maximum value as described above.

The ORP threshold value can be an ORP value at which the membrane may require different backwash settings. In some instances, the ORP threshold value may be imparted with a value of about 650 to about 750, although the ORP threshold value may be less or greater than these values. For example, the ORP threshold value may be imparted with a value of about 650, or about 675, or about 700, or about 725, or about 750. As an additional example, the ORP threshold value may be imparted with a value of 650, or 675, or 700, or 725, or 750. In some instances, the ORP threshold value may fall within a range bounded by any minimum value and any maximum value as described above. In other instances, instead of using a single ORP threshold value, the central controller 150 may utilize a first ORP range that may be bounded by any minimum value and any maximum value as described above.

In some instances, the predetermined backwash parameter values can be default and/or factory values (e.g., the preset values of an automation controller as shipped from a production facility). In other instances, the predetermined backwash parameter values can be provided by a user. In yet other instances, the predetermined backwash parameter values may be determined by the central controller 150 after the hybrid filter assembly is initialized for the first time and the controller receives performance information from the hybrid filter assembly.

In some instances, the run time value can be an amount of time in which the hybrid filter assembly has been used. In some instances, the run time value can be represented in minutes, hours and/or days. In some instances, the usage value can be generated based on multiple parameter values. For example, the usage value can be generated based on the run time value and a volume value. For example, the usage value can be calculated as a number of days the hybrid filter assembly has been in service multiplied by a daily volume that flows through the filter. In some instances, the usage value can be a total amount of water that has flowed through the hybrid filter assembly.

At a step 5008, the central controller 150 can receive one or more pool operational parameter values. In some instances, the one or more pool operational parameter values can include a pool water temperature value, an ORP value, and/or a flux rate value. The central controller 150 can receive the pool temperature value from a temperature sensor located within, proximate to, or adjacent to the pool. For example, the temperature sensor can be in fluid communication with the pool. In certain instances, the temperature sensor may be fluidly coupled to the plumbing or conduits forming a closed loop fluid circuit associated with the pool components of the pool (e.g., the pool components 102 designed for use with the swimming pool 110 of FIG. 1). The central controller 150 can receive the ORP value from an ORP sensor located within, proximate to, or adjacent to the pool. For example, the ORP sensor can be in fluid communication with the pool. In certain instances, the ORP sensor may be fluidly coupled to the plumbing or conduits forming a closed loop fluid circuit associated with the pool components of the pool (e.g., the pool components 102 of FIG. 1). The central controller 150 can receive the flux rate value from a flow meter in fluid communication with the membrane. The flux rate value can be associated with a forward flow and/or filtering direction within the membrane.

In some instances, the one or more pool operational parameter values can include one or more timer values. In some instances, the timer value can correspond to a time elapsed since installation of the filter. In some instances, the timer value can correspond to the time elapsed since a backwash or soak cycle. In some instances, the one or more timer values can be generated based on timers initiated at the step 5004.

In some instances, the one or more pool operational parameter values can include an updated run time value and/or an updated usage value. In some instances, the updated run time value can be an amount of time in which the one or more membrane filters and/or the hybrid filter assembly has been used. In some instances, the updated run time value can be represented in hours and/or days. In some instances, the updated usage value can be generated based on multiple parameter values. For example, the updated usage value can be generated based on the run time value and a volume value. For example, the updated usage value can be calculated as a number of days the one or more membrane filters and/or the hybrid filter assembly has been in service multiplied by a daily volume that flows through the one or more membrane filters and/or the hybrid filter assembly. In some instances, the updated usage value can be a total amount of water that has flowed through the one or more membrane filters and/or the hybrid filter assembly.

At a step 5012, the central controller 150 can determine whether to adjust the one or more backwash parameter values based on the one or more pool operational parameter values. In some instances, the central controller 150 may determine not to adjust any of the backwash parameter values based on the one or more pool operational parameter values.

In some instances, the central controller 150 can determine that the permeability threshold value should be decreased based on the pool water temperature value. The central controller 150 can determine whether the pool water temperature value is below a first temperature threshold value. The first temperature threshold value can be a predetermined temperature threshold value (e.g., 22 degrees Celsius, any of the first temperature threshold values discussed with reference to FIG. 49) at which the effectiveness of the one or more membrane filter and/or the hybrid filter assembly may be impacted if not backwashed. In some instances, the one or more predetermined backwash parameter values can include the first temperature threshold value. The central controller 150 can determine that the permeability threshold value should be decreased in response to determining that the pool water temperature value is below the first temperature threshold value. In some instances, the central controller 150 can determine that the permeability threshold value should be decreased by a predetermined amount (e.g., ten lmh/b) and/or a percentage (e.g., ten percent). At lower pool water temperatures, the one or more membrane filters may require more frequent backwashing.

In some instances, the central controller 150 can determine that the dose value should be increased based on the pool water temperature value. The central controller 150 can determine that the pool water temperature value is below a second temperature threshold value. The second temperature threshold value can be a predetermined temperature threshold value (e.g., 20 degrees Celsius, any of the second temperature threshold values discussed with reference to FIG. 49) at which the effectiveness of a chemical cleaning agent used in a chemical soak may be affected. Lower pool water temperatures may require a higher dose of chemical cleaning agent to provide an effective chemical soak as compared to instances in which the pool water temperature is higher. In some instances, the second temperature threshold value may be the same as the first temperature threshold value. In some instances, the second temperature threshold value may be different than the first temperature threshold value. In some instances, the one or more predetermined backwash parameter values can include the second temperature threshold value. The central controller 150 can determine that the dose value included in the backwash parameter values should be increased in response to determining that the pool water temperature value is below the second temperature threshold value. In some instances, the central controller 150 can increase the dose value a predetermined amount (e.g., twenty ml) and/or a percentage (e.g., ten percent).

In some instances, the central controller 150 can determine that the dose value should be increased based on the ORP value. The central controller 150 can determine that the ORP value is below the ORP threshold value, and in response, determine that the dose value should be increased. If the ORP value is below the ORP threshold value, the membrane may require greater cleaning. In some instances, the central controller 150 can determine that the dose value should be decreased based on the ORP value. The central controller 150 can determine that the ORP value is above the ORP threshold value, and in response, determine that the dose value should be decreased.

In some instances, the central controller 150 can determine that the permeability threshold value should be decreased based on the ORP value. The central controller 150 can determine that the ORP value is above the ORP threshold value, and in response, determine that the permeability threshold value should be decreased. In some instances, the central controller 150 can determine that the permeability threshold value should be increased based on the ORP value. The central controller 150 can determine that the ORP value is below the ORP threshold value, and in response, determine that the permeability threshold value should be increased.

In some instances, the central controller 150 can determine that the soak time value should be decreased based on the ORP value. The central controller 150 can determine that the ORP value is above the ORP threshold value, and in response, determine that the soak time value should be decreased. In some instances, the central controller 150 can determine that the soak time value should be increased based on the ORP value. The central controller 150 can determine that the ORP value is below the ORP threshold value, and in response, determine that the soak time value should be decreased.

In some instances, the central controller 150 can determine that the permeability threshold value should be decreased based on the flux rate value. The central controller 150 can determine that the flux rate value is above the flux rate threshold value, and in response, determine that the permeability threshold value should be decreased based on the flux rate value. If the flux rate value is above the flux rate threshold value, the membrane may require greater and/or more frequent cleaning in order to clear debris from the membrane. In some instances, the central controller 150 can determine that the permeability threshold value should be increased based on the flux rate value. The central controller 150 can determine that the flux rate value is below the flux rate threshold value and in response, determine that the permeability threshold value should be increased based on the flux rate value. If the flux rate value is below the flux rate threshold value, the membrane may require lesser and/or less frequent cleaning in order to clear debris from the membrane.

At a step 5016, if the central controller 150 determined to make an adjustment to one or more backwash parameter values (i.e., "YES" at the step 5016), the central controller 150 can proceed to a step 5020. If the central controller 150 determined nor to make an adjustment to any backwash parameter values (i.e., "NO" at the step 5016), the central controller 150 can proceed to the step 5008.

At the step 5020, the central controller 150 can modify one or more backwash parameter values as determined at the step 5012.

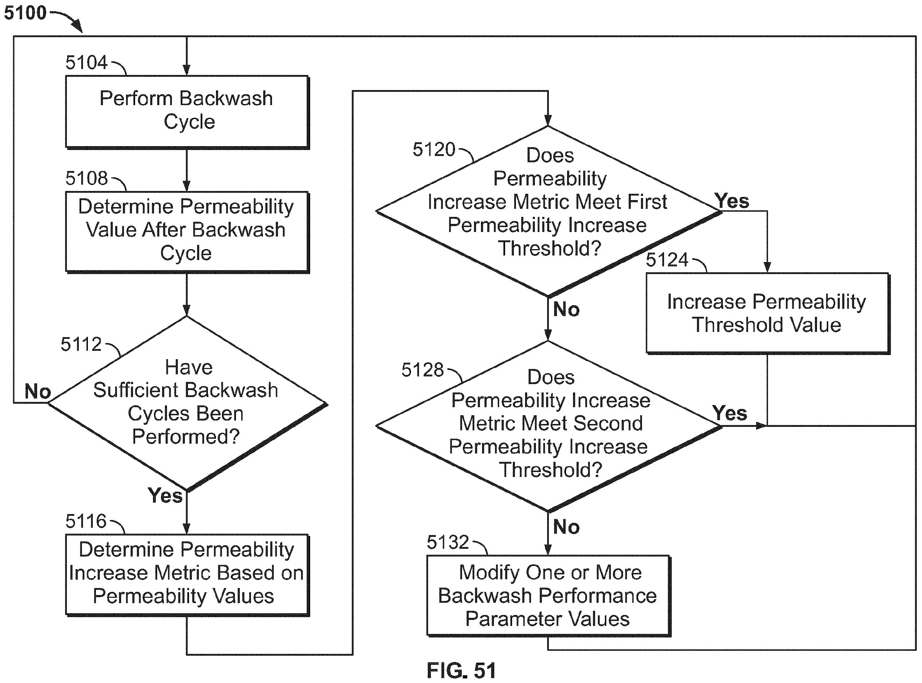

Turning now to FIG. 51, a method 5100 for updating a permeability threshold value is shown. The method 5100 can be utilized in a pool automation system or in an aquatic environment (e.g., aquatic application 100 of FIG. 1) that includes any of the hybrid filter assemblies described herein. For example, the hybrid filter assembly may be provided in the form of a first filtration stage and a second filtration stage (e.g., a prefilter and one or more membrane filters). In some instances, the first filtration stage can be a granular-bed depth-type filter, such as a sand filter or a glass filter (e.g., an activated glass filter). In some instances, the glass filter can include glass media such as diatomaceous earth. In some instances, the method 5100 can be implemented as computer readable instructions on a non-transitory medium (e.g., a random access memory, a hard drive, etc.) and executed by a processor (e.g., a CPU, a GPU, etc.).

At a step 5104, the central controller 150 can perform a backwash cycle. The backwash cycle may include one or more of a chemical soak stage and a backwash stage. The chemical soak stage can include an application of a chemical cleaning agent (e.g., chlorine) to one or more membrane filters, followed by a predetermined time period to let the chemical cleaning agent soak into the one or more membrane filters (e.g., at least eight hours, any of the soak time values discussed with reference to FIG. 50). The backwash stage can include an application of water in a reverse flow direction as compared to regular operation of the one or more membrane filters. In some instances, the central controller 150 may receive a notification that a backwash cycle has been performed rather than or in addition to causing a filter system (i.e., the hybrid filter assembly) to run a backwash cycle.

At a step 5108, the central controller 150 can determine a permeability value after the backwash cycle has completed. The permeability value can be associated with the hybrid filter assembly and/or the one or more membrane of the hybrid filter assembly. The central controller 150 can determine the permeability value based on a number of preset, sensed, and/or calculated parameter values such as flux, system flow, membrane surface area, transmembrane pressure, filter headloss, inlet pressure, outlet pressure, viscosity, water temperature, and constant values. In some instances, the process can determine permeability of the hybrid filter assembly and/or the one or more membranes based on Formula III above.

At a step 5112, the central controller 150 can determine if sufficient backwash cycles have been performed. In some instances, the central controller 150 can determine if sufficient backwash cycles have been performed based on a predetermined threshold number of backwash cycles (e.g., five cycles). In some instances, the central controller 150 can determine if sufficient backwash cycles have been performed based on a predetermined number of backwash cycles that have occurred over a predetermined time period (e.g., a backwards looking time window). In some instances, the predetermined number of backwash cycles may be five backwash cycles, and the predetermined time period may be thirty days. For example, the central controller 150 may determine that four backwash cycles have been performed in the past thirty days and determine that sufficient backwash cycles have been performed. As an additional example, when evaluating the number of backwash cycles performed over a predetermined time period of 30 days, the predetermined number of backwash cycles may be imparted with a value of at least about 0 backwashes, or at least about 2 backwashes, or at least about 5 backwashes, or at least about 10 backwashes, or at least about 15 backwashes, or at least about 20 backwashes, or at least about 25 backwashes, or at least about 30 backwashes. As another example, when evaluating the number of backwash cycles performed over a predetermined time period of 30 days, the predetermined number of backwash cycles may be imparted with a value of at least 0 backwashes, or at least 2 backwashes, or at least 5 backwashes, or at least 10 backwashes, or at least 15 backwashes, or at least 20 backwashes, or at least 25 backwashes, or at least 30 backwashes. In certain instances, the predetermined number of backwash cycles may be somewhat less or even greater than the values recited herein. In some instances, the predetermined number of backwash cycles may fall within a range bounded by any minimum value and any maximum value as described above. In other instances, instead of using a single value for the predetermined number of backwash cycles, the central controller 150 may utilize a range of values that may be bounded by any minimum value and any maximum value as described above. In some instances, the predetermined time period may be imparted with a value other than 30 days. For example, the predetermined time period may be imparted with a value of about 7 days, or about 14 days, or about 21 days, or about 30 days, or about 45 days, or about 60 days. As an additional example, the predetermined time period may be imparted with a value of 7 days, or 14 days, or 21 days, or 30 days, or 45 days, or 60 days. In certain instances, the predetermined time period may be somewhat less or somewhat greater than the values recited herein. In some instances, the predetermined time period may fall within a range bounded by any minimum value and any maximum value as described above. In other instances, instead of using a single value for the predetermined time period, the central controller 150 may utilize a range of values that may be bounded by any minimum value and any maximum value as described above.

In some instances, the central controller 150 may determine if the number of backwash cycles performed is less than the predetermined threshold number of backwash cycles, and thereby determine that sufficient backwash cycles have not been performed. Alternatively, if the number of backwash cycles performed is equal to or greater than the predetermined threshold number of backwash cycles, the central controller 150 can determine that sufficient backwash cycles have been performed. If sufficient backwash cycles have been performed (i.e., "YES" at a step 5112), the central controller 150 can proceed to a step 5116. If sufficient backwash cycles have not been performed (i.e., "NO" at the step 5112), the central controller 150 can proceed to 5104.

At the step 5116, the central controller 150 can determine a permeability increase metric based on at least a portion of the permeability values generated at 5108. The central controller 150 may calculate the increase in permeability based on a most recent permeability value (i.e., the most recent permeability value generated at 5108) and a historical permeability value generated at the step 5108. The historical permeability value can be the permeability value generated after a backwash cycle a predetermined number of backwash cycles before the most recent permeability value. In some instances, the predetermined number of backwash cycles can be equal to the predetermined threshold number of backwash cycles. For example, the historical permeability value may be associated with a backwash cycle that occurred five backwash cycles before the backwash cycle associated with the most recent permeability value. In some instances, the permeability increase metric can be the difference between the most recent permeability value and the historical value. In some instances, the permeability increase metric can be the ratio between the most recent permeability value and the historical value.

At a step 5120, the central controller 150 can determine if the permeability increase metric meets a predetermined first permeability increase threshold value. In some instances, the predetermined first permeability increase threshold value may be a predetermined permeability value (e.g., if the permeability increase metric is the difference between the most recent permeability value and the historical value). For example, the first permeability increase threshold may be about two hundred lmh/b. As an additional example, the first permeability increase threshold may be imparted with a value of no more than about 250 lmh/b, or no more than about 225 lmh/b, or no more than about 200 lmh/b, or no more than about 175 lmh/b, or no more than about 150 lmh/b, or no more than about 125 lmh/b, or no more than about 100 lmh/b, or no more than about 75 lmh/b, or no more than about 50 lmh/b, or no more than about 25 lmh/b. As another example, the first permeability increase threshold may be imparted with a value of no more than 250 lmh/b, or no more than 225 lmh/b, or no more than 200 lmh/b, or no more than 175 lmh/b, or no more than 150 lmh/b, or no more than 125 lmh/b, or no more than 100 lmh/b, or no more than 75 lmh/b, or no more than 50 lmh/b, or no more than 25 lmh/b. In certain instances, the first permeability increase threshold may be somewhat less or even greater than the values recited herein. In some instances, the first permeability increase threshold may fall within a range bounded by any minimum value and any maximum value as described above. In some instances, the predetermined first permeability increase threshold value may be a predetermined ratio (e.g., if the permeability increase metric is the ratio between the most recent permeability value and the historical value) or a range of values. The first permeability increase threshold value can be used to determine if the permeability threshold value can be increased if the previous backwashes have substantially improved the permeability of the one or more membrane filters and/or the hybrid filter assembly. In particular, if the permeability has improved substantially, then the central controller 150 can determine to increase the permeability threshold value, which may potentially reduce the number of backwashes required and/or extend the life of the one or more membrane filters. The central controller 150 may determine that the permeability increase metric meets the predetermined first permeability increase threshold value if the permeability increase metric is greater than or equal to the predetermined first permeability increase threshold value. The central controller 150 may determine that the permeability increase metric does not meet the predetermined first permeability increase threshold value if the permeability increase metric is less than the predetermined first permeability increase threshold value. If the permeability increase metric meets the predetermined first permeability increase threshold value (i.e., "YES" at the step 5120), the central controller 150 can proceed to a step 5124. If the permeability increase metric does not meet the predetermined first permeability increase threshold value (i.e., "NO" at the step 5120), the central controller 150 can proceed to a step 5128.

At the step 5124, the central controller 150 can increase the permeability threshold value in response to determining that the permeability increase metric meets the predetermined first permeability increase threshold value. The permeability threshold value can be a value at which the one or more membrane filters and/or the hybrid filter assembly require backwashing. In some instances, the central controller 150 can increase the permeability threshold value by a predetermined amount (e.g., twenty lmh/b) and/or a percentage (e.g., ten percent).

At the step 5128, the central controller 150 can determine if the permeability increase metric meets a predetermined second permeability increase threshold value. In some instances, the predetermined second permeability increase threshold value may be a predetermined permeability value (e.g., if the permeability increase metric is the difference between the most recent permeability value and the historical value). For example, the second permeability increase threshold may be about twenty lmh/b. As an additional example, the second permeability increase threshold may be imparted with a value of no more than about 250 lmh/b, or no more than about 225 lmh/b, or no more than about 200 lmh/b, or no more than about 175 lmh/b, or no more than about 150 lmh/b, or no more than about 125 lmh/b, or no more than about 100 lmh/b, or no more than about 75 lmh/b, or no more than about 50 lmh/b, or no more than about 25 lmh/b. As another example, the second permeability increase threshold may be imparted with a value of no more than 250 lmh/b, or no more than 225 lmh/b, or no more than 200 lmh/b, or no more than 175 lmh/b, or no more than 150 lmh/b, or no more than 125 lmh/b, or no more than 100 lmh/b, or no more than 75 lmh/b, or no more than 50 lmh/b, or no more than 25 lmh/b, or no more than 15 lmh/b. In certain instances, the second permeability increase threshold may be somewhat less or even greater than the values recited herein. In some instances, the second permeability increase threshold may fall within a range bounded by any minimum value and any maximum value as described above. In some instances, the predetermined second permeability increase threshold value may be a predetermined ratio (e.g., if the permeability increase metric is the ratio between the most recent permeability value and the historical value) or a range of values. The central controller 150 may determine that the permeability increase metric meets the predetermined second permeability increase threshold value if the permeability increase metric is greater than or equal to the predetermined second permeability increase threshold value. The central controller 150 may determine that the permeability increase metric does not meet the predetermined second permeability increase threshold value if the permeability increase metric is less than the predetermined second permeability increase threshold value. If the permeability increase metric meets the predetermined second permeability increase threshold value (i.e., "YES" at the step 5128), the central controller 150 can proceed to 5104. If the permeability increase metric does not meet the predetermined second permeability increase threshold value (i.e., "NO" at the step 5128), the central controller 150 can proceed to a step 5132.

At the step 5132, the central controller 150 can modify one or more backwash performance parameter values in response to determining that the permeability increase metric does not meet the predetermined permeability increase threshold value. The central controller 150 can modify one or more backwash performance parameter values to potentially increase permeability after future backwash cycles. In some instances, the backwash performance parameters can include a chemical dosage amount value (e.g., an amount of chemical agent provided to the one or more membrane filters) and/or a soak time value (e.g., a time period to let the chemical soak into the one or more membrane filters). In some instances, the central controller 150 can increase the chemical dosage amount value and/or increase the soak time value. In some instances, the central controller 150 may direct that a notification to be sent to a user (e.g., a pool owner) to check the hybrid filter assembly.

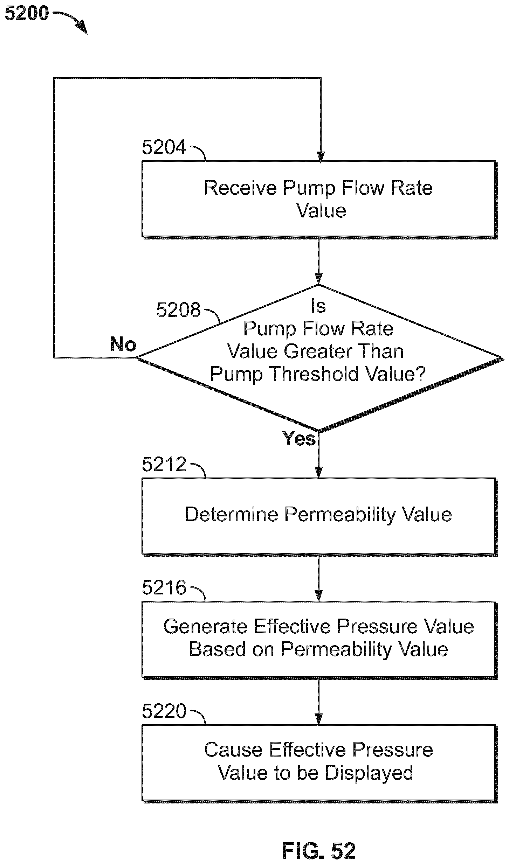

Referring now to FIG. 52, a method 5200 for determining a permeability value is shown. The method 5200 can be utilized in a pool automation system or in an aquatic environment (e.g., aquatic application 100 of FIG. 1) that includes any of the hybrid filter assemblies described herein. For example, the hybrid filter assembly may be provided in the form of a first filtration stage and a second filtration stage (e.g., a prefilter and one or more membrane filters). In some instances, the first filtration stage can be a granular-bed depth-type filter, such as a sand filter or a glass filter (e.g., an activated glass filter). In some instances, the glass filter can include glass media such as diatomaceous earth. In some instances, the method 5200 can be implemented as computer readable instructions on a non-transitory medium (e.g., a random access memory, a hard drive, etc.) and executed by a processor (e.g., a CPU, a GPU, etc.).

At a step 5204, the central controller 150 can receive a pump flow rate value. In some instances, the central controller 150 can receive the pump flow rate value from a pump and/or a flow sensor.

At a step 5208, the central controller 150 can determine if the pump flow rate value greater than a pump threshold value. The pump threshold value can be a predetermined value. In some instances, the predetermined value can be about forty-five GPM to about sixty GPM (or forty-five GPM to sixty GPM), although the predetermined value may be less than or greater than these values. In some instances, the predetermined value can be at least about forty-five GPM (or at least forty-five GPM). In some instances, the predetermined value can be at least about sixty GPM (or at least sixty GPM). If the pump flow rate value is greater than the pump threshold value (i.e., "YES" at the step 5208), the central controller 150 can proceed to a step 5212. If the pump flow rate value is not greater than the pump threshold value (i.e., "NO" at the step 5208), the central controller 150 can proceed to the step 5204.

At the step 5212, the central controller 150 can determine a permeability value in response to determining that the pump flow rate value is not greater than the pump threshold value. In this way, the central controller 150 can determine the permeability value at a relatively lower pump flow rate, which may provide more accurate permeability value determinations. The central controller 150 can determine the permeability value based on a number of preset, sensed, and/or calculated parameter values such as flux, system flow, membrane surface area, transmembrane pressure, filter headloss, inlet pressure, outlet pressure, viscosity, water temperature, and constant values. In some instances, the central controller 150 can determine permeability of the hybrid filter assembly and/or the one or more membranes based on Formula III above.

At a step 5216, the central controller 150 can generate an effective pressure value based on the permeability value. In some instances, the effective pressure value can be a pressure drop value.

At a step 5220, the central controller 150 can cause the effective pressure value to be displayed to a user. Certain users may prefer to see a pressure drop value rather or other effective pressure value instead of a permeability value.

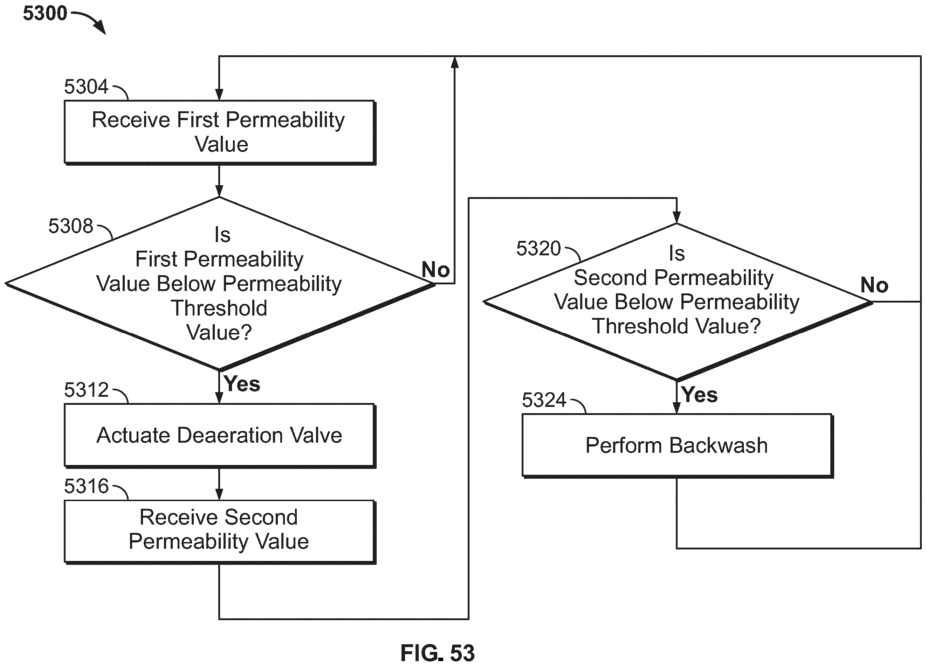

Turning now to FIG. 53, a method 5300 for performing a preliminary deaeration cycle before a backwash cycle is shown. The method 5300 can be utilized in a pool automation system or in an aquatic environment (e.g., aquatic application 100 of FIG. 1) that includes any of the hybrid filter assemblies described herein. For example, the hybrid filter assembly may be provided in the form of a first filtration stage and a second filtration stage (e.g., a prefilter and one or more membrane filters). In some instances, the first filtration stage can be a granular-bed depth-type filter, such as a sand filter or a glass filter (e.g., an activated glass filter). In some instances, the depth-type filter can include a pre-coat type media, such as diatomaceous earth. In some instances, the method 5300 can be implemented as computer readable instructions on a non-transitory medium (e.g., a random access memory, a hard drive, etc.) and executed by a processor (e.g., a CPU, a GPU, etc.).

At a step 5304, the central controller 150 can receive a first permeability value. In some instances, the first permeability value can be associated with one or more membrane filters included in the hybrid filter assembly. In some instances, the first permeability value can be generated based on Formula III above.

At a step 5308, the central controller 150 can determine if the first permeability value is below a permeability threshold value. The permeability threshold value can be associated with one or more of the membrane filters included in the hybrid filter assembly. The permeability threshold value can represent a threshold at which the one or more membrane filters may require a chemical cleaning agent soak and/or backwash process in order to maintain suitable filter performance. If the central controller 150 determines that the first permeability value is not below the permeability threshold value (i.e., "NO" at the step 5308), the central controller 150 can proceed to the step 5304. If the central controller 150 determines that the first permeability value is below the permeability threshold value (i.e., "YES" at the step 5308), the central controller 150 can proceed to a step 5312.

At the step 5312, the central controller 150 can actuate a deaeration valve included in the one or more membrane filters and/or the hybrid filter assembly. In some instances, the deaeration valve may be provided in each housing of the one or more membrane filtration modules provided with the hybrid filter assemblies discussed herein. Permeability values may be affected by excess pressure in the one or more membranes and/or a housing containing the one or more membranes. The central controller 150 can actuate the deaeration valve to potentially reduce a pressure in the one or more membranes and/or a housing retaining the one or more membranes (e.g., the housing of the membrane filtration modules). Reducing the pressure of the one or more membranes and/or a housing retaining the one or more membranes may improve permeability value accuracy.

At a step 5316, the central controller 150 can receive a second permeability value. In some instances, the second permeability value can be associated with one or more membrane filters included in the hybrid filter. In some instances, the second permeability value can be generated based on Formula III above.

At a step 5320, the central controller 150 can determine if the second permeability value is below the permeability threshold value. If the central controller 150 determines that the second permeability value is not below the permeability threshold value (i.e., "NO" at the step 5308), the central controller 150 can proceed to the step 5304. If the central controller 150 determines that the second permeability value is below the permeability threshold value (i.e., "YES" at the step 5308), the central controller 150 can proceed to a step 5324.

At the step 5324, the central controller 150 can perform a backwash cycle. In some instances, the backwash cycle can include a rinse cycle. In some instances, the backwash cycle can include a chemical soak cycle followed by a rinse cycle.

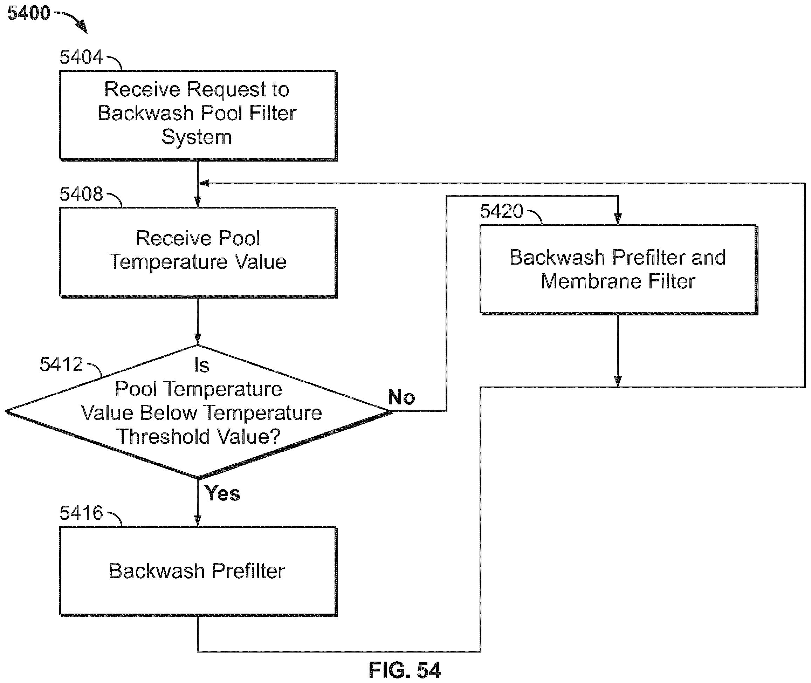

Turning now to FIG. 54, a method 5400 for generating backwash instructions is shown. The method 5400 can be utilized in a pool automation system or an aquatic environment (e.g., aquatic application 100 of FIG. 1) that includes a hybrid filter assembly provided in the form of a first filtration stage and a second filtration stage (e.g., a prefilter and one or more membrane filters). In some instances, the prefilter can be a granular-bed depth-type filter, such as a sand filter or a glass filter (e.g., an activated glass filter). In some instances, the depth-type filter can include a pre-coat type media, such as diatomaceous earth. In some instances, the method 5400 can be implemented as computer readable instructions on a non-transitory medium (e.g., a random access memory, a hard drive, etc.) and executed by a processor (e.g., a CPU, a GPU, etc.).

At 5404, the central controller 150 can receive a request to backwash a pool filter system. The filter system can include any of the hybrid filter assemblies discussed herein. In some instances, the central controller 150 can receive the request from the pool automation system. For example, the central controller 150 can receive the request from a controller included in the pool automation system. In some instances, the central controller 150 can receive the request from a user device operably coupled to and in communication with the pool automation system. In other instances, the request can be provided by the central controller to one or more local controllers associated with the pool components 102 of FIG. 1. In yet other instances, the request can be provided to the local controllers of the pool components 102 independently of the central controller 150.

At 5408, the central controller 150 can receive a pool water temperature value. The central controller 150 can receive the pool water temperature value from a temperature sensor located within, proximate to, or adjacent to the pool. For example, the temperature sensor can be in fluid communication with the pool. In certain instances, the temperature sensor may be fluidly coupled to the plumbing or conduits forming a closed loop fluid circuit associated with the pool components of the pool (e.g., the pool components 102 of FIG. 1 designed for use with the swimming pool 110).

At 5412, the central controller 150 can determine whether the pool water temperature value is below a temperature threshold value. The temperature threshold value can be a predetermined temperature threshold value. In some instances, the temperature threshold value can be a value below which the one or more membranes may not require as frequent backwashing or, in certain instances, any backwashing. More particularly, below certain temperatures (e.g., about 13 degrees Celsius), bacteria may not grow as quickly, and backwash cycles may not be needed as frequently or at all as compared to higher temperatures. In some instances, the pool water temperature threshold value can be about 10 degrees Celsius to about 13 degrees Celsius (or 10 degrees Celsius to 13 degrees Celsius), although the pool water temperature threshold value may be somewhat higher or even lower than these values. For example, the pool water temperature threshold value may be imparted with a value of no more than about 13 degrees Celsius, or no more than about 12 degrees Celsius, or no more than about 11 degrees Celsius, or no more than about 10 degrees Celsius. As an additional example, the pool water temperature threshold value may be imparted with a value of no more than 13 degrees Celsius, or no more than 12 degrees Celsius, or no more than 11 degrees Celsius, or no more than 10 degrees Celsius. In some instances, the predetermined temperature threshold value may fall within a range bounded by any minimum value and any maximum value as described above. In other instances, instead of using a single predetermined temperature threshold value, the central controller 150 may utilize a predetermined temperature threshold range that may be bounded by any minimum value and any maximum value as described above. If the pool water temperature value is below the temperature threshold value (i.e., "YES" at 5412), the central controller 150 can proceed to 5416. If the pool water temperature value is not below the temperature threshold value (i.e., "NO" at 5412), the central controller 150 can proceed to 5420.

At 5416, the central controller 150 can backwash the prefilter without backwashing the one or more membrane filters. In some instances, the central controller 150 can backwash the prefilter without a chemical soak stage. In some instances, the central controller 150 can backwash the prefilter by performing a chemical soak stage followed by a water-based backwash stage. By not backwashing the one or more membrane filters, the central controller 150 can potentially extend the life of the one or more membrane filters.

At 5420, method 5400 can backwash the prefilter and the one or more membrane filters. In some instances, the central controller 150 can backwash the one or more membrane filters without a chemical soak stage. In some instances, the central controller 150 can backwash the one or more membrane filters by performing a chemical soak stage followed by a water-based backwash stage.

It is to be understood that the above methods described with reference to FIGS. 42-54 can be implemented in any of the systems and hybrid filter assemblies described herein. Accordingly, the methods 4200-5400 can include more or fewer steps depending on the embodiment.

Further, as discussed above, the central controller 150 can be designed to perform the above methods. Referring back to FIG. 1, the central controller 150 can receive data from one or more of the components of the aquatic application 100, analyze the data as discussed herein, and execute one or more of the methods described above. Thus, the central controller 150 can create a communication link that operatively connects the plurality of system components. Accordingly, the central controller 150 can include one or more of a receiver, a memory, a processor, and a transmitter.

The receiver can be designed to receive transmitted data from the aquatic application 100. For example, as discussed above, the aquatic application 100 can include one or more of a flow meter, a pressure transducer, a temperature sensor, and the like to monitor various system operational parameters. Thus, the receiver can receive the transmitted data from the one or more sensors. In some instances, the receiver can receive data inputs from a user. For example, a user can input a preferred schedule for a cleaning operation.

The memory can be designed to store system information received from the one or more system components and/or user inputs. In some instances, the memory can be integrated with one or more of the system components discussed herein. In other instances, the memory can be implemented as a standalone memory unit.

The processor can be a programable processor communicatively coupled to the memory. In some embodiments, the programable processor can include program instructions that are stored on a cloud server non-transitory computer readable medium and that are executable by the programmable processor to perform one or more of the methods described herein.

The transmitter can be designed to send the instructions from the processor to the one or more system components. Thus, the above methods can be automated.

Further, in some instances, one or more of the above methods can use machine learning (ML), artificial intelligence (AI), or similar, to iteratively train the central controller and improve the performance of the system based on one or more feedback parameters, characteristics, or similar. For example, in some instances, ML/AI can be used to predict an optimal cleaning schedule based on system data such as filter loading data, bather load data, geographic location of the system, weather data, user preferences, and the like. In some instances, ML/AI can be used to provide accurate chemical dosing and/or predict chemical usage trends. Thus, the system can be optimized to reduce fluctuations in the chemical dosage. This can be beneficial because it can reduce the likelihood of high chemical concentrations in the pool water which can irritate bathers. Additionally, it can help a user determine an amount of chemicals that are needed for the system and/or when to reorder chemicals.

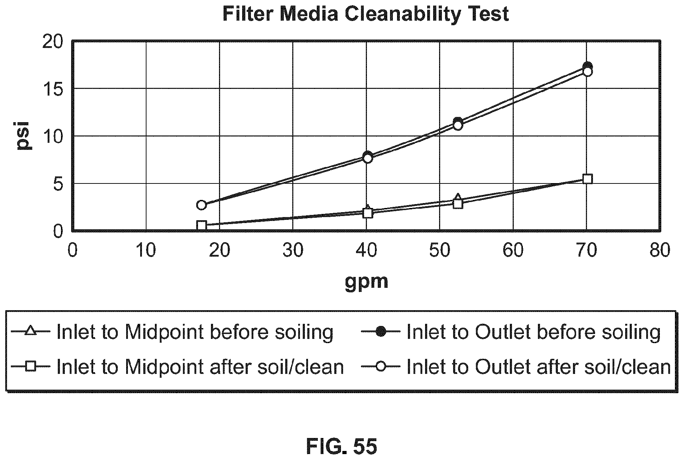

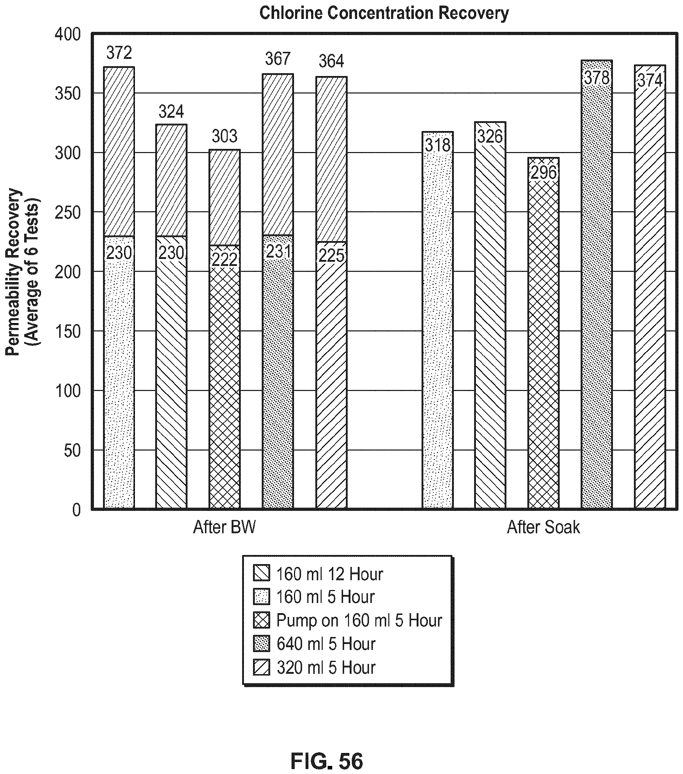

Now, turning to FIGS. 55 and 56, graphs illustrating the effectiveness of the backwashing and chemical cleaning procedures as described above are shown. Referring first to FIG. 55, a hybrid filter assembly was tested for head loss, turbidity reduction, and cleanability at two locations in its filtration pathway. The hybrid filter assembly tested included a first filtration stage filled with 125 lbs. of Activated Filter Media (AFM) Grade 2 (0.7-2.0 mm). The second filtration stage was comprised of four integrated ultrafiltration (UF) filtration modules that were pressure-driven, hollow fiber PES/PVP filters. The first testing location in the hybrid filter assembly was the inlet to the midpoint portion of the flow path, located after the granular media portion of the filter (i.e., the first filtration stage 310) and before the UF portion of the filter (i.e., the second filtration stage 320). The second testing location was the inlet to the outlet port (i.e., the outlet port 280b).

The tests were conducted and evaluated according to the standards outlined in NSF/ANSI/CAN 50-2021, Sections 6.1.4, 6.1.8, and 6.1.9. The hybrid filter assembly was operated at a flow rate of approximately 40 gallons per minute (gpm). However, the headloss and cleanability portions of the testing were tested up to 70 gpm.

Tables 2 and 3 illustrate the hybrid filter assembly's headloss at the first and second test locations at various flow rates, respectively. The first test location (i.e., Inlet to Midpoint Headloss) was measured after the first filtration stage. The second test location (i.e., Inlet to Outlet Headloss) was measured at the outlet of the second filtration stage (e.g., the outlet of the hybrid filter assembly).

Table 2: Inlet to Midpoint Headloss

| % Flow Filtration Rate (gpm/ft2) | 25% 0.0 | 57% 0.1 | 75% 0.1 | 100% 0.2 |
|---|---|---|---|---|
| Flow Rate (gpm) | 17.6 | 40.1 | 52.4 | 70.1 |
| Total Head Loss (psi) | 0.59 | 2.04 | 3.25 | 5.46 |

Table 3: Inlet to Outlet Headloss

| %Flow Filtration Rate (gpm/ft2) | 25% 0.0 | 57% 0.1 | 75% 0.1 | 100% 0.2 |
|---|---|---|---|---|
| Flow Rate (gpm) | 17.6 | 40.1 | 52.4 | 70.1 |
| Total Head Loss (psi) | 2.82 | 7.90 | 11.50 | 17.35 |

As shown, as the flow rate increases, both the first filtration stage and the second filtration stage experienced higher pressure drops.

Table 4 illustrates the hybrid filter assembly's ability to remove turbidity from the fluid being filtered. The initial turbidity of the fluid being filtered was 0.34 NTU (Nephelometric Turbidity unit). The challenge turbidity was 44.3 NTU. The industry target (e.g., the NSF standards) for filter systems is a 70% reduction in turbidity within 5 turns/cycles of the system.

Table 4:

| Turn Over | Midpoint Turbidity | Turbidity Remaining Ratio | Effluent Turbidity | Turbidity Remaining Ratio |
|---|---|---|---|---|
| 1 | 15 | 0.33 | 1.6 | 0.03 |
| 2 | 6.31 | 0.14 | 0.76 | 0.01 |
| 3 | 3.06 | 0.06 | 0.41 | 0.00 |
| 4 | 1.82 | 0.03 | 0.32 | 0.00 |
| 5 | 1.1 | 0.017 | 0.3 | -0.001 |

As can be seen, the hybrid filter assembly was able to reduce the turbidity levels in the filtered fluid to less than about 0.03 for all test cases. Further, it can be seen that for the present test case the hybrid filter assembly was able to reduce the challenge turbidity of 44.3 NTU's to about 1.6 NTU's. Thus, the hybrid filter assembly achieved about a 96% reduction in turbidity in a single pass or turnover of the system. However, some traditional single stage filter systems such as sand and cartridge filters can struggle to achieve the target 70% turbidity reduction with at least 5 turnovers. Thus, the hybrid filter assembly can out-perform multiple turnovers of a traditional single stage filter in just a single pass.

Further, Tables 5 and 6, and FIG. 55 illustrate the hybrid filter assembly's headloss after a cleaning procedure. After cleaning, the hybrid filter assembly's headloss was compared to the initial headloss measured before the hybrid filter assembly was soiled (see Tables 2 and 3 above). Thus, similar to the initial headloss test, the hybrid filter assembly's headloss after cleaning was measured at the first and second test locations. Accordingly, Table 5 shows the data from the first test location, and FIG. 6 shows the data from the second test location.

Table 5:

| Flow Rate (gpm) | 17.4 | 40.1 | 52.5 | 70.2 |
|---|---|---|---|---|
| Total Head Loss (psi) | 0.52 | 1.92 | 2.89 | 5.44 |

Table 6:

| Flow Rate (gpm) | 17.4 | 40.1 | 52.5 | 70.2 |
|---|---|---|---|---|
| Total Head Loss (psi) | 2.67 | 7.69 | 11.13 | 16.84 |

FIG. 55 shows a comparison of the initial headloss data (i.e., Tables 2 and 3) versus the headloss data after a backwash procedure (i.e., Tables 5 and 6). As can be seen, the hybrid filter assembly's headloss was approximately the same before and after being fouled and backwashed. Thus, it can be shown that the backwash was effective in removing the contaminants from the hybrid filter assembly and restoring the filter's performance to nearly the same as its initial performance.

Now turning to FIG. 56, a chart illustrating the effectiveness of a cleaning procedure including only a backwash procedure as compared to a cleaning procedure including a chemical cleaning procedure is shown. The values of the grey columns represent the initial permeability of the hybrid filter assembly prior to the hybrid filter assembly being fouled. As can be seen, the cleaning procedure including a chemical cleaning procedure was more effective than the cleaning procedure only including the backwash procedure. Further, in general, the higher the dosage of the chemical cleaning agent used during the chemical cleaning procedure, the higher the permeability recovery. Additionally, longer soak times during the chemical cleaning procedure appeared to also improve the permeability recovery.

Further aspects of the disclosure will be described by way of Example:

In Example 1, a hybrid filter system for an aquatic application, comprising: a pump; a filtration system; a container in fluid communication with the filtration system, the container retaining a chemical cleaning agent; a valve in fluid communication with the container and the filtration system; and a controller in communication with the valve, wherein the controller determines a first permeability value associated with the filtration system at a first time period and initiates a cleaning mode by providing the chemical cleaning agent to the filtration system when the first permeability value is below a permeability threshold value.

In Example 2, the hybrid filter system of Example 1, wherein the filtration system is provided in the form of: a first filtration stage designed to capture particles of a first size; and a second filtration stage comprising a first filtration module, the second filtration stage designed to capture particles of a second size, wherein the first size is larger than the second size, wherein the first filtration stage prefilters a fluid before the fluid is provided to the second filtration stage when the controller directs the filtration system to operate in a filtration mode.

In Example 3, the hybrid filter system of Example 2, wherein: the second filtration stage further includes a second filtration module arranged in parallel with the first filtration module, the first filtration module is provided in the form of a hollow fiber membrane, and the chemical cleaning agent is provided from the container to the first filtration module when the controller initiates the cleaning mode.

In Example 4, the hybrid filter system of any one of Examples 1 to 3, wherein: the cleaning mode includes at least a backwash mode and a chemical cleaning mode, whereby the controller directs fluid to flow through the filtration system in a first direction when a filtration mode of the filtration system is initiated, whereby the controller directs a fluid to flow in a second direction when the backwash mode is initiated, and whereby the controller directs actuation of the valve to provide the chemical cleaning agent to the filtration system when the chemical cleaning mode is initiated.

In Example 5, the hybrid filter system of any one of Examples 1 to 4, wherein the chemical cleaning agent is provided from the container to the filtration system when the controller initiates the cleaning mode.

In Example 6, the hybrid filter system of any one of Examples 1 to 5, further including: an inlet conduit in fluid communication with a source of a fluid from the aquatic application; and a first control valve in fluid communication with the source of the fluid and the filtration system, wherein the first control valve is in electronic communication with the controller and the controller actuates the first control valve to initiate the cleaning mode when the first permeability value is below the permeability threshold value.

In Example 7, the hybrid filter system of any one of Examples 1 to 6, wherein the filtration system processes water from a pool or a spa.

In Example 8, the hybrid filter system of any one of Examples 1 to 7, wherein the controller is designed to receive a pool temperature value and determine whether to decrease the permeability threshold value based on the received pool temperature value.

In Example 9, the hybrid filter system of any one of Examples 1 to 8, wherein the permeability threshold value is at least about 150 and no more than about 350.

In Example 10, a hybrid filter system for a pool or spa, comprising: a hybrid filter assembly including a first filtration module; a chemical cleaning system including a chemical tank, a feed line, and a valve associated with the feed line, the feed line designed to place the chemical cleaning system in fluid communication with the hybrid filter assembly; and a controller in communication with the hybrid filter assembly and the chemical cleaning system, wherein the controller is designed to determine whether to operate the hybrid filter assembly in a filtration mode or a chemical cleaning mode based on a determined operational efficiency of the hybrid filter assembly.

In Example 11, the hybrid filter system of Example 10, wherein the first filtration module is provided in the form of a cylindrical body, a top endcap, and a bottom endcap, and the feed line is in fluid communication with the top endcap.

In Example 12, the hybrid filter system of Example 10 or 11, wherein the first filtration module is provided in the form of a cylindrical body, a top endcap, and a bottom endcap, and the feed line is in fluid communication with the bottom endcap.

In Example 13, the hybrid filter system of any one of Examples 10 to 12, wherein the controller is further designed to: initiate a chemical cleaning procedure when the controller determines one or more parameters are below a predetermined threshold value associated with the one or more parameters, actuate the valve positioned on the feed line to provide a chemical agent to the first filtration module, and initiate a rinse of the first filtration module after a soak time value is exceeded.

In Example 14, the hybrid filter system of Example 13, wherein the soak time value is at least 30 minutes.

In Example 15, the hybrid filter system of any one of Examples 10 to 14, wherein the chemical tank is designed to retain a chemical agent, and the chemical agent is selected from the group consisting of a chlorine-containing compound, a chlorine-containing solution, a bromine-containing compound, a bromine-containing solution, a bleaching agent, an acidic solution, and combinations thereof.

In Example 16, a hybrid filter assembly for a pool or spa, comprising: an inlet conduit in fluid communication with a source of a fluid; a pump in fluid communication with the inlet conduit; a filtration stage having a filtration module in fluid communication with the inlet conduit; a chemical cleaning system in fluid communication with the filtration stage, the chemical cleaning system including a valve designed to selectively provide a cleaning agent to the filtration stage; and a controller in communication with the valve, the controller designed to: initiate a cleaning procedure in which the chemical cleaning system provides the cleaning agent to the filtration stage; and determine when the filtration module is fouled.

In Example 17, the hybrid filter assembly of Example 16, wherein the cleaning agent comprises a chlorine-containing solution.

In Example 18, the hybrid filter assembly of Example 16 or 17, wherein the controller initiates the cleaning procedure when the filtration module is fouled as determined when a permeability of the filtration module is below a permeability threshold value.

In Example 19, the hybrid filter assembly of Example 18, wherein the filtration module further includes a port designed to receive the cleaning agent from the chemical cleaning system.

In Example 20, the hybrid filter assembly of any one of Examples 16 to 19, wherein the filtration module further includes a cylindrical housing, a first endcap provided on an end of the cylindrical housing, and a second endcap provided on an opposite end of the cylindrical housing, and the first endcap is coupled to a feed line from the chemical cleaning system.

It will be appreciated by those skilled in the art that while the above disclosure has been described above in connection with particular embodiments and examples, the above disclosure is not necessarily so limited, and that numerous other embodiments, examples, uses, modifications, and departures from the embodiments, examples, and uses are intended to be encompassed by the claims attached hereto. The entire disclosure of each patent and publication cited herein is incorporated by reference, as if each such patent or publication were individually incorporated by reference herein. Various features and advantages of the above disclosure are set forth in the following claims.

## Claims

1. A hybrid filter system for an aquatic application, comprising:

   a pump;
   a filtration system;
   a container in fluid communication with the filtration system, the container retaining a chemical cleaning agent;
   a valve in fluid communication with the container and the filtration system; and
   a controller in communication with the valve, wherein the controller determines a first permeability value associated with the filtration system at a first time period and initiates a cleaning mode by providing the chemical cleaning agent to the filtration system when the first permeability value is below a permeability threshold value.

2. The hybrid filter system of claim 1, wherein the filtration system is provided in the form of:

a first filtration stage designed to capture particles of a first size; and
a second filtration stage comprising a first filtration module, the second filtration stage designed to capture particles of a second size, wherein the first size is larger than the second size,
wherein the first filtration stage prefilters a fluid before the fluid is provided to the second filtration stage when the controller directs the filtration system to operate in a filtration mode.

3. The hybrid filter system of claim 2, wherein:

the second filtration stage further includes a second filtration module arranged in parallel with the first filtration module,
the first filtration module is provided in the form of a hollow fiber membrane, and
the chemical cleaning agent is provided from the container to the first filtration module when the controller initiates the cleaning mode.

4. The hybrid filter system of any one of claims 1 to 3, wherein:

the cleaning mode includes at least a backwash mode and a chemical cleaning mode,
whereby the controller directs fluid to flow through the filtration system in a first direction when a filtration mode of the filtration system is initiated,
whereby the controller directs a fluid to flow in a second direction when the backwash mode is initiated, and
whereby the controller directs actuation of the valve to provide the chemical cleaning agent to the filtration system when the chemical cleaning mode is initiated.

5. The hybrid filter system of any one of claims 1 to 4, wherein the chemical cleaning agent is provided from the container to the filtration system when the controller initiates the cleaning mode.

6. The hybrid filter system of any one of claims 1 to 5, further including:

an inlet conduit in fluid communication with a source of a fluid from the aquatic application; and
a first control valve in fluid communication with the source of the fluid and the filtration system,
wherein the first control valve is in electronic communication with the controller and the controller actuates the first control valve to initiate the cleaning mode when the first permeability value is below the permeability threshold value.

7. The hybrid filter system of any one of claims 1 to 6, wherein the filtration system processes water from a pool or a spa.

8. The hybrid filter system of any one of claims 1 to 7, wherein the controller is designed to receive a pool temperature value and determine whether to decrease the permeability threshold value based on the received pool temperature value.

9. The hybrid filter system of any one of claims 1 to 8, wherein the permeability threshold value is at least about 150 and no more than about 350.

10. A hybrid filter assembly for a pool or spa, comprising:

an inlet conduit in fluid communication with a source of a fluid;
a pump in fluid communication with the inlet conduit;
a filtration stage having a filtration module in fluid communication with the inlet conduit;
a chemical cleaning system in fluid communication with the filtration stage, the chemical cleaning system including a valve designed to selectively provide a cleaning agent to the filtration stage; and
a controller in communication with the valve, the controller designed to:

initiate a cleaning procedure in which the chemical cleaning system provides the cleaning agent to the filtration stage; and
determine when the filtration module is fouled.

11. The hybrid filter assembly of claim 10, wherein the cleaning agent comprises a chlorine-containing solution.

12. The hybrid filter assembly of claim 10 or 11, wherein the controller initiates the cleaning procedure when the filtration module is fouled as determined when a permeability of the filtration module is below a permeability threshold value.

13. The hybrid filter assembly of claim 12, wherein the filtration module further includes a port designed to receive the cleaning agent from the chemical cleaning system.

14. The hybrid filter assembly of any one of claims 10 to 13, wherein the filtration module further includes a cylindrical housing, a first endcap provided on an end of the cylindrical housing, and a second endcap provided on an opposite end of the cylindrical housing, and the first endcap is coupled to a feed line from the chemical cleaning system.

**FIG. 1**

200

FIG. 2

FIG. 3A

FIG. 3B

FIG. 4A

FIG. 4B

FIG. 5A

FIG. 5B

600

625

650

670

660

670

680

**FIG. 6B**

6B

6B

640

640

620

610

630

640

600

**FIG. 6A**

FIG. 7B

FIG. 7A

FIG. 8A

FIG. 8B

EP 4 548 993 A1

FIG. 9A

FIG. 9B

**600**

660

650

670

1010

1010

680 1010

**FIG. 10**

FIG. 11

**1200**

1210

1212

1245

1240

P

250

200

1220

280a

1230

280b

280c

1250

1260

FIG. 12

**1300**

1310

1240

250

200

1210

1212

1220

280a

280b

280c

1230

1250

1260

**FIG. 13**

**1400**

**FIG. 14**

**FIG. 15**

EP 4 548 993 A1

**FIG. 16**

EP 4 548 993 A1

FIG. 17

**FIG. 18**

EP 4 548 993 A1

**FIG. 19**

**FIG. 20A**

EP 4 548 993 A1

**FIG. 20B**

**FIG. 20C**

FIG. 21

FIG. 22

**FIG. 23**

EP 4 548 993 A1

FIG. 24

EP 4 548 993 A1

FIG. 25

FIG. 26A

**FIG. 26B**

**FIG. 26C**

EP 4 548 993 A1

2180,2182

2212,2242

2220,2250

2210,2240

2216,2246

2700

2216,2246

2222,2252      2702      2216,2246

**FIG. 27**

**FIG. 28**

2180,2182

2210,2240

2220,
2250

2700

2218,2248

2222,2252

2216,2246

2216,2246

2702

**FIG. 29**

FIG. 30

FIG. 31

2180,2182

2220,2250　　2222,2252

2210,2240

2214,
2244

2216,2246

2214,
2244

2216,2246

2702

2218,2248　　2700

2702

**FIG. 32**

FIG. 33A

**FIG. 33B**

**FIG. 33C**

EP 4 548 993 A1

**FIG. 33D**

EP 4 548 993 A1

FIG. 33E

3400

3430

3430a

3454b

3420

3454a

3454

3431

3482

3412

3410

3415

3430b

3415

3470

FIG. 34

**FIG. 35**

FIG. 36

**FIG. 37**

FIG. 38

**FIG. 39**

FIG. 40

3880,3882

4100

3838

3915,3945

3915,3945

3915, 3945

4102

4104

4104

FIG. 41

4200

4210 — Maintain hybrid filter assembly in a filtration mode.

4220 — Is a first permeability value below a first threshold value?

**No**

**Yes**

4230 — Was a backwash procedure recently performed?

**Yes**

**No**

4240 — Initiate a backwash procedure.

4250 — Is a second permeability value below a second threshold value?

**No**

**Yes**

4260 — Initiate a chemical cleaning procedure.

FIG. 42

4300

4310 — Collect system information.

4320 — Is the media differential pressure greater than a threshold value?

Yes

No

4330 — Determine the permeability of the hybrid filter assembly.

4340 — Is the permeability value below a threshold value?

No

Yes

4350 — Determine if a backwash procedure should be performed.

FIG. 43

4400

4410

Stop the one or more system pumps and adjust the position of one or more valves to a backwash configuration.

— Failure —

4420

Turn the one or more pumps on and ramp up the flow rate through the system for a period of time.

— Failure —

4430

Stop pump, turn valve to filtration, wait for a period of time.

— Failure —

4440

Adjust the position of the one or more valves to a backwash configuration and turn the one or more pumps on and ramp up the flow rate through the system for a period of time.

— Failure —

4450

Stop pump, turn valve to filtration, return pump to scheduled filtration flow.

— Failure —

4460

End backwash.

FIG. 44

4500

4510
Stop the one or more pumps and adjust the one or more valves to a filtration configuration.

4520
Dose the hybrid filter assembly with the chemical cleaning agent.

4530
Soak the hybrid filter with the chemical cleaning agent for a period of time.

4540
Initiate a backwash procedure.

4550
Return system to filtration mode.

FIG. 45

4600

4610 — Collect system information.

4620 — Is the media differential pressure greater than a threshold value? — **Yes** → 4625 — Initiate a backwash procedure.

**No**

4630 — Perform a first permeability check.

4640 — Is the permeability value below a minimum threshold value? — **Yes** → 4645 — Initiate a chemical cleaning procedure.

**No**

4650 — Is the permeability value below a second threshold value? — **No**

**Yes**

4660 — Initiate a backwash procedure.

4670 — Perform a second permeability check.

4680 — Is the permeability value below the third threshold value? — **No** ... **Yes** → 4685 — Initiate a chemical cleaning procedure.

**FIG. 46**

4700

**4710** Maintain hybrid filter assembly in a filtration mode.

**4720** Collect system information.

**4730** Transmit collected data to memory device.

**4740** Perform a system analysis based on the transmitted data.

**4750** Schedule a cleaning operation.

**4760** Has a backwash operation timer been set, and if so, has the timer has elapsed?

Yes → **4770** Initiate a backwash procedure.

No

**4780** Has a chemical cleaning operation timer been set, and if so, has the timer has elapsed?

Yes → **4790** Initiate a chemical cleaning procedure.

No

FIG. 47

4800

4810 — Has a scheduled chemical cleaning operation been requested? → **No** → 4820 — Operate system in a filtration mode.

**Yes**

4830 — Determine the amount of time between the current time and the time for when the chemical cleaning operation is scheduled for.

4840 — Set a timer equal to the time difference.

4850 — Is the timer set for more than a threshold period of time? → **No**

**Yes**

4860 — Set a backwash operational timer for a fraction of the set timer for the chemical cleaning operation.

**FIG. 48**

4900

4904 — Receive Predetermined Backwash Parameter Values

4908 — Receive Pool Temperature Value

4912 — Is Pool Temperature Value Below First Temperature Threshold Value?

No → (to 4920)

Yes → 4916 — Decrease Permeability Threshold Value Included in Backwash Parameter Values

4920 — Is Pool Temperature Value Below Second Temperature Threshold Value?

No

Yes → 4924 — Increase Dose Value Included in Backwash Parameter Values

**FIG. 49**

**5000** ⟍

5004 ⟍
Receive Predetermined Backwash Parameter Values

5008 ⟍
Receive Pool Operational Parameter Values

5012 ⟍
Determine Adjustment to One or More Backwash Parameter Values Based on Pool Operational Parameter Values

5016 ⟍ Should Any Backwash Parameter Value Be Adjusted?   **No**

**Yes**

5020 ⟍
Modify one or more Backwash Parameter Values

**FIG. 50**

**FIG. 51**

Flowchart 5100:

- 5104: Perform Backwash Cycle
- 5108: Determine Permeability Value After Backwash Cycle
- 5112: Have Sufficient Backwash Cycles Been Performed?
  - No → back to 5104
  - Yes ↓
- 5116: Determine Permeability Increase Metric Based on Permeability Values
- 5120: Does Permeability Increase Metric Meet First Permeability Increase Threshold?
  - Yes → 5124: Increase Permeability Threshold Value
  - No ↓
- 5128: Does Permeability Increase Metric Meet Second Permeability Increase Threshold?
  - Yes → (loop back)
  - No ↓
- 5132: Modify One or More Backwash Performance Parameter Values

EP 4 548 993 A1

5200

5204 — Receive Pump Flow Rate Value

5208 — Is Pump Flow Rate Value Greater Than Pump Threshold Value?

No

Yes

5212 — Determine Permeability Value

5216 — Generate Effective Pressure Value Based on Permeability Value

5220 — Cause Effective Pressure Value to be Displayed

**FIG. 52**

**5300 —**

**5304** — Receive First Permeability Value

**5308** — Is First Permeability Value Below Permeability Threshold Value?

**No**

**Yes**

**5312** — Actuate Deaeration Valve

**5316** — Receive Second Permeability Value

**5320** — Is Second Permeability Value Below Permeability Threshold Value?

**No**

**Yes**

**5324** — Perform Backwash

**FIG. 53**

EP 4 548 993 A1

**5400**

5404 — Receive Request to Backwash Pool Filter System

5408 — Receive Pool Temperature Value

5412 — Is Pool Temperature Value Below Temperature Threshold Value?

**No** →

5420 — Backwash Prefilter and Membrane Filter

**Yes**

5416 — Backwash Prefilter

FIG. 54

EP 4 548 993 A1

**Filter Media Cleanability Test**

FIG. 55

**FIG. 56**

Europäisches
Patentamt

European
Patent Office

Office européen
des brevets

## EUROPEAN SEARCH REPORT

**Application Number**

EP 24 21 0586

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/250952 A1 (SAFON THOMAS JOHNSON RAY [US] ET AL) 11 August 2022 (2022-08-11) * figures 1-18 * * paragraphs [0034] - [0069] * | 1,6,7, 10,13,14 | INV. B01D24/10 B01D24/40 B01D36/02 B01D63/02 C02F1/00 |
| Y | US 2023/087869 A1 (DZINDO AZUR [US] ET AL) 23 March 2023 (2023-03-23) * figures 1-14 * * paragraphs [0049] - [0075] * | 1-12 | C02F1/44 ADD. C02F103/42 |
| Y | WO 2019/183221 A1 (EVOQUA WATER TECH LLC [US]) 26 September 2019 (2019-09-26) * figures 1-8B * * page 28, line 29 - page 32, line 21 * * claims 1-31 * | 1-12 | |
| Y | DE 103 18 708 B4 (AWG INNOVATIVE WASSER UND ABWA [DE]) 15 September 2005 (2005-09-15) * figures 1-7 * * paragraphs [0029] - [0046] * * claims 1-22 * | 1-12 | |

**TECHNICAL FIELDS SEARCHED (IPC)**

B01D
C02F

The present search report has been drawn up for all claims

| Place of search | Date of completion of the search | Examiner |
|---|---|---|
| Munich | 10 February 2025 | Galiana López, Paula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 0586

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2025

| Patent document cited in search report | | Publication date | Patent family member(s) | | Publication date |
|---|---|---|---|---|---|
| US 2022250952 | A1 | 11-08-2022 | AU 2022200886 A1<br>CA 3148313 A1<br>EP 4043406 A1<br>US 2022250952 A1 | | 25-08-2022<br>10-08-2022<br>17-08-2022<br>11-08-2022 |
| US 2023087869 | A1 | 23-03-2023 | AU 2022235612 A1<br>EP 4154960 A1<br>US 2023087869 A1 | | 06-04-2023<br>29-03-2023<br>23-03-2023 |
| WO 2019183221 | A1 | 26-09-2019 | NONE | | |
| DE 10318708 | B4 | 15-09-2005 | NONE | | |

EPO FORM P0459

For more details about this annex : see Official Journal of the European Patent Office, No. 12/82

## REFERENCES CITED IN THE DESCRIPTION

**Patent documents cited in the description**

- US 63595700